(19) **Europäisches Patentamt / European Patent Office / Office européen des brevets**

(11) **EP 4 525 533 A1**

(12) **EUROPEAN PATENT APPLICATION**
published in accordance with Art. 153(4) EPC

(43) Date of publication:
**19.03.2025 Bulletin 2025/12**

(21) Application number: **23819059.9**

(22) Date of filing: **05.06.2023**

(51) International Patent Classification (IPC):
**H04W 64/00** (2009.01)

(52) Cooperative Patent Classification (CPC):
**H04W 4/02; H04W 64/00**

(86) International application number:
**PCT/CN2023/098263**

(87) International publication number:
**WO 2023/236894 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.06.2022 CN 202210631363**

(71) Applicant: **Huawei Technologies Co., Ltd.**
**Shenzhen, Guangdong 518129 (CN)**

(72) Inventors:
• **LI, Cheng**
**Shenzhen, Guangdong 518129 (CN)**
• **WANG, Han**
**Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **COMMUNICATION METHOD AND COMMUNICATION APPARATUS**

(57)    This application discloses a communication method and a communication apparatus, to improve positioning accuracy. A first communication apparatus measures at least one first positioning reference signal from at least one second communication apparatus, to obtain at least one first phase. The first communication apparatus sends first phase information to a third communication apparatus, where the first phase information includes the at least one first phase, or the first phase information is determined based on the at least one first phase. The first communication apparatus measures at least one second positioning reference signal from the at least one second communication apparatus, to obtain at least one second phase. The first communication apparatus sends second phase information to the third communication apparatus, where the second phase information includes the at least one second phase, or the second phase information is determined based on the at least one second phase. The first communication apparatus sends first information to the third communication apparatus, where the first information is information about phase correlation between the first phase information and the second phase information.

FIG. 6

## Description

This application claims priority to Chinese Patent Application 202210631363.X, filed with the China National Intellectual Property Administration on June 6, 2022 and entitled "COMMUNICATION METHOD AND COMMUNICATION APPARATUS", which is incorporated herein by reference in its entirety.

## TECHNICAL FIELD

This application relates to the field of communication technologies, and in particular, to a communication method and a communication apparatus.

## BACKGROUND

Currently, a phase-based positioning technology has been widely applied to various satellite systems (for example, BeiDou and a global positioning system (global positioning system, GPS)), and positioning accuracy of the phase-based positioning technology can reach a centimeter level. The phase-based positioning technology may also be applied to another communication system. For example, the phase-based positioning technology is introduced into a wireless cellular communication system, to help the wireless cellular communication system to implement centimeter-level positioning and build positioning competitiveness of the wireless cellular communication system.

A basic principle of the phase-based positioning technology is as follows: A transmit end device sends a carrier signal. The carrier signal arrives at a receive end device after a specific propagation delay. A phase difference between a phase of the carrier signal received by the receive end device and that of a local oscillator signal of the receive end device is referred to as a phase that is of the carrier signal of the transmit end device and that is measured by the receive end device. The phase includes information about the propagation delay between the transmit end and the receive end. Therefore, the receive end device or a third-party device can obtain information about a distance between the transmit end and the receive end through calculation according to a phase resolving algorithm, and further perform positioning resolving to obtain a location of the transmit end device. In the phase-based positioning technology, a phase usually needs to be continuously tracked, to improve positioning accuracy.

In a solution in which the phase-based positioning technology is used for positioning, how to improve positioning accuracy is a problem worth considering.

## SUMMARY

This application provides a communication method and a communication apparatus, to improve positioning accuracy.

A first aspect of this application provides a communication method, including:

A first communication apparatus measures at least one first positioning reference signal from at least one second communication apparatus, to obtain at least one first phase. The first communication apparatus sends first phase information to a third communication apparatus, where the first phase information includes the at least one first phase, or the first phase information is determined based on the at least one first phase. The first communication apparatus measures at least one second positioning reference signal from the at least one second communication apparatus, to obtain at least one second phase. The first communication apparatus sends second phase information to the third communication apparatus, where the second phase information includes the at least one second phase, or the second phase information is determined based on the at least one second phase. The first communication apparatus sends first information to the third communication apparatus, where the first information is information about phase correlation between the first phase information and the second phase information.

In the foregoing technical solution, the first communication apparatus may feed back the first information to the third communication apparatus, so that the third communication apparatus determines correlation between the first phase information and the second phase information, thereby helping improve positioning accuracy. This effectively avoids a problem that positioning accuracy is reduced because the first phase information and the second phase information are used for joint positioning in a scenario in which the first phase information and the second phase information are not correlated. For example, generally, in a phase-based positioning technical solution, a phase needs to be tracked, and the tracked phase needs to be continuous, that is, pieces of phase information are correlated. For example, if the first phase information and the second phase information are correlated, the third communication apparatus may position the first communication apparatus or the at least one second communication apparatus based on both the first phase information and the second phase information. For example, if the first phase information and the second phase information are not correlated, the third communication apparatus may position the first communication apparatus or the at least one second communication apparatus based on the first phase information only or the second phase information only. Therefore, a problem that positioning accuracy for positioning, by the third communication apparatus, the first communication apparatus or the at least one second communication apparatus is limited because correlation between the first phase information and the second phase information is difficult to be ensured due to a phase jump or a phase loss in a process in which the first communication apparatus tracks the phase is avoided.

In a possible implementation, the first phase information is sent by the first communication apparatus to the third communication apparatus at a first moment, the second phase information is sent by the first communication apparatus to the third communication apparatus at a second moment, and the first moment is one or more moments before the second moment.

In another possible implementation, the first information is first indication information, and the first indication information indicates whether the first phase information and the second phase information are correlated.

In this implementation, a specific form of the first information is provided. In this implementation, whether the first phase information and the second phase information are correlated can be simply and quickly indicated, so that the third communication apparatus determines correlation between the first phase information and the second phase information.

In another possible implementation, the first information is information about a second label correlated with the second phase information; and

if the second label correlated with the second phase information is the same as a first label correlated with the first phase information, it indicates that the first phase information and the second phase information are correlated; or if the second label correlated with the second phase information is different from the first label correlated with the second phase information, it indicates that the first phase information and the second phase information are not correlated.

In this implementation, another form of the first information is provided. A label correlated with phase information indirectly indicates whether the first phase information and the second phase information are correlated. This implementation is simple and easy to implement, and helps improve practicability of the solution.

In another possible implementation, the first label is a first time label correlated with the first phase information, and the second label is a second time label correlated with the second phase information.

In this implementation, a specific form of the first label and a specific form of the second label are provided, and implementability of the solution is provided. Each piece of phase information is correlated with a corresponding time label, so that the third communication apparatus determines correlation between the first phase information and the second phase information, thereby improving positioning accuracy.

In another possible implementation, the first label is a first angle label correlated with the first phase information, the second label is a second angle label correlated with the second phase information, the first angle label identifies an angle of arrival at which the at least one first positioning reference signal arrives at the first communication apparatus, and the second angle label identifies an angle of arrival at which the at least one second positioning reference signal arrives at the first communication apparatus; or the first label is a first beam label correlated with the first phase information, the second label is a second beam label correlated with the second phase information, the first beam label identifies a receive beam used by the first communication apparatus to receive the at least one first positioning reference signal, and the second beam label identifies a receive beam used by the first communication apparatus to receive the at least one second positioning reference signal.

In this implementation, another form of the first label and another form of the second label are provided, and the solution is enriched. Each piece of phase information is correlated with a corresponding angle label or beam label. The angle label may indicate an angle of arrival at which a corresponding positioning reference signal arrives at the first communication apparatus, and the beam label may indicate a direction of a receive beam used by the first communication apparatus to receive a corresponding positioning reference signal, so that the third communication apparatus determines, by using the angle label or the beam label, whether the first phase information and the second phase information are correlated, thereby improving positioning accuracy.

In another possible implementation, the first information includes consistency assistance information, and the consistency assistance information assists the third communication apparatus in determining correlation between the first phase information and the second phase information.

In this implementation, the first information may further provide the consistency assistance information, so that the third communication apparatus determines whether the first phase information and the second phase information are correlated, thereby improving positioning accuracy.

In another possible implementation, the consistency assistance information includes information about an angle of arrival at which the at least one second positioning reference signal arrives at the first communication apparatus, or beam information of a receive beam used by the first communication apparatus to receive the at least one second positioning reference signal.

In another possible implementation, the first information includes information about an angle of arrival at which the at least one second positioning reference signal arrives at the first communication apparatus, or beam information of a receive beam used by the first communication apparatus to receive the at least one second positioning reference signal.

In this implementation, the first information may include the information about the angle of arrival or the beam information of the receive beam, so that the third communication apparatus determines whether the first phase information and the second phase information are correlated, thereby improving positioning accuracy.

In another possible implementation, the beam information includes at least one of the following: a direction and an index of the receive beam used by the first communication apparatus to receive the at least one second positioning reference signal.

In another possible implementation, the method further includes: The first communication apparatus sends first cause information to the third communication apparatus, where the first cause information indicates a cause why the first phase information and the second phase information are not correlated.

In this implementation, the first communication apparatus may further feed back the first cause information to the third communication apparatus, so that the third communication apparatus determines the cause why the first phase information and the second phase information are not correlated. This helps the third communication apparatus compensate for the first phase information or the second phase information based on the cause, and then perform positioning based on compensated phase information, thereby improving positioning accuracy.

In another possible implementation, the first cause information includes at least one of the following: first radio frequency link information, first antenna switching information, first beam switching information, or measurement failure information, where

the first radio frequency link information includes information indicating that a radio frequency initial phase of a radio frequency link used by the first communication apparatus to receive the at least one first positioning reference signal is inconsistent with a radio frequency initial phase of a radio frequency link used by the first communication apparatus to receive the at least one second positioning reference signal; or

the first antenna switching information includes information indicating that a receive antenna used by the first communication apparatus to receive the at least one first positioning reference signal is inconsistent with a receive antenna used by the first communication apparatus to receive the at least one second positioning reference signal; or

the first beam switching information includes information indicating that the receive beam used by the first communication apparatus to receive the at least one first positioning reference signal is inconsistent with the receive beam used by the first communication apparatus to receive the at least one second positioning reference signal; or

the measurement failure information includes information about a phase measurement failure that occurs in a process in which the first communication apparatus measures the at least one second positioning reference signal.

In this implementation, some possible causes included in the first cause information are provided, so that the cause why the first phase information and the second phase information are not correlated is shown. Specifically, the cause may be antenna switching, beam switching, radio frequency link switching, a measurement failure, or the like. This helps the third communication apparatus determine a cause of a phase jump or a phase loss on the second communication apparatus side. The third communication apparatus may be assisted to compensate for phase information to some extent, thereby helping improve positioning accuracy.

A second aspect of this application provides a communication method, including:

A second communication apparatus sends at least one first positioning reference signal to a first communication apparatus. The second communication apparatus sends at least one second positioning reference signal to the first communication apparatus. The second communication apparatus sends second information to a third communication apparatus, where the second information indicates information about correlation between a transmit phase of the at least one first positioning reference signal and a transmit phase of the at least one second positioning reference signal.

In the foregoing technical solution, the at least one second communication apparatus may send the second information to the third communication apparatus, so that the third communication apparatus determines correlation between the first phase information and the second phase information, thereby helping improve positioning accuracy. This effectively avoids a problem that positioning accuracy is reduced because the first phase information and the second phase information are used for joint positioning in a scenario in which the first phase information and the second phase information are not correlated. For example, generally, in a phase-based positioning technical solution, a phase needs to be tracked, and the tracked phase needs to be continuous, that is, pieces of phase information are correlated. For example, if the first phase information and the second phase information are correlated, the third communication apparatus may position the first communication apparatus or the at least one second communication apparatus based on both the first phase information and the second phase information. For example, if the first phase information and the second phase information are not correlated, the third communication apparatus may position the first communication apparatus or the at least one second communication apparatus based on the first phase information only or the second phase information only. Therefore, a problem that positioning accuracy for positioning, by the third communication apparatus, the first communication apparatus or the at least one second communication apparatus is limited because correlation between the first phase information and the second phase information is difficult to be ensured due to a phase jump or a phase loss in a process in which the at least one second communication apparatus sends a positioning reference signal is avoided.

In a possible implementation, the second information is second indication information, and the second indication information indicates whether the transmit phase of the at least one first positioning reference signal and the transmit phase of the at least one second positioning reference signal are correlated.

In this implementation, a specific form of the second information is provided. In this implementation, whether the transmit phase of the at least one first positioning reference signal and the transmit phase of the at least one second positioning reference signal are correlated can be simply and quickly indicated, so that the third communication apparatus determines correlation between the first phase information and the second phase information, thereby improving positioning accuracy.

In another possible implementation, the method further includes: The second communication apparatus sends second cause information to the third communication apparatus, where the second cause information indicates a cause why the transmit phase of the at least one first positioning reference signal and the transmit phase of the at least one second positioning reference signal are not correlated.

In this implementation, the second communication apparatus sends the second cause information to the third communication apparatus, so that the third communication apparatus determines the cause why the first phase information and the second phase information are not correlated. This helps the third communication apparatus compensate for the first phase information or the second phase information based on the cause, and then perform positioning based on compensated phase information, thereby improving positioning accuracy.

In another possible implementation, the second cause information includes at least one of the following: second antenna switching information, second radio frequency link information, or sending failure information, where

the second antenna switching information includes information indicating that a transmit antenna used by the second communication apparatus to send the at least one first positioning reference signal is inconsistent with a transmit antenna used by the second communication apparatus to send the at least one second positioning reference signal; or
the second radio frequency link information includes information indicating that a radio frequency initial phase of a radio frequency link used by the second communication apparatus to send the at least one first positioning reference signal is inconsistent with a radio frequency initial phase of a radio frequency link used by the second communication apparatus to send the at least one second positioning reference signal; or
the sending failure information includes information indicating that the second communication apparatus fails to send the at least one second positioning reference signal.

In this implementation, some possible causes included in the second cause information are provided, so that, the cause why the transmit phase of the at least one first positioning reference signal and the transmit phase of the at least one second positioning reference signal are not correlated is shown. Specifically, the cause may be antenna switching, beam switching, radio frequency link switching, a failure in sending the positioning reference signal, or the like. This helps the third communication apparatus determine a cause of a phase jump or a phase loss on the second communication apparatus side. The third communication apparatus may be assisted to compensate for phase information to some extent, thereby helping improve positioning accuracy.

A third aspect of this application provides a communication method, including:
A third communication apparatus receives first phase information from a first communication apparatus, where the first phase information includes at least one first phase, or the first phase information is determined based on the at least one first phase, and the at least one first phase is obtained by the first communication apparatus by measuring at least one first positioning reference signal sent by at least one second communication apparatus. The third communication apparatus receives second phase information from the first communication apparatus, where the second phase information includes at least one second phase, or the second phase information is determined based on the at least one second phase, and the at least one second phase is obtained by the first communication apparatus by measuring at least one second positioning reference signal sent by the at least one second communication apparatus. The third communication apparatus receives first information from the first communication apparatus, where the first information is information about phase correlation between the first phase information and the second phase information.

The third communication apparatus positions the first communication apparatus or the at least one second communication apparatus based on the first phase information, the second phase information, and the first information.

In the foregoing technical solution, the third communication apparatus may obtain the first phase information and the second phase information. The third communication apparatus may receive the first information from the first communication apparatus, so that the third communication apparatus determines correlation between the first phase information and the second phase information, thereby improving positioning accuracy. This effectively avoids a problem that positioning accuracy is reduced because the first phase information and the second phase information are used for joint positioning in a scenario in which the first phase information and the second phase information are not correlated. For example, generally, in a phase-based positioning technical solution, a phase needs to be tracked, and the tracked phase needs to be continuous, that is, pieces of phase information are correlated. For example, if the first phase information and the second phase information are correlated, the third communication apparatus may position the first communication apparatus or the at least one second communication apparatus based on both the first phase information and the second phase information. For example, if the first phase information and the second phase information are not correlated, the third communication apparatus may position the first communication apparatus or the at least one second communication apparatus based on the first phase information only or the second phase information only. Therefore, a problem that positioning accuracy for positioning, by the third communication apparatus, the first communication apparatus or the at least one second communication apparatus is limited because correlation between the first phase information and the second phase information is difficult to be ensured due to a phase jump or a phase loss in a process in which the first communication apparatus tracks the phase is avoided.

In a possible implementation, the first phase information is sent by the first communication apparatus to the third communication apparatus at a first moment, the second phase information is sent by the first communication apparatus to the third communication apparatus at a second moment, and the first moment is one or more moments before the second moment.

In another possible implementation, the first information is first indication information, and the first indication information indicates whether the first phase information and the second phase information are correlated.

In this implementation, a specific form of the first information is provided. In this implementation, whether the first phase information and the second phase information are correlated can be simply and quickly indicated, so that the third communication apparatus determines correlation between the first phase information and the second phase information.

In another possible implementation, the first information is information about a second label correlated with the second phase information; and

if the second label correlated with the second phase information is the same as a first label correlated with the first phase information, it indicates that the first phase information and the second phase information are correlated; or
if the second label correlated with the second phase information is different from the first label correlated with the second phase information, it indicates that the first phase information and the second phase information are not correlated.

In this implementation, another form of the first information is provided. A label correlated with phase information indirectly indicates whether the first phase information and the second phase information are correlated. This implementation is simple and easy to implement, and helps improve practicability of the solution.

In another possible implementation, the first label is a first time label correlated with the first phase information, and the second label is a second time label correlated with the second phase information.

In this implementation, a specific form of the first label and a specific form of the second label are provided, and implementability of the solution is provided. Each piece of phase information is correlated with a corresponding time label, so that the third communication apparatus determines correlation between the first phase information and the second phase information, thereby improving positioning accuracy.

In another possible implementation, the first label is a first angle label correlated with the first phase information, the second label is a second angle label correlated with the second phase information, the first angle label identifies an angle of arrival at which the at least one first positioning reference signal arrives at the first communication apparatus, and the second angle label identifies an angle of arrival at which the at least one second positioning reference signal arrives at the first communication apparatus; or
the first label is a first beam label correlated with the first phase information, the second label is a second beam label correlated with the second phase information, the first beam label identifies a receive beam used by the first communication apparatus to receive the at least one first positioning reference signal, and the second beam label identifies a receive beam used by the first communication apparatus to receive the at least one second positioning reference signal.

In this implementation, another form of the first label and another form of the second label are provided, and the solution is enriched. Each piece of phase information is correlated with a corresponding angle label or beam label. The angle label may indicate an angle of arrival at which a corresponding positioning reference signal arrives at the first communication apparatus, and the beam label may indicate a direction of a receive beam used by the first communication apparatus to receive a corresponding positioning reference signal, so that the third communication apparatus determines, by using the angle label or the beam label, whether the first phase information and the second phase information are correlated, thereby improving positioning accuracy.

In another possible implementation, the first information includes consistency assistance information, and the consistency assistance information assists the third communication apparatus in determining correlation between the first phase information and the second phase information.

In this implementation, the first information may further provide the consistency assistance information, so that the third communication apparatus determines whether the first phase information and the second phase information are correlated, thereby improving positioning accuracy.

In another possible implementation, the consistency assistance information includes information about an angle of arrival at which the at least one second positioning reference signal arrives at the first communication apparatus, or beam information of a receive beam used by the first communication apparatus to receive the at least one second positioning reference signal.

In another possible implementation, the first information includes information about an angle of arrival at which the at least one second positioning reference signal arrives at the first communication apparatus, or beam information of a receive beam used by the first communication apparatus to receive the at least one second positioning reference signal.

In this implementation, the first information may directly include the information about the angle of arrival or the beam information of the receive beam, so that the third communication apparatus determines whether the first phase information and the second phase information are correlated, thereby improving positioning accuracy.

In another possible implementation, the beam information includes at least one of the following: a direction and an index of the receive beam used by the first communication apparatus to receive the at least one second positioning reference signal.

In another possible implementation, the method further includes: The third communication apparatus receives first cause information from the first communication apparatus, where the first cause information indicates a cause why the first phase information and the second phase information are not correlated.

That the third communication apparatus positions the first communication apparatus or the at least one second communication apparatus based on the first phase information, the second phase information, and the first information includes: The third communication apparatus positions the first communication apparatus or the at least one second communication apparatus based on the first phase information, the second phase information, the first information, and the first cause information.

In this implementation, the third communication apparatus receives the first cause information from the first communication apparatus, so that the third communication apparatus determines the cause why the first phase information and the second phase information are not correlated. This helps the third communication apparatus compensate for the first phase information or the second phase information based on the cause, and then perform positioning based on compensated phase information, thereby improving positioning accuracy.

In another possible implementation, the method further includes: The third communication apparatus receives second information from the second communication apparatus, where the second information indicates information about correlation between a transmit phase of the at least one first positioning reference signal and a transmit phase of the at least one second positioning reference signal.

That the third communication apparatus positions the first communication apparatus or the at least one second communication apparatus based on the first phase information, the second phase information, and the first information includes: The third communication apparatus positions the first communication apparatus or the at least one second communication apparatus based on the first phase information, the second phase information, the first information, and the second information.

In this implementation, the third communication apparatus may further obtain the second information, so that the third communication apparatus obtains a case about whether a phase jump or phase loss occurs at a receive end and a transmit end of a positioning reference signal. In this way, the first communication apparatus may determine correlation between the first phase information and the second phase information based on the first information and the second information. This helps the third communication apparatus accurately position the first communication apparatus or the at least one second communication apparatus.

In a possible implementation, the second information is second indication information, and the second indication information indicates whether the transmit phase of the at least one first positioning reference signal and the transmit phase of the at least one second positioning reference signal are correlated.

In this implementation, a specific form of the second information is provided. In this implementation, whether the transmit phase of the at least one first positioning reference signal and the transmit phase of the at least one second positioning reference signal are correlated can be simply and quickly indicated, so that the third communication apparatus determines correlation between the first phase information and the second phase information, thereby improving positioning accuracy.

In another possible implementation, the method further includes: The third communication apparatus receives second cause information from the second communication apparatus, where the second cause information indicates a cause why the transmit phase of the at least one first positioning reference signal and the transmit phase of the at least one second positioning reference signal are not correlated.

That the third communication apparatus positions the first communication apparatus or the at least one second communication apparatus based on the first phase information, the second phase information, the first information, and the second information includes: The third communication apparatus positions the first communication apparatus or the at least one second communication apparatus based on the first phase information, the second phase information, the first information, the second information, and the second cause information.

In this implementation, the third communication apparatus receives the second cause information from the second communication apparatus, so that the third communication apparatus determines the cause why the first phase information and the second phase information are not correlated. This helps the third communication apparatus compensate for the first phase information or the second phase information based on the cause, and then perform positioning based on compensated phase information, thereby improving positioning accuracy.

A fourth aspect of this application provides a communication method, including:

A third communication apparatus receives first phase information from a first communication apparatus, where the first phase information includes at least one first phase, or the first phase information is determined based on the at least one first phase, and the at least one first phase is obtained by the first communication apparatus by measuring at least one first positioning reference signal sent by at least one second communication apparatus. The third communication apparatus receives second phase information from the first communication apparatus, where the second phase information includes at least one second phase, or the second phase information is determined based on the at least one second phase, and the at least one second phase is obtained by the first communication apparatus by measuring at least one second positioning reference signal sent by the at least one second communication apparatus. The third communication apparatus receives second information from the at least one second communication apparatus, where the second information indicates information about correlation between a transmit phase of the at least one first positioning reference signal and a transmit phase of the at least one second positioning reference signal. The third communication apparatus positions the first communication apparatus or the at least one second communication apparatus based on the first phase information, the second phase information, and the second information.

In the foregoing technical solution, the third communication apparatus may obtain the first phase information and the second phase information. The third communication apparatus receives the second information from the at least one second communication apparatus, so that the third communication apparatus determines correlation between the first phase information and the second phase information, thereby improving positioning accuracy. This effectively avoids a problem that positioning accuracy is reduced because the first phase information and the second phase information are used for joint positioning in a scenario in which the first phase information and the second phase information are not correlated. For example, generally, in a phase-based positioning technical solution, a phase needs to be tracked, and the tracked phase needs to be continuous, that is, pieces of phase information are correlated. For example, if the first phase information and the second phase information are correlated, the third communication apparatus may position the first communication apparatus or the at least one second communication apparatus based on both the first phase information and the second phase information. For example, if the first phase information and the second phase information are not correlated, the third communication apparatus may position the first communication apparatus or the at least one second communication apparatus based on the first phase information only or the second phase information only. Therefore, a problem that positioning accuracy for positioning, by the third communication apparatus, the first communication apparatus or the at least one second communication apparatus is limited because correlation between the first phase information and the second phase information is difficult to be ensured due to a phase jump or a phase loss in a process in which the first communication apparatus tracks the phase is avoided.

In a possible implementation, the second information is second indication information, and the second indication information indicates whether the transmit phase of the at least one first positioning reference signal and the transmit phase of the at least one second positioning reference signal are correlated.

In this implementation, a specific form of the second information is provided. In this implementation, whether the transmit phase of the at least one first positioning reference signal and the transmit phase of the at least one second positioning reference signal are correlated can be simply and quickly indicated, so that the third communication apparatus determines correlation between the first phase information and the second phase information, thereby improving positioning accuracy.

In another possible implementation, the method further includes: The third communication apparatus receives second cause information from the at least one second communication apparatus, where the second cause information indicates a cause why the transmit phase of the at least one first positioning reference signal and the transmit phase of the at least one second positioning reference signal are not correlated.

That the third communication apparatus positions the first communication apparatus or the at least one second communication apparatus based on the first phase information, the second phase information, and the second information includes: The third communication apparatus positions the first communication apparatus or the at least one second communication apparatus based on the first phase information, the second phase information, the second information, and the second cause information.

In this implementation, the third communication apparatus receives the second cause information from the at least one second communication apparatus, so that the third communication apparatus determines the cause why the first phase information and the second phase information are not correlated. This helps the third communication apparatus compensate for the first phase information or the second phase information based on the cause, and then perform positioning based on compensated phase information, thereby improving positioning accuracy.

In another possible implementation, the second cause information includes at least one of the following: second antenna switching information, second radio frequency link information, or sending failure information, where

the second antenna switching information includes information indicating that a transmit antenna used by the second communication apparatus to send the at least one first positioning reference signal is inconsistent with a transmit antenna used by the second communication apparatus to send the at least one second positioning reference signal; or

the second radio frequency link information includes information indicating that a radio frequency initial phase of a radio frequency link used by the second communication apparatus to send the at least one first positioning reference signal is inconsistent with a radio frequency initial phase of a radio frequency link used by the second communication apparatus to send the at least one second positioning reference signal; or

the sending failure information includes information indicating that the second communication apparatus fails to send the at least one second positioning reference signal.

In this implementation, some possible causes included in the second cause information are provided, so that the cause why the transmit phase of the at least one first positioning reference signal and the transmit phase of the at least one second positioning reference signal are not correlated is shown. Specifically, the cause may be antenna switching, beam switching, radio frequency link switching, a failure in sending the positioning reference signal, or the like. This helps the third communication apparatus determine a cause of a phase jump or a phase loss on the second communication apparatus side. The third communication apparatus may be assisted to compensate for phase information to some extent, thereby helping improve positioning accuracy.

A fifth aspect of this application provides a communication method, including:

A first communication apparatus measures at least one first positioning reference signal from at least one second communication apparatus, to obtain at least one first phase. The first communication apparatus sends first phase information to a third communication apparatus, where the first phase information includes the at least one first phase, or the first phase information is determined based on the at least one first phase. The first communication apparatus sends first information to the third communication apparatus, where the first information indicates whether the first phase information meets a first phase correlation condition.

In the foregoing technical solution, the first communication apparatus sends the first information to the third communication apparatus, where the first information indicates whether the first phase information meets the first phase correlation condition, so that the third communication apparatus determines correlation between the first phase information and phase information that is about the at least one second communication apparatus and that is previously reported by the first communication apparatus, thereby helping improve positioning accuracy. This effectively avoids a problem that positioning accuracy is reduced because phase information is used for joint positioning in a scenario in which the first phase information and the phase information that is previously reported by the first communication apparatus are not correlated. For example, generally, in a phase-based positioning technical solution, a phase needs to be tracked, and the tracked phase needs to be continuous, that is, pieces of phase information are correlated. For example, if the first phase information and the phase information that is previously reported by the first communication apparatus are correlated, the third communication apparatus may position the first communication apparatus or the at least one second communication apparatus based on both the first phase information and the phase information that is previously reported by the first communication apparatus. For example, if the first phase information and the phase information that is previously reported by the first communication apparatus are not correlated, the third communication apparatus may position the first communication apparatus or the at least one second communication apparatus based on the first phase information only or the phase information that is previously reported by the first communication apparatus only. Therefore, a problem that positioning accuracy for positioning, by the third communication apparatus, the first communication apparatus or the at least one second communication apparatus is limited because correlation between the first phase information and the phase information that is previously reported by the first communication apparatus is difficult to be ensured due to a phase jump or a phase loss in a process in which the first communication apparatus tracks the phase is avoided.

In a possible implementation, the first information is first indication information, and the first indication information indicates whether the first phase information meets the phase correlation condition.

In another possible implementation, the first information is information about a first label correlated with the first phase information.

In another possible implementation, the first information includes information about an angle of arrival at which the at least one first positioning reference signal arrives at the first communication apparatus, or beam index or direction information of a receive beam used by the first communication apparatus to receive the at least one first positioning reference signal.

In another possible implementation, the first information includes third cause information, and the third cause information indicates whether the first phase information meets the first phase correlation condition.

In another possible implementation, the method further includes: The first communication apparatus sends first cause information to the third communication apparatus, where the first cause information indicates a cause why the first phase information does not meet the first phase correlation condition.

A sixth aspect of this application provides a communication method, including:

At least one second communication apparatus sends at least one first positioning reference signal to a first communication apparatus. Then, the at least one second communication apparatus sends second information to a third communication apparatus, where the second information indicates whether a transmit phase of the at least one first positioning reference signal meets a second phase correlation condition.

In the foregoing technical solution, the second communication apparatus may send the second information to the third communication apparatus, so that the third communication apparatus determines correlation between first phase information obtained by the first communication apparatus by measuring the at least one first positioning reference signal and phase information that is previously reported by the first communication apparatus before the first phase information. Therefore, the third communication apparatus determines correlation between the first phase information and phase information that is about the at least one second communication apparatus and that is previously reported by the first communication apparatus, thereby helping improve positioning accuracy. This effectively avoids a problem that positioning accuracy is reduced because phase information is used for joint positioning in a scenario in which the first phase information and the phase information that is previously reported by the first communication apparatus are not correlated. For example, generally, in a phase-based positioning technical solution, a phase needs to be tracked, and the tracked phase needs to be continuous, that is, pieces of phase information are correlated. For example, if the first phase information and the phase information that is previously reported by the first communication apparatus are correlated, the third communication apparatus may position the first communication apparatus or the at least one second communication apparatus based on both the first phase information and the phase information that is previously reported by the first communication apparatus. For example, if the first phase information and the phase information that is previously reported by the first communication apparatus are not correlated, the third communication apparatus may position the first communication apparatus or the at least one second communication apparatus based on the first phase information only or the phase information that is previously reported by the first communication apparatus only. Therefore, a problem that positioning accuracy for positioning, by the third communication apparatus, the first communication apparatus or the at least one second communication apparatus is limited because correlation between the first phase information and the phase information that is previously reported by the first communication apparatus is difficult to be ensured due to a phase jump or a phase loss in a process in which the first communication apparatus tracks the phase is avoided.

In a possible implementation, the second information is second indication information, and the second indication information indicates whether the transmit phase of the at least one first positioning reference signal meets the second phase correlation condition.

In another possible implementation, the second information is fourth cause information, and the fourth cause information indicates a cause whether the transmit phase of the at least one first positioning reference signal meets the second phase correlation condition.

In another possible implementation, the method further includes: The at least one second communication apparatus sends second cause information to the third communication apparatus, where the second cause information indicates a cause why the transmit phase of the at least one first positioning reference signal does not meet the second phase correlation condition.

A seventh aspect of this application provides a communication method, including:

A third communication apparatus receives first phase information from a first communication apparatus, where the first phase information includes at least one first phase, or the first phase information is determined based on the at least one first phase, and the at least one first phase is obtained by the first communication apparatus by measuring at least one first positioning reference signal sent by at least one second communication apparatus. The third communication apparatus receives first information from the first communication apparatus, where the first information indicates whether the first phase information meets a first phase correlation condition. The third communication apparatus positions the first communication apparatus or the at least one second communication apparatus based on the first phase information and the first information.

In the foregoing technical solution, the third communication apparatus receives the first information from the first communication apparatus, where the first information indicates whether the first phase information meets the first phase correlation condition, so that the third communication apparatus determines correlation between the first phase information and phase information that is about the at least one second communication apparatus and that is previously reported by the first communication apparatus, thereby helping improve positioning accuracy. This effectively avoids a problem that positioning accuracy is reduced because phase information is used for joint positioning in a scenario in which the first phase information and the phase information that is previously reported by the first communication apparatus are not correlated. For example, generally, in a phase-based positioning technical solution, a phase needs to be tracked, and the tracked phase needs to be continuous, that is, pieces of phase information are correlated. For example, if the first phase information and the phase information that is previously reported by the first communication apparatus are correlated, the third communication apparatus may position the first communication apparatus or the at least one second communication apparatus based on both the first phase information and the phase information that is previously reported by the first communication apparatus. For example, if the first phase information and the phase information that is previously reported by the first communication apparatus are not correlated, the third communication apparatus may position the first communication apparatus or the at least one second communication apparatus based on the first phase information only or the phase information that is previously reported by the first communication apparatus only. Therefore, a problem that positioning accuracy for positioning, by the third communication apparatus, the first communication apparatus or the at least one second communication apparatus is limited because correlation between the first phase information and the phase information that is previously reported by the first communication apparatus is difficult to be ensured due to a phase jump or a phase loss in a process in which the first communication apparatus tracks the phase is avoided.

In a possible implementation, the first information is first indication information, and the first indication information indicates whether the first phase information meets the phase correlation condition.

In another possible implementation, the first information is information about a first label correlated with the first phase information.

In another possible implementation, the first information includes information about an angle of arrival at which the at least one first positioning reference signal arrives at the first communication apparatus, or beam index or direction information of a receive beam used by the first communication apparatus to receive the at least one first positioning reference signal.

In another possible implementation, the first information includes third cause information. The third cause information indicates a cause whether the first phase information meets the first phase correlation condition.

In another possible implementation, the method further includes: The third communication apparatus receives first cause information from the first communication apparatus, where the first cause information indicates a cause why the first phase information does not meet the first phase correlation condition.

That the third communication apparatus positions the first communication apparatus or the at least one second communication apparatus based on the first phase information and the first information specifically includes: The third communication apparatus positions the first communication apparatus or the at least one second communication apparatus based on the first phase information, the first information, and the first cause information.

In another possible implementation, the method further includes: The third communication apparatus receives second information from the at least one second communication apparatus, where the second information indicates whether a transmit phase of the at least one first positioning reference signal meets a second phase correlation condition.

That the third communication apparatus positions the first communication apparatus or the at least one second communication apparatus based on the first phase information and the first information specifically includes: The third communication apparatus positions the first communication apparatus or the at least one second communication apparatus based on the first phase information, the first information, and the second information.

In another possible implementation, the second information is second indication information, and the second indication information indicates whether the transmit phase of the at least one first positioning reference signal meets the second phase correlation condition.

In another possible implementation, the second information is fourth cause information, and the fourth cause information indicates whether the transmit phase of the at least one first positioning reference signal meets the second phase correlation condition.

An eighth aspect of this application provides a communication method, including:

A third communication apparatus receives first phase information from a first communication apparatus, where the first phase information includes at least one first phase, or the first phase information is determined based on the at least one first phase, and the at least one first phase is obtained by the first communication apparatus by measuring at least one first positioning reference signal sent by at least one second communication apparatus. The third communication apparatus receives second information from the at least one second communication apparatus, where the second information indicates whether a transmit phase of the at least one first positioning reference signal meets a second phase correlation condition. The third communication apparatus positions the first communication apparatus or the at least one second communication apparatus based on the first phase information and the second information.

In the foregoing technical solution, the third communication apparatus receives the second information from the at least one second communication apparatus, where the second information indicates whether the transmit phase of the at least one first positioning reference signal meets the second phase correlation condition, so that the third communication apparatus determines correlation between first phase information obtained by the first communication apparatus by measuring the at least one first positioning reference signal and phase information that is previously reported by the first communication apparatus before the first phase information. Therefore, the third communication apparatus determines correlation between the first phase information and phase information that is about the at least one second communication apparatus and that is previously reported by the first communication apparatus, thereby helping improve positioning accuracy. This effectively avoids a problem that positioning accuracy is reduced because phase information is used for joint positioning in a scenario in which the first phase information and the phase information that is previously reported by the first communication apparatus are not correlated. For example, generally, in a phase-based positioning technical solution, a phase needs to be tracked, and the tracked phase needs to be continuous, that is, pieces of phase information are correlated. For example, if the first phase information and the phase information that is previously reported by the first communication apparatus are correlated, the third communication apparatus may position the first communication apparatus or the at least one second communication apparatus based on both the first phase information and the phase information that is previously reported by the first communication apparatus. For example, if the first phase information and the phase information that is previously reported by the first communication apparatus are not correlated, the third communication apparatus may position the first communication apparatus or the at least one second communication apparatus based on the first phase information only or the phase information that is previously reported by the first communication apparatus only. Therefore, a problem that positioning accuracy for positioning, by the third communication apparatus, the first communication apparatus or the at least one second communication apparatus is limited because correlation between the first phase information and the phase information that is previously reported by the first communication apparatus is difficult to be ensured due to a phase jump or a phase loss in a process in which the first communication apparatus tracks the phase is avoided.

A ninth aspect of this application provides a first communication apparatus, including:

a processing module, configured to measure at least one first positioning reference signal sent by at least one second communication apparatus, to obtain at least one first phase; and

a transceiver module, configured to send first phase information to a third communication apparatus, where the first phase information includes the at least one first phase, or the first phase information is determined based on the at least one first phase, where

the processing module is further configured to measure at least one second positioning reference signal sent by the at least one second communication apparatus, to obtain at least one second phase; and

the transceiver module is further configured to: send second phase information to the third communication apparatus, where the second phase information includes the at least one second phase, or the second phase information is determined based on the at least one second phase; and send first information to the third communication apparatus, where the first information is information about phase correlation between the first phase information and the second phase information.

In a possible implementation, the first phase information is sent by the first communication apparatus to the third communication apparatus at a first moment, the second phase information is sent by the first communication apparatus to the third communication apparatus at a second moment, and the first moment is one or more moments before the second moment.

In another possible implementation, the first label is a first angle label correlated with the first phase information, the second label is a second angle label correlated with the second phase information, the first angle label identifies an angle of arrival at which the at least one first positioning reference signal arrives at the first communication apparatus, and the second angle label identifies an angle of arrival at which the at least one second positioning reference signal arrives at the first communication apparatus; or

the first label is a first beam label correlated with the first phase information, the second label is a second beam label correlated with the second phase information, the first beam label identifies a receive beam used by the first communication apparatus to receive the at least one first positioning reference signal, and the second beam label identifies a receive beam used by the first communication apparatus to receive the at least one second positioning reference signal.

In another possible implementation, the first information includes consistency assistance information, and the consistency assistance information assists the third communication apparatus in determining correlation between the first phase information and the second phase information.

In another possible implementation, the consistency assistance information includes information about an angle of arrival at which the at least one second positioning reference signal arrives at the first communication apparatus, or beam information of a receive beam used by the first communication apparatus to receive the at least one second positioning reference signal.

In another possible implementation, the first information includes information about an angle of arrival at which the at least one second positioning reference signal arrives at the first communication apparatus, or beam information of a receive beam used by the first communication apparatus to receive the at least one second positioning reference signal.

In another possible implementation, the beam information includes at least one of the following: a direction and an index of the receive beam used by the first communication apparatus to receive the at least one second positioning reference signal.

In another possible implementation, the transceiver module is further configured to:

send first cause information to the third communication apparatus, where the first cause information indicates a cause why the first phase information and the second phase information are not correlated.

In another possible implementation, the first cause information includes at least one of the following: first radio frequency link information, first antenna switching information, first beam switching information, or measurement failure information, where

the first radio frequency link information includes information indicating that a radio frequency initial phase of a radio frequency link used by the first communication apparatus to receive the at least one first positioning reference signal is inconsistent with a radio frequency initial phase of a radio frequency link used by the first communication apparatus to receive the at least one second positioning reference signal; or

the first antenna switching information includes information indicating that a receive antenna used by the first communication apparatus to receive the at least one first positioning reference signal is inconsistent with a receive antenna used by the first communication apparatus to receive the at least one second positioning reference signal; or

the first beam switching information includes information indicating that the receive beam used by the first communication apparatus to receive the at least one first positioning reference signal is inconsistent with the receive beam used by the first communication apparatus to receive the at least one second positioning reference signal; or

the measurement failure information includes information about a phase measurement failure that occurs in a process in which the first communication apparatus measures the at least one second positioning reference signal.

A tenth aspect of this application provides a second communication apparatus, including:

a transceiver module, configured to: send at least one first positioning reference signal to a first communication apparatus; send at least one second positioning reference signal to the first communication apparatus; and send second information to a third communication apparatus, where the second information indicates information about correlation between a transmit phase of the at least one first positioning reference signal and a transmit phase of the at least one second positioning reference signal.

In a possible implementation, the second information is second indication information, and the second indication information indicates whether the transmit phase of the at least one first positioning reference signal and the transmit phase of the at least one second positioning reference signal are correlated.

In another possible implementation, the transceiver module is further configured to:

send second cause information to the third communication apparatus, where the second cause information indicates a cause why the transmit phase of the at least one first positioning reference signal and the transmit phase of the at least one second positioning reference signal are not correlated.

In another possible implementation, the second cause information includes at least one of the following: second antenna switching information, second radio frequency link information, or sending failure information, where

the second antenna switching information includes information indicating that a transmit antenna used by the second communication apparatus to send the at least one first positioning reference signal is inconsistent with a transmit antenna used by the second communication apparatus to send the at least one second positioning reference signal; or

the second radio frequency link information includes information indicating that a radio frequency initial phase of a radio frequency link used by the second communication apparatus to send the at least one first positioning reference signal is inconsistent with a radio frequency initial phase of a radio frequency link used by the second communication apparatus to send the at least one second positioning reference signal; or

the sending failure information includes information indicating that the second communication apparatus fails to send the at least one second positioning reference signal.

An eleventh aspect of this application provides a third communication apparatus, including:

a transceiver module, configured to: receive first phase information from a first communication apparatus, where the first phase information includes at least one first phase, or the first phase information is determined based on the at least one first phase, and the at least one first phase is obtained by the first communication apparatus by measuring at least one first positioning reference signal sent by at least one second communication apparatus; receive second phase information from the first communication apparatus, where the second phase information includes at least one second phase, or the second phase information is determined based on the at least one second phase, and the at least one second phase is obtained by the first communication apparatus by measuring at least one second positioning reference signal sent by the at least one second communication apparatus; and receive first information from the first communication apparatus, where the first information is information about phase correlation between the first phase information and the second phase information; and

a processing module, configured to position the first communication apparatus or the at least one second communication apparatus based on the first phase information, the second phase information, and the first information.

In a possible implementation, the first phase information is sent by the first communication apparatus to the third communication apparatus at a first moment, the second phase information is sent by the first communication apparatus to the third communication apparatus at a second moment, and the first moment is one or more moments before the second moment.

In another possible implementation, the first information is first indication information, and the first indication information indicates whether the first phase information and the second phase information are correlated.

In another possible implementation, the first information is information about a second label correlated with the second phase information; and

if the second label correlated with the second phase information is the same as a first label correlated with the first phase information, it indicates that the first phase information and the second phase information are correlated; or if the second label correlated with the second phase information is different from the first label correlated with the second phase information, it indicates that the first phase information and the second phase information are not correlated.

In another possible implementation, the first label is a first time label correlated with the first phase information, and the second label is a second time label correlated with the second phase information.

In another possible implementation, the first label is a first angle label correlated with the first phase information, the second label is a second angle label correlated with the second phase information, the first angle label identifies an angle of arrival at which the at least one first positioning reference signal arrives at the first communication apparatus, and the second angle label identifies an angle of arrival at which the at least one second positioning reference signal arrives at the first communication apparatus; or

the first label is a first beam label correlated with the first phase information, the second label is a second beam label correlated with the second phase information, the first beam label identifies a receive beam used by the first communication apparatus to receive the at least one first positioning reference signal, and the second beam label identifies a receive beam used by the first communication apparatus to receive the at least one second positioning reference signal.

In another possible implementation, the first information includes consistency assistance information, and the consistency assistance information assists the third communication apparatus in determining correlation between the first phase information and the second phase information.

In another possible implementation, the consistency assistance information includes information about an angle of arrival at which the at least one second positioning reference signal arrives at the first communication apparatus, or beam information of a receive beam used by the first communication apparatus to receive the at least one second positioning reference signal.

In another possible implementation, the first information includes information about an angle of arrival at which the at least one second positioning reference signal arrives at the first communication apparatus, or beam information of a receive beam used by the first communication apparatus to receive the at least one second positioning reference signal.

In another possible implementation, the beam information includes at least one of the following: a direction and an index of the receive beam used by the first communication apparatus to receive the at least one second positioning reference signal.

In another possible implementation, the transceiver module is further configured to:

receive first cause information from the first communication apparatus, where the first cause information indicates a cause why the first phase information and the second phase information are not correlated; and the processing module is specifically configured to:

position the first communication apparatus or the at least one second communication apparatus based on the first phase information, the second phase information, the first information, and the first cause information.

In another possible implementation, the transceiver module is further configured to:

receive second information from the second communication apparatus, where the second information indicates information about correlation between a transmit phase of the at least one first positioning reference signal and a transmit phase of the at least one second positioning reference signal; and the processing module is specifically configured to:

position the first communication apparatus or the at least one second communication apparatus based on the first phase information, the second phase information, the first information, and the second information.

In another possible implementation, the transceiver module is further configured to:

receive second cause information from the second communication apparatus, where the second cause information indicates a cause why the transmit phase of the at least one first positioning reference signal and the transmit phase of the at least one second positioning reference signal are not correlated; and
the processing module is specifically configured to:
position the first communication apparatus or the at least one second communication apparatus based on the first phase information, the second phase information, the first information, the second information, and the second cause information.

A twelfth aspect of this application provides a third communication apparatus, including:

a transceiver module, configured to: receive first phase information from a first communication apparatus, where the first phase information includes at least one first phase, or the first phase information is determined based on the at least one first phase, and the at least one first phase is obtained by the first communication apparatus by measuring at least one first positioning reference signal sent by at least one second communication apparatus; receive second phase information from the first communication apparatus, where the second phase information includes at least one second phase, or the second phase information is determined based on the at least one second phase, and the at least one second phase is obtained by the first communication apparatus by measuring at least one second positioning reference signal sent by the at least one second communication apparatus; and receive second information from the at least one second communication apparatus, where the second information indicates information about correlation between a transmit phase of the at least one first positioning reference signal and a transmit phase of the at least one second positioning reference signal; and
a processing module, configured to position the first communication apparatus or the at least one second communication apparatus based on the first phase information, the second phase information, and the second information.

In a possible implementation, the second information is second indication information, and the second indication information indicates whether the transmit phase of the at least one first positioning reference signal and the transmit phase of the at least one second positioning reference signal are correlated.
In another possible implementation, the transceiver module is further configured to:

receive second cause information from the at least one second communication apparatus, where the second cause information indicates a cause why the transmit phase of the at least one first positioning reference signal and the transmit phase of the at least one second positioning reference signal are not correlated; and
the processing module is specifically configured to:
position the first communication apparatus or the at least one second communication apparatus based on the first phase information, the second phase information, the second information, and the second cause information.

In another possible implementation, the second cause information includes at least one of the following: second antenna switching information, second radio frequency link information, or sending failure information, where

the second antenna switching information includes information indicating that a transmit antenna used by the second communication apparatus to send the at least one first positioning reference signal is inconsistent with a transmit antenna used by the second communication apparatus to send the at least one second positioning reference signal; or
the second radio frequency link information includes information indicating that a radio frequency initial phase of a radio frequency link used by the second communication apparatus to send the at least one first positioning reference signal is inconsistent with a radio frequency initial phase of a radio frequency link used by the second communication apparatus to send the at least one second positioning reference signal; or
the sending failure information includes information indicating that the second communication apparatus fails to send the at least one second positioning reference signal.

A thirteenth aspect of this application provides a first communication apparatus, including:

a processing module, configured to measure at least one first positioning reference signal sent by at least one second communication apparatus, to obtain at least one first phase; and

a transceiver module, configured to: send first phase information to a third communication apparatus, where the first phase information includes at least one first phase, or the first phase information is determined based on the at least one first phase; and send first information to the third communication apparatus, where the first information indicates whether the first phase information meets a first phase correlation condition.

In a possible implementation, the first information is first indication information, and the first indication information indicates whether the first phase information meets the first phase correlation condition.

In another possible implementation, the first information is information about a first label correlated with the first phase information.

In another possible implementation, the first information includes information about an angle of arrival at which the at least one first positioning reference signal arrives at the first communication apparatus, or beam index or direction information of a receive beam used by the first communication apparatus to receive the at least one first positioning reference signal.

In another possible implementation, the first information includes third cause information, and the third cause information indicates whether the first phase information meets the first phase correlation condition.

In another possible implementation, the transceiver module is further configured to:

send first cause information to the third communication apparatus, where the first cause information indicates a cause why the first phase information does not meet the first phase correlation condition.

A fourteenth aspect of this application provides a second communication apparatus, including:

a transceiver module, configured to: send at least one first positioning reference signal to a first communication apparatus; and send second information to a third communication apparatus, where the second information indicates whether a transmit phase of the at least one first positioning reference signal meets a second phase correlation condition.

In a possible implementation, the second information is second indication information, and the second indication information indicates whether the transmit phase of the at least one first positioning reference signal meets the second phase correlation condition.

In another possible implementation, the second information is fourth cause information, and the fourth cause information indicates a cause whether the transmit phase of the at least one first positioning reference signal meets the second phase correlation condition.

In another possible implementation, the transceiver module is further configured to:

send second cause information to the third communication apparatus, where the second cause information indicates a cause why the transmit phase of the at least one first positioning reference signal does not meet the second phase correlation condition.

A fifteenth aspect of this application provides a third communication apparatus, including:

a transceiver module, configured to: receive first phase information from a first communication apparatus, where the first phase information includes at least one first phase, or the first phase information is determined based on the at least one first phase, and the at least one first phase is obtained by the first communication apparatus by measuring at least one first positioning reference signal sent by at least one second communication apparatus; and receive first information from the first communication apparatus, where the first information indicates whether the first phase information meets a first phase correlation condition; and

a processing module, configured to position the first communication apparatus or the at least one second communication apparatus based on the first phase information and the first information.

In a possible implementation, the first information is first indication information, and the first indication information indicates whether the first phase information meets the first phase correlation condition.

In another possible implementation, the first information is information about a first label correlated with the first phase information.

In another possible implementation, the first information includes information about an angle of arrival at which the at least one first positioning reference signal arrives at the first communication apparatus, or beam index or direction information of a receive beam used by the first communication apparatus to receive the at least one first positioning reference signal.

In another possible implementation, the first information includes third cause information. The third cause information indicates a cause whether the first phase information meets the first phase correlation condition.

In another possible implementation, the transceiver module is further configured to:

receive first cause information from the first communication apparatus, where the first cause information indicates a cause why the first phase information does not meet the first phase correlation condition; and
the processing module is specifically configured to:

position the first communication apparatus or the at least one second communication apparatus based on the first phase information, the first information, and the first cause information.

In another possible implementation, the transceiver module is further configured to:

receive second information from the at least one second communication apparatus, where the second information indicates whether a transmit phase of the at least one first positioning reference signal meets a second phase correlation condition; and
the processing module is specifically configured to:
position the first communication apparatus or the at least one second communication apparatus based on the first phase information, the first information, and the second information.

In another possible implementation, the second information is second indication information, and the second indication information indicates whether the transmit phase of the at least one first positioning reference signal meets the second phase correlation condition.

In another possible implementation, the second information is fourth cause information, and the fourth cause information indicates whether the transmit phase of the at least one first positioning reference signal meets the second phase correlation condition.

A sixteenth aspect of this application provides a third communication apparatus, including:

a transceiver module, configured to receive first phase information from a first communication apparatus, where the first phase information includes at least one first phase, or the first phase information is determined based on the at least one first phase, and the at least one first phase is obtained by the first communication apparatus by measuring at least one first positioning reference signal sent by at least one second communication apparatus; and receive second information from the at least one second communication apparatus, where the second information indicates whether a transmit phase of the at least one first positioning reference signal meets a second phase correlation condition; and
a processing module, configured to position the first communication apparatus or the at least one second communication apparatus based on the first phase information and the second information.

A seventeenth aspect of this application provides a communication apparatus. The communication apparatus includes a processor. The processor is configured to invoke and run a computer program stored in a memory, so that the processor implements any implementation in any one of the first aspect to the eighth aspect.

Optionally, the communication apparatus further includes a transceiver. The processor is further configured to control the transceiver to send and receive a signal.

Optionally, the communication apparatus includes the memory. The memory stores the computer program.

An eighteenth aspect of this application provides a computer program product including instructions. When the computer program product runs on a computer, the computer performs any implementation in any one of the first aspect to the eighth aspect.

A nineteenth aspect of this application provides a computer-readable storage medium, including computer instructions. When the computer instructions are run on a computer, the computer performs any implementation in any one of the first aspect to the eighth aspect.

A twentieth aspect of this application provides a chip apparatus, including a processor, configured to be connected to a memory, and invoke a program stored in the memory, so that the processor performs any implementation in any one of the first aspect to the eighth aspect.

A twenty-first aspect of this application provides a communication system. The communication system includes the first communication apparatus in the ninth aspect and the third communication apparatus in the eleventh aspect. Optionally, the communication system further includes the second communication apparatus in the tenth aspect.

Alternatively, the communication system includes the second communication apparatus in the tenth aspect and the third communication apparatus in the twelfth aspect.

Alternatively, the communication system includes the first communication apparatus in the thirteenth aspect and the third communication apparatus in the fifteenth aspect. Optionally, the communication system further includes the second communication apparatus in the fourteenth aspect.

Alternatively, the communication system includes the second communication apparatus in the fourteenth aspect and the third communication apparatus in the sixteenth aspect.

According to the foregoing technical solutions, it can be learned that embodiments of this application have the following advantages:

It can be learned from the foregoing technical solutions that, the first communication apparatus measures the at least one first positioning reference signal sent by the at least one second communication apparatus, to obtain the at least one first phase. The first communication apparatus sends the first phase information to the third communication apparatus, where the first phase information includes the at least one first phase, or the first phase information is determined based on the at least one first phase. Then, the first communication apparatus measures the at least one second positioning reference signal from the at least one second communication apparatus, to obtain the at least one second phase. The first communication apparatus sends the second phase information to the third communication apparatus, where the second phase information includes the at least one second phase, or the second phase information is determined based on the at least one second phase. Then, the first communication apparatus sends the first information to the third communication apparatus, where the first information is the information about phase correlation between the first phase information and the second phase information. It can be learned that the first communication apparatus may feed back the first information to the third communication apparatus, so that the third communication apparatus determines correlation between the first phase information and the second phase information, thereby helping improve positioning accuracy. This effectively avoids the problem that positioning accuracy is reduced because the first phase information and the second phase information are used for joint positioning in the scenario in which the first phase information and the second phase information are not correlated. For example, generally, in the phase-based positioning technical solution, a phase needs to be tracked, and the tracked phase needs to be continuous, that is, pieces of phase information are correlated. For example, if the first phase information and the second phase information are correlated, the third communication apparatus may position the first communication apparatus or the at least one second communication apparatus based on both the first phase information and the second phase information. For example, if the first phase information and the second phase information are not correlated, the third communication apparatus may position the first communication apparatus or the at least one second communication apparatus based on the first phase information only or the second phase information only. Therefore, the problem that positioning accuracy for positioning, by the third communication apparatus, the first communication apparatus or the at least one second communication apparatus is limited because correlation between the first phase information and the second phase information is difficult to be ensured due to the phase jump or the phase loss in the process in which the first communication apparatus tracks the phase is avoided.

BRIEF DESCRIPTION OF DRAWINGS

FIG. 1 is a diagram of a communication system according to an embodiment of this application;

FIG. 2 is another diagram of a communication system according to an embodiment of this application;

FIG. 3 is another diagram of a communication system according to an embodiment of this application;

FIG. 4 is another diagram of a communication system according to an embodiment of this application;

FIG. 5A is a diagram of a principle of a phase obtained by a first communication apparatus by measuring a positioning reference signal sent by a second communication apparatus according to an embodiment of this application;

FIG. 5B is another diagram of a principle of a phase obtained by a first communication apparatus by measuring a positioning reference signal sent by a second communication apparatus according to an embodiment of this application;

FIG. 6 is a diagram of an embodiment of a communication method according to an embodiment of this application;

FIG. 7A is a diagram of a scenario in which positioning is performed on a terminal device by using a phase-based positioning technology according to an embodiment of this application;

FIG. 7B is another diagram of a scenario in which positioning is performed on a terminal device by using a phase-based positioning technology according to an embodiment of this application;

FIG. 8A is a diagram in which at least one second communication apparatus sends at least one first positioning reference signal and at least one second positioning reference signal according to an embodiment of this application;

FIG. 8B is another diagram in which at least one second communication apparatus sends at least one first positioning reference signal and at least one second positioning reference signal according to an embodiment of this application;

FIG. 9A is a diagram of a phase jump or a phase loss on a first communication apparatus side according to an embodiment of this application;

FIG. 9B is a diagram of a scenario of a communication method according to an embodiment of this application;

FIG. 9C is another diagram of a scenario of a communication method according to an embodiment of this application;

FIG. 9D is a diagram of a phase reference point and a reference location of an antenna panel according to an embodiment of this application;

FIG. 10A is a diagram of a phase jump or a phase loss on at least one second communication apparatus side according to an embodiment of this application;

FIG. 10B is another diagram of a scenario of a communication method according to an embodiment of this application;

FIG. 11 is another diagram of an embodiment of a communication method according to an embodiment of this application;

FIG. 12 is a diagram of another embodiment of a communication method according to an embodiment of this application;

FIG. 13 is a diagram of a structure of a communication apparatus according to an embodiment of this application;

FIG. 14 is another diagram of a structure of a communication apparatus according to an embodiment of this application;

FIG. 15 is a diagram of a structure of a terminal device according to an embodiment of this application; and

FIG. 16 is another diagram of a structure of a communication apparatus according to an embodiment of this application.

## DESCRIPTION OF EMBODIMENTS

Embodiments of this application provide a communication method and a communication apparatus, to improve positioning accuracy.

The following clearly and completely describes the technical solutions in embodiments of this application with reference to the accompanying drawings in embodiments of this application. It is clear that the described embodiments are merely some but not all of embodiments of this application. All other embodiments obtained by persons skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In descriptions of this application, unless otherwise specified, "/" means "or". For example, A/B may mean A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c may be singular or plural.

The technical solutions of this application can be applied to various communication systems, for example, a 5th generation (5th generation, 5G) mobile communication system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system (for example, a 6G mobile communication system) later than a 5G network, a vehicle-to-everything (vehicle-to-everything, V2X) communication system, a device-to-device (device-to-device, D2D) communication system, and the like.

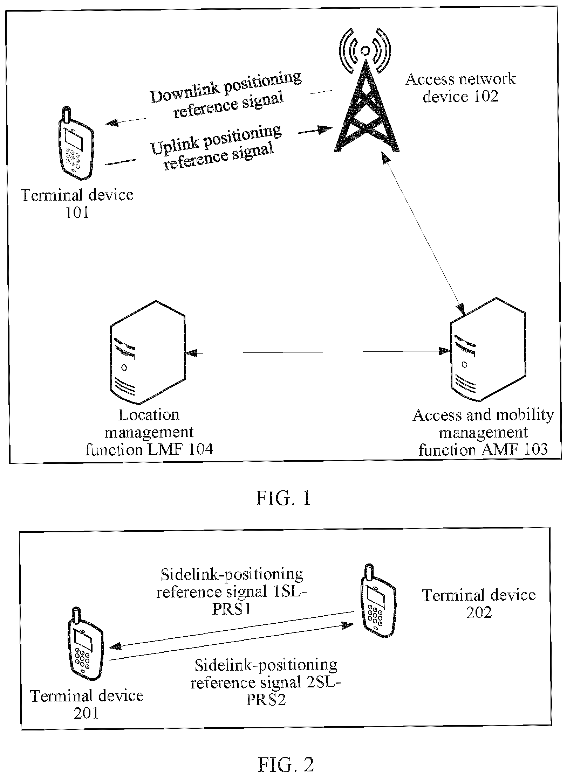

With reference to FIG. 1 to FIG. 4, the following describes some scenarios to which this application is applicable.

FIG. 1 is a diagram of a communication system according to an embodiment of this application. Refer to FIG. 1. The communication system includes an access network device 102, an access and mobility management function (access and mobility management function, AMF) 103, and a location management function (location management function, LMF) 104.

Optionally, the terminal device 101 is connected to the access network device 102 through an interface, the access network device is connected to the AMF 103 through an interface, and the AMF 104 is connected to the LMF 104 through an interface. The LMF 104 is configured to perform positioning calculation and management for a location of the terminal device 101.

For example, the terminal device 101 is connected to the access network device 103 through an NR-Uu interface, and the access network device 102 is connected to the AMF 103 through an NG-C interface. The AMF 103 is connected to the LMF 104 through an NL1 interface. The technical solutions of this application are performed between the terminal device 101 and the access network device 102, so that the LMF 104 implements positioning on the terminal device 101.

FIG. 1 shows only an example in which the communication system includes the terminal device 101 and the access network device 102. In actual application, the communication system may further include more terminal devices and more access network devices. This is not specifically limited in this application.

FIG. 2 is a diagram of another embodiment of a communication system according to an embodiment of this application. Refer to FIG. 2. The communication system includes a terminal device 201 and a terminal device 202. The terminal device 201 and the terminal device 202 are outside a signal coverage area of an access network device. The terminal device 201 communicates with the terminal device 202 through a proximity service communication (proximity service communication 5, PC5) interface. Positioning on the terminal device 202 can be implemented by the terminal device 201 according to the technical solutions of this application.

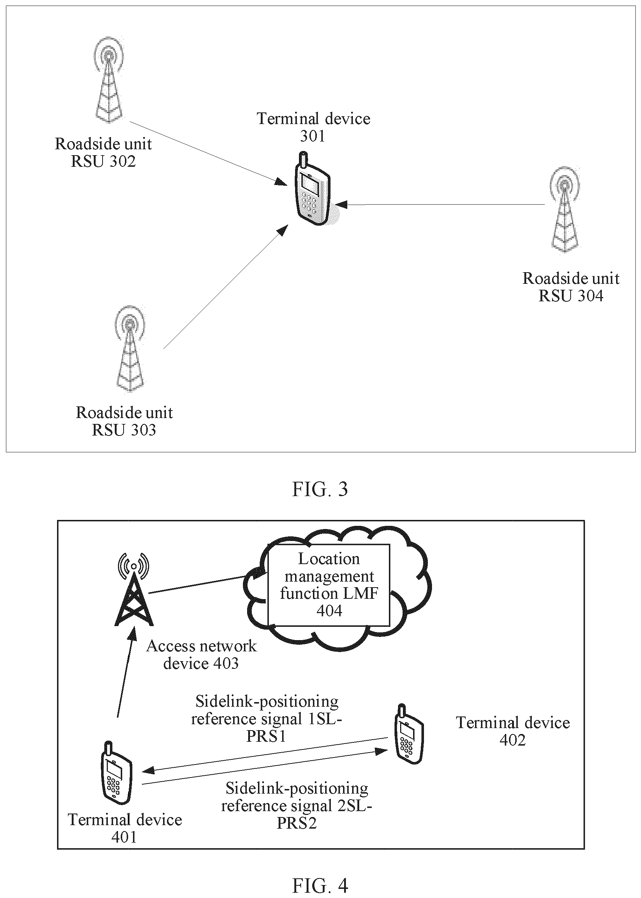

FIG. 3 is a diagram of another embodiment of a communication system according to an embodiment of this application. Refer to FIG. 3. The communication system includes a terminal device 301, a roadside unit RSU 302, an RSU 303, and an RSU 304. The terminal device 301 and the RSU 302 to the RSU 304 are located outside a signal coverage area of an access network device. In FIG. 3, the terminal device 301 communicates with the RSU through a PC5 interface. Positioning on the terminal device 301 can be implemented between the terminal device 301 and the RSU according to the technical solutions of this application.

It should be noted that in the communication system shown in FIG. 3, a form of the RSU is merely an example, and is not a specific limitation on the RSU in this application. The RSU is a roadside unit deployed on a roadside, supports sidelink communication and positioning-related protocols, and can provide a wireless communication function for the terminal device. The RSU may be a roadside station, an access point, or a sidelink device in various forms. For an access network device, the RSU is a terminal device. For a terminal device, the RSU may serve as an access network device.

FIG. 4 is a diagram of another embodiment of a communication system according to an embodiment of this application. The communication system includes a terminal device 401, a terminal device 402, an access network device 403, and an LMF 404. The terminal device 401 is located in a signal coverage area of the access network device 403, and the terminal device 402 is not located in the signal coverage area of the access network device 403. The technical solutions of this application may be performed between the terminal device 401 and the terminal device 402, and a corresponding measurement result is sent to the LMF 404 via the access network device 403, so that the LMF 404 positions the terminal device 401 and/or the terminal device 402.

In the communication systems shown in FIG. 1 and FIG. 4, the LMF is a name in a current communication system. In a future communication system, a name of the LMF may change with evolution of the communication system. The name of the LMF is not limited in this application. For example, the LMF may be referred to as a location management device, and the location management device is configured to perform positioning calculation on a location of the terminal device. In a current communication system or a future communication system, any functional network element that has another name and that has a function similar to that of the LMF may be understood as the location management device in embodiments of this application, and is applicable to a communication method provided in embodiments of this application.

The foregoing communication system to which this application is applicable is merely an example. In actual application, this application may be further applicable to another communication system with a positioning requirement. This is not specifically limited in this application. The foregoing example is not intended to limit the technical solutions of this application.

The following describes an access network device and a terminal device in this application.

The access network device may be a device in a wireless network. For example, the access network device is an apparatus deployed in a radio access network for providing a wireless communication function for the terminal device. The access network device may be a radio access network (radio access network, RAN) node that connects the terminal device to a wireless network.

The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, or a transmission point (transmission point, TP). Alternatively, the access network device may be an access network device in a 5G mobile communication system, for example, a next generation NodeB (next generation NodeB, gNB), a transmission reception point (transmission reception point, TRP), or a transmission point (transmission point, TP) in a new radio (new radio, NR) system; or one or a group of (including a plurality of antenna panels) antenna panels of a base station in a 5G mobile communication system. Alternatively, the network device may be a network node that forms a gNB or a transmission point, for example, a baseband unit (baseband unit, BBU) or a distributed unit (distributed unit, DU). In some possible specific forms of the network device shown above, the access network device shown above is a transceiver node, and the transceiver node may also be referred to as a transmission reception point (transmission reception point, TRP). Optionally, the access network device may include a plurality of transmit antennas and/or a plurality of receive antennas.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, a radio frequency processing function, and a function related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified into a device in an access network (radio access network, RAN), or the CU may be classified into a device in a core network (core network, CN). This is not limited in this application.

The terminal device may be a wireless terminal device that can receive scheduling and indication information of an access network device. The wireless terminal device may be a device that provides voice and/or data connectivity for a user, a handheld device with a wireless connection function, or another processing device connected to a wireless modem.

The terminal device is also referred to as user equipment (user equipment, UE), a mobile station (mobile station, MS), a mobile terminal (mobile terminal, MT), or the like, and is a device that includes a wireless communication function (providing voice/data connectivity for a user), for example, a handheld device or an in-vehicle device that has a wireless connection function. Currently, examples of some terminal devices are: a mobile phone (mobile phone), a tablet computer, a notebook computer, a palmtop computer, a train, a car, an airplane, a mobile internet device (mobile internet device, MID), a wearable device, a virtual reality (virtual reality, VR) device, an augmented reality (augmented reality, AR) device, a wireless terminal in industrial control (industrial control), a wireless terminal in the internet of vehicles, a wireless terminal in self driving (self driving), a wireless terminal in a smart grid (smart grid), a wireless terminal in transportation safety (transportation safety), and a wireless terminal in smart city (smart city). For example, the wireless terminal in the internet of vehicles may be a vehicle-mounted device, an entire vehicle device, a vehicle-mounted module, a vehicle, or the like. The wireless terminal in industrial control may be a robot or the like. Optionally, the terminal device may include a plurality of transmit antennas and/or a plurality of receive antennas.

A communication system to which this application is applicable includes a first communication apparatus, at least one second communication apparatus, and a third communication apparatus. The following describes some possible implementations of the first communication apparatus, the at least one second communication apparatus, and the third communication apparatus.

1. The first communication apparatus is a terminal device, the at least one second communication apparatus is at least one access network device, and the third communication apparatus is a location management device.

2. The first communication apparatus is a terminal device, and both the at least one second communication apparatus and the third communication apparatus are access network devices.

In this implementation, the third communication apparatus may be one of the at least one second communication apparatus. In other words, one of the access network devices positions the terminal device.

3. The first communication apparatus is a terminal device, the at least one second communication apparatus is at least one RSU, and the third communication apparatus is a location management device.

4. The first communication apparatus is a terminal device, and both the at least one second communication apparatus and the third communication apparatus are RSUs.

In this implementation, the third communication apparatus may be one of the at least one second communication apparatus. In other words, one of the RSUs positions the terminal device.

5. The first communication apparatus is an access network device, the at least one second communication apparatus is a terminal device, and the third communication apparatus is a location management device.

6. The first communication apparatus is a terminal device, the at least one second communication apparatus is a terminal device, and the third communication apparatus is a location management device.

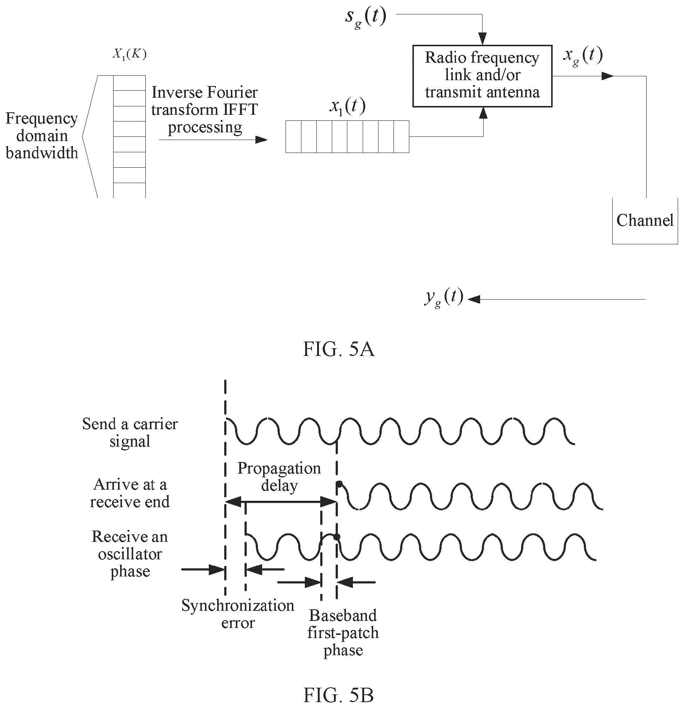

In this application, the following describes, with reference to FIG. 5A, a phase obtained by the first communication apparatus by measuring a positioning reference signal sent by the second communication apparatus.

Refer to FIG. 5A. The second communication apparatus maps a positioning reference signal $X_1(K)$ in frequency domain, and the positioning reference signal $X_1(K)$ is processed through inverse Fourier transform to obtain a time domain signal xi(t). The time domain signal xi(t) and a local oscillator signal (or a carrier signal, or a carrier frequency signal) $s_g(t)$ of the second communication apparatus are processed via a radio frequency link and/or a transmit antenna to obtain radio frequency signals $x_g(t)$. The second communication apparatus transmits the radio frequency signal $x_g(t)$.

After channel propagation, a signal received by the first communication apparatus is $y_g(t)$. The first communication apparatus determines the local oscillator signal (or the carrier signal, or the carrier frequency signal) $s_g(t)$ of the second communication apparatus through the signal $y_g(t)$.

In a possible implementation, as shown in FIG. 5B, a phase obtained by the first communication apparatus by measuring a positioning reference signal sent by the second communication apparatus is a phase difference between a phase obtained by the first communication apparatus by measuring a received local oscillator signal (or a carrier signal, or a carrier frequency signal) $s_g(t)$ of the second communication apparatus and a phase of a local oscillator signal $s_u(t)$ (or a

carrier signal, or a carrier frequency signal) of the first communication apparatus. The local oscillator signal $s_g(t)$ (or the carrier signal, or the carrier frequency signal) of the second communication apparatus is used for carrying the positioning reference signal $X_1(K)$.

In another possible implementation, as shown in FIG. 5B, a phase obtained by the first communication apparatus by measuring a positioning reference signal sent by the second communication apparatus is a phase obtained by the first communication apparatus by measuring a received local oscillator signal $s_g(t)$ (or a carrier signal, or a carrier frequency signal) of the second communication apparatus.

In a phase-based positioning technology, a phase usually needs to be continuously tracked, to improve positioning accuracy. In a phase tracking process, phase continuity needs to be maintained between the first communication apparatus and the second communication apparatus. If phase continuity cannot be maintained, a phase jump or a phase loss may occur, and consequently, positioning accuracy is low. This application provides corresponding technical solutions, to improve positioning accuracy. For details, refer to related descriptions in the following embodiments.

The technical solutions of this application are described below with reference to specific embodiments.

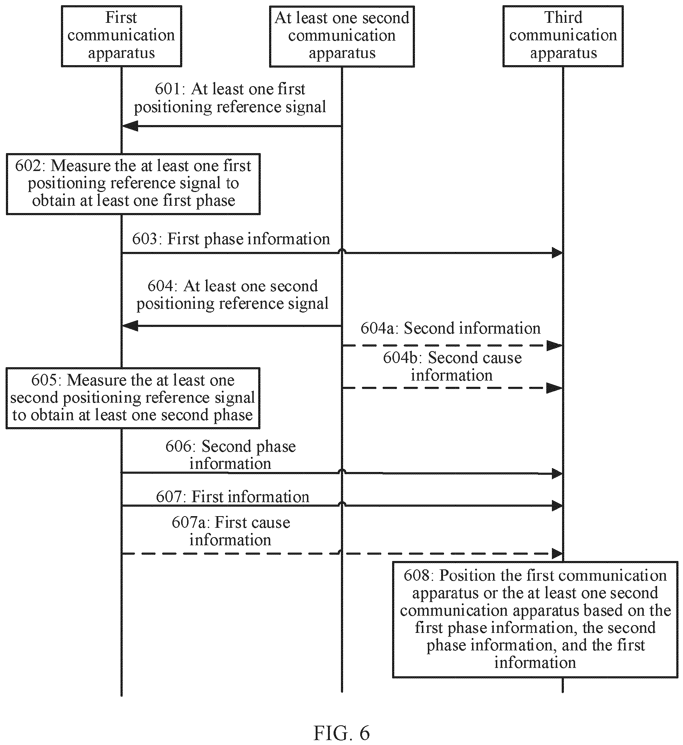

FIG. 6 is a diagram of an embodiment of a communication method according to an embodiment of this application. With reference to FIG. 6, the communication method includes the following steps.

601: At least one second communication apparatus sends at least one first positioning reference signal to a first communication apparatus. Correspondingly, the first communication apparatus receives the at least one first positioning reference signal from the at least one second communication apparatus.

The following describes some possible implementations in which the at least one second communication apparatus sends the at least one first positioning reference signal.

Implementation 1: The at least one second communication apparatus separately sends the first positioning reference signal to the first communication apparatus at a moment 1. Correspondingly, the first communication apparatus receives the first positioning reference signal sent by the at least one second communication apparatus at the moment 1. In other words, the at least one first positioning reference signal sent by the at least one second communication apparatus includes the first positioning reference signal sent by the at least one second communication apparatus to the first communication apparatus at the moment 1.

The first positioning reference signal may be understood as a type of positioning reference signal. In other words, a positioning reference signal sent by the at least one second communication apparatus to the first communication apparatus at the moment 1 may be referred to as the first positioning reference signal.

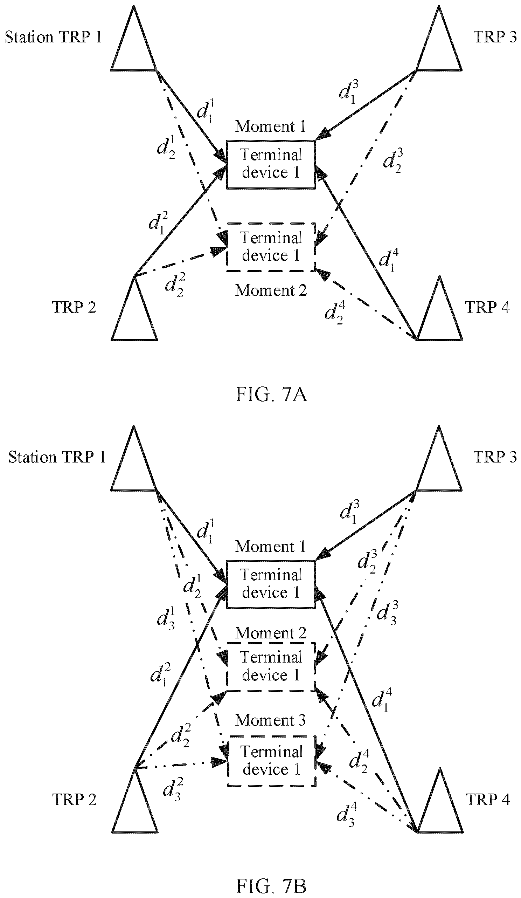

For example, as shown in FIG. 7A, the first communication apparatus is a terminal device, and the at least one second communication apparatus includes a TRP 1, a TRP 2, a TRP 3, and a TRP 4. The TRP 1, the TRP 2, the TRP 3, and the TRP 4 separately send the first positioning reference signal to the terminal device at the moment 1.

Implementation 2: The at least one second communication apparatus separately sends first positioning reference signals to the first communication apparatus at a plurality of moments. Correspondingly, the first communication apparatus receives the first positioning reference signals separately sent by the at least one second communication apparatus at the plurality of moments. In other words, the at least one first positioning reference signal sent by the at least one second communication apparatus includes the first positioning reference signals separately sent by the at least one second communication apparatus at the plurality of moments.

The first positioning reference signal may be understood as a type of positioning reference signal. In other words, positioning reference signals separately sent by the at least one second communication apparatus to the first communication apparatus at the plurality of moments may be referred to as the first positioning reference signals.

For example, as shown in FIG. 7A, the first communication apparatus is a terminal device, and the plurality of second communication apparatuses includes a TRP 1, a TRP 2, a TRP 3, and a TRP 4. The TRP 1, the TRP 2, the TRP 3, and the TRP 4 separately send the first positioning reference signal to the terminal device at a moment 1. The TRP 1, the TRP 2, the TRP 3, and the TRP 4 separately send the first positioning reference signal to the terminal device at a moment 2.

Optionally, the plurality of moments include three or more moments, and time intervals between any two adjacent moments in the plurality of moments may be equal. For example, the moment 1 and the moment 2 are two adjacent moments. The moment 2 and a moment 3 are two adjacent moments. A time interval between the moment 1 and the moment 2 is equal to a time interval between the moment 2 and the moment 3.

602: The first communication apparatus measures the at least one first positioning reference signal to obtain at least one first phase.

For the phase obtained by the first communication apparatus by measuring the positioning reference signal sent by the second communication apparatus, refer to the foregoing related descriptions. Details are not described herein again.

603: The first communication apparatus sends first phase information to a third communication apparatus. Correspondingly, the third communication apparatus receives the first phase information from the first communication apparatus.

The first phase information includes the at least one first phase; or the first phase information is obtained based on the at least one first phase.

The following describes some possible implementations in which the first communication apparatus obtains the first phase information based on the at least one first phase.

1. The at least one second communication apparatus includes a plurality of second communication apparatuses. Specifically, the plurality of second communication apparatuses include a reference communication apparatus and at least one measurement communication apparatus.

In a possible implementation, the first phase information includes a phase difference between a first phase obtained by the first communication apparatus by measuring a first positioning reference signal sent by the reference communication apparatus at a moment 1 and a first phase obtained by the first communication apparatus by measuring a first positioning reference signal sent by the at least one measurement communication apparatus at the moment 1.

For example, the at least one measurement communication apparatus includes N measurement communication apparatuses, where N is an integer greater than or equal to 1. The first phase information includes N first phase differences. Specifically, the first communication apparatus determines the N first phase differences based on the at least one first phase. An $i^{th}$ first phase difference in the N first phase differences is a phase difference between the first phase obtained by the first communication apparatus by measuring the first positioning reference signal sent by the reference communication apparatus at the moment 1 and a first phase obtained by the first communication apparatus by measuring a first positioning reference signal sent by an $i^{th}$ measurement communication apparatus in the N measurement communication apparatuses at the moment 1. i is an integer greater than or equal to 1 and less than or equal to N.

For example, as shown in FIG. 7A, a reference network device is a TRP 1, and N measurement network devices include a TRP 2, a TRP 3, and a TRP 4. The N first phase differences include $\varphi_{21}(t_1)$, $\varphi_{31}(t_1)$, and $\varphi_{41}(t_1)$.

$\varphi_{21}(t_1)$ is a phase difference between a first phase obtained by the terminal device by measuring a first positioning reference signal sent by the TRP 2 at the moment 1 and a first phase obtained by the terminal device by measuring a first positioning reference signal sent by the TRP 1 at the moment 1.

$\varphi_{31}(t_1)$ is a phase difference between a first phase obtained by the terminal device by measuring a first positioning reference signal sent by the TRP 3 at the moment 1 and the first phase obtained by the terminal device by measuring the first positioning reference signal sent by the TRP 1 at the moment 1.

$\varphi_{41}(t_1)$ is a phase difference between a first phase obtained by the terminal device by measuring a first positioning reference signal sent by the TRP 4 at the moment 1 and the first phase obtained by the terminal device by measuring the first positioning reference signal sent by the TRP 1 at the moment 1.

In another possible implementation, the first phase information includes at least one first cumulative phase difference, or at least one first cumulative phase difference rate.

The at least one first cumulative phase difference includes a cumulative amount, in terms of time, of a phase difference between a first phase obtained by the first communication apparatus by measuring a first positioning reference signal sent by the reference communication apparatus and a first phase obtained by the first communication apparatus by measuring a first positioning reference signal sent by the at least one measurement communication apparatus. The at least one first cumulative phase difference rate includes a cumulative amount, in terms of unit time, of a phase difference between a first phase obtained by the first communication apparatus by measuring a first positioning reference signal sent by the reference communication apparatus and a first phase obtained by the first communication apparatus by measuring a first positioning reference signal sent by the at least one measurement communication apparatus.

For example, the at least one measurement communication apparatus includes N measurement communication apparatuses, where N is an integer greater than or equal to 1. The first phase information includes N first cumulative phase differences. An $i^{th}$ first cumulative phase difference in the N first cumulative phase differences is a difference between an $i^{th}$ first phase difference in N first phase differences and an $i^{th}$ second phase difference in N second phase differences. The $i^{th}$ first cumulative phase difference indicates a cumulative amount, in terms of time, of a phase difference between the first phase obtained by the first communication apparatus by measuring the first positioning reference signal sent by the reference communication apparatus and a first phase obtained by the first communication apparatus by measuring a first positioning reference signal sent by an $i^{th}$ measurement communication apparatus.

The $i^{th}$ first phase difference in the N first phase differences is a phase difference between a first phase obtained by the first communication apparatus by measuring a first positioning reference signal sent by the reference communication apparatus at a moment 1 and a first phase obtained by the first communication apparatus by measuring a first positioning reference signal sent by the $i^{th}$ measurement communication apparatus in the N measurement communication apparatuses at the moment 1. The $i^{th}$ second phase difference in the N second phase differences is a phase difference between a first phase obtained by the first communication apparatus by measuring a first positioning reference signal sent by the reference communication apparatus at a moment 2 and a second phase obtained by the first communication apparatus by measuring a first positioning reference signal sent by the $i^{th}$ measurement communication apparatus in the N measurement communication apparatuses at the moment 2.

For example, the at least one measurement communication apparatus includes N measurement communication apparatuses, where N is an integer greater than or equal to 1. The first phase information includes N first cumulative phase difference rates. An $i^{th}$ first cumulative phase difference rate in the N first cumulative phase difference rates is equal to the $i^{th}$ first cumulative phase difference in the N first cumulative phase differences divided by a time interval between the moment 1 and the moment 2. The $i^{th}$ cumulative phase difference rate indicates a cumulative amount, in terms of unit time, of a phase difference between the first phase obtained by the first communication apparatus by measuring the first positioning reference signal sent by the reference communication apparatus and a first phase obtained by the first communication apparatus by measuring a first positioning reference signal sent by an $i^{th}$ measurement communication apparatus.

2. The at least one second communication apparatus includes one or more second communication apparatuses. The following uses one of the second communication apparatuses as an example to describe the first phase information. The same is applied to another second communication apparatus.

Optionally, the first phase information includes a phase difference between first phases obtained by the first communication apparatus by measuring first positioning reference signals sent by the second communication apparatus at a plurality of moments; or the first phase information includes at least one second cumulative phase difference; or the first phase information includes at least one second cumulative phase difference rate.

The at least one second cumulative phase difference includes a cumulative amount, in terms of time, of a phase difference between phases obtained by the first communication apparatus by measuring first positioning reference signals sent by the second communication apparatus at different moments. The at least one second cumulative phase difference rate includes: a cumulative amount, in terms of unit time, of a phase difference between phases obtained by the first communication apparatus by measuring first positioning reference signals sent by the second communication apparatus at different moments.

For example, the first phase information includes P third phase differences. A $j^{th}$ third phase difference in the P third phase differences is a phase difference between a first phase obtained by the first communication apparatus by measuring a first positioning reference signal sent by the second communication apparatus at a $(j+1)^{th}$ moment and a first phase obtained by the first communication apparatus by measuring a first positioning reference signal sent by the second communication apparatus at a $j^{th}$ moment. j is greater than or equal to 1 and less than or equal to P-1, and P is equal to a quantity of moments included in the plurality of moments minus one.

For example, the first phase information includes M second cumulative phase differences or M second cumulative phase difference rates. An $(a+1)^{th}$ second cumulative phase difference in the M second cumulative phase differences is a difference between an $(a+2)^{th}$ third phase difference in the P third phase differences and an $(a+1)^{th}$ third phase difference in the P third phase differences. An $(a+1)^{th}$ second cumulative phase difference rate in the M second cumulative phase difference rates is equal to the $(a+1)^{th}$ second cumulative phase difference divided by a time interval between an $(a+2)^{th}$ moment and an $a^{th}$ moment. a is an integer greater than or equal to 1 and less than or equal to P, and M is greater than or equal to 1 and less than or equal to P-1.

The $(a+2)^{th}$ third phase difference is a phase difference between a first phase obtained by the first communication apparatus by measuring a first positioning reference signal sent by the second communication apparatus at the $(a+2)^{th}$ moment and a first phase obtained by the first communication apparatus by measuring a first positioning reference signal sent by the second communication apparatus at an $(a+1)^{th}$ moment. The $(a+1)^{th}$ third phase difference is a phase difference between a first phase obtained by the first communication apparatus by measuring the first positioning reference signal sent by the second communication apparatus at the $(a+1)^{th}$ moment and a first phase obtained by the first communication apparatus by measuring a first positioning reference signal sent by the second communication apparatus at the $a^{th}$ moment.

604: The at least one second communication apparatus sends at least one second positioning reference signal to the first communication apparatus. Correspondingly, the first communication apparatus receives the at least one second positioning reference signal from the at least one second communication apparatus.

The following describes some possible implementations of resources used for carrying the at least one first positioning reference signal and the second positioning reference signal.

Implementation 1: The at least one first positioning reference signal and the at least one second positioning reference signal may be positioning reference signals sent by the second communication apparatus at two adjacent moments on a same reference signal resource or in a same reference signal resource set.

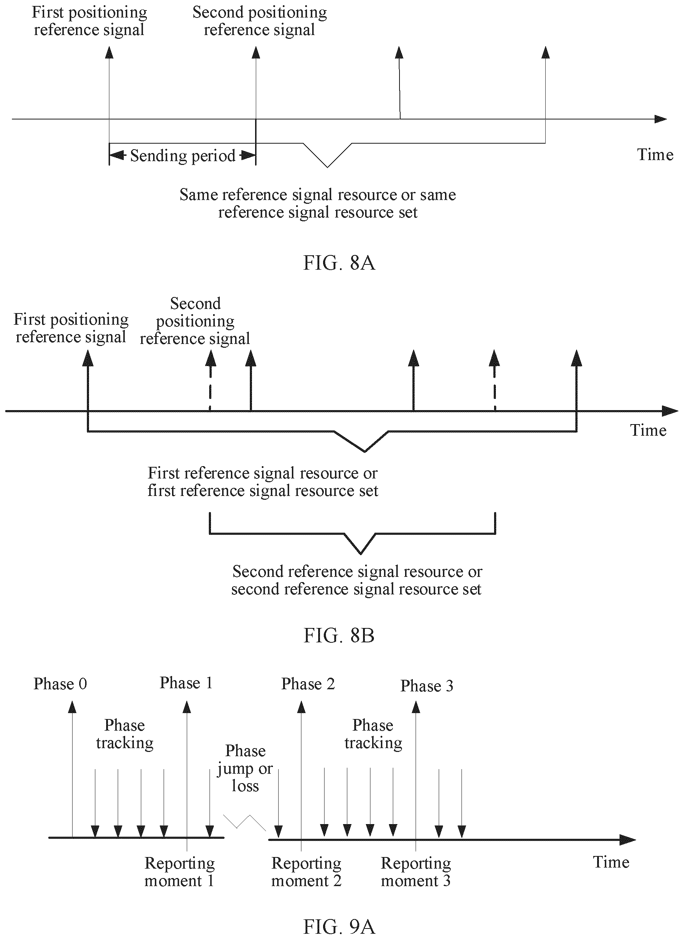

For example, as shown in FIG. 8A, the at least one first positioning reference signal and the at least one second positioning reference signal may be positioning reference signals sent at different moments on a same reference signal resource or in a same reference signal resource set. For example, the reference signal resource is a positioning reference signal (positioning reference signal, PRS) resource or a sounding reference signal (sounding reference signal, SRS) resource. The reference signal resource set is a PRS resource set or an SRS resource set.

Implementation 2: The at least one first positioning reference signal is a positioning reference signal sent at one or more moments on a first reference signal resource or in a first reference signal resource set, and the at least one second positioning reference signal is a positioning reference signal sent at one or more moments on a second reference signal resource or a second reference signal resource set.

For example, as shown in FIG. 8B, the at least one first positioning reference signal and the at least one second positioning reference signal may be positioning reference signals sent at different moments on different reference signal resources or in different reference signal resource sets. For examples of the reference signal resource and the reference signal resource set, refer to the foregoing related descriptions.

605: The first communication apparatus measures the at least one second positioning reference signal to obtain at least one second phase.

606: The first communication apparatus sends second phase information to the third communication apparatus. Correspondingly, the third communication apparatus receives the second phase information from the first communication apparatus.

Step 604 to step 606 are similar to step 601 to step 603 in the embodiment shown in FIG. 6. For details, refer to related descriptions of step 601 to step 603 in the embodiment shown in FIG. 6.

The second phase information includes the at least one second phase; or the second phase information is determined based on the at least one second phase.

Optionally, the first communication apparatus is a first terminal device, and the at least one second communication apparatus is at least one RSU or at least one second terminal device. Both the at least one first positioning reference signal and the at least one second positioning reference signal are sidelink positioning reference signals (sidelink positioning reference signal, SL-PRS).

Optionally, if the first communication apparatus is a terminal device, and the at least one second communication apparatus is at least one access network device, both the at least one first positioning reference signal and the at least one second positioning reference signal are downlink positioning reference signals.

Optionally, if the first communication apparatus is an access network device, and the at least one second communication apparatus is a terminal device, both the at least one first positioning reference signal and the at least one second positioning reference signal are SRSs.

It should be noted that the first communication apparatus may report both the first phase information and the second phase information, or may separately report the first phase information and the second phase information. This is not specifically limited in this application.

It should be noted that, optionally, the first phase information and the second phase information may be phase information separately obtained by the first communication apparatus through measurement at two different moments. For example, the first phase information is obtained by the first communication apparatus by measuring the at least one first positioning reference signal at a moment 1. The second phase information is obtained by the first communication apparatus by measuring the at least one second positioning reference signal at a moment 2. In other words, the first phase information and the second phase information are separately obtained by the first communication apparatus by measuring positioning reference signals that are of the at least one second communication apparatus and that are received at two different moments. For example, the first communication apparatus receives at least one first positioning reference signal at a moment 1, and measures the at least one first positioning reference signal to obtain the first phase information. The second communication apparatus receives the at least one second positioning reference signal at a moment 2, and measures the at least one second positioning reference signal to obtain the second phase information.

Optionally, the first phase information is sent by the first communication apparatus to the second communication apparatus at a first moment. The second phase information is sent by the first communication apparatus to the third communication apparatus at a second moment. The first moment is one or more moments before the second moment. In other words, the first phase information is phase information reported by the first communication apparatus to the third communication apparatus at a moment before the first moment.

The following describes some possible implementations in which the first communication apparatus obtains the second phase information based on the at least one second phase.

1. The at least one second communication apparatus includes a plurality of second communication apparatuses. Specifically, the plurality of second communication apparatuses include a reference communication apparatus and at least one measurement communication apparatus.

Optionally, the at least one second communication apparatus sends at least one second positioning reference signal at a moment 2. The second phase information includes a phase difference between a second phase obtained by the first communication apparatus by measuring a second positioning reference signal sent by the reference communication apparatus at the moment 2 and a second phase obtained by measuring a first positioning reference signal sent by the at least one measurement communication apparatus at the moment 2.

For example, the at least one measurement communication apparatus includes N measurement communication apparatuses, where N is an integer greater than or equal to 1. The second phase information includes N fourth phase differences. Specifically, the first communication apparatus determines the N fourth phase differences based on the at least one second phase. An $i^{th}$ fourth phase difference in the N fourth phase differences is a phase difference between the second phase obtained by the first communication apparatus by measuring the second positioning reference signal sent by the reference communication apparatus at the moment 2 and a second phase obtained by the first communication apparatus by measuring a second positioning reference signal sent by an $i^{th}$ measurement communication apparatus in the N measurement communication apparatuses at the moment 2. i is an integer greater than or equal to 1 and less than or equal to N.

For example, as shown in FIG. 7A, a reference network device is a TRP 1, and the N measurement network devices include a TRP 2, a TRP 3, and a TRP 4. The N second phase differences include $\varphi_{21}(t_{10})$, $\varphi_{31}(t_{10})$. and $\varphi_{41}(t_{10})$.

$\varphi_{21}(t_{10})$ is a phase difference between a second phase obtained by the terminal device by measuring a second positioning reference signal sent by the TRP 2 at the moment 2 and a second phase obtained by the terminal device by measuring a second positioning reference signal sent by the TRP 1 at the moment 2.

$\varphi_{31}(t_{10})$ is a phase difference between a second phase obtained by the terminal device by measuring a second positioning reference signal sent by the TRP 3 at the moment 2 and the second phase obtained by the terminal device by measuring the second positioning reference signal sent by the TRP 1 at the moment 2.

$\varphi_{41}(t_{10})$ is a phase difference between a second phase obtained by the terminal device by measuring a second positioning reference signal sent by the TRP 4 at the moment 2 and the second phase obtained by the terminal device by measuring the second positioning reference signal sent by the TRP 1 at the moment 2.

Optionally, the at least one second communication apparatus sends the at least one second positioning reference signal to the first communication apparatus at a plurality of moments. The second phase information includes: at least one third cumulative phase difference; or at least one third cumulative phase difference rate.

The at least one third cumulative phase difference includes a cumulative amount, in terms of time, of a phase difference between a second phase obtained by the first communication apparatus by measuring a second positioning reference signal sent by the reference communication apparatus and a second phase obtained by the first communication apparatus by measuring a second positioning reference signal sent by the at least one measurement communication apparatus. The at least one third cumulative phase difference rate includes a cumulative amount, in terms of unit time, of a phase difference between a second phase obtained by the first communication apparatus by measuring a second positioning reference signal sent by the reference communication apparatus and a second phase obtained by the first communication apparatus by measuring a second positioning reference signal sent by the at least one measurement communication apparatus.

For example, the at least one measurement communication apparatus includes N measurement communication apparatuses, where N is an integer greater than or equal to 1. The second phase information includes N third cumulative phase differences. An $i^{th}$ third cumulative phase difference in the N third cumulative phase differences is a difference between an $i^{th}$ fifth phase difference in N fifth phase differences and an $i^{th}$ sixth phase difference in N sixth phase differences. The $i^{th}$ third cumulative phase difference indicates a cumulative amount, in terms of time, of a phase difference between the second phase obtained by the first communication apparatus by measuring the second positioning reference signal sent by the reference communication apparatus and a second phase obtained by the first communication apparatus by measuring a second positioning reference signal sent by an $i^{th}$ measurement communication apparatus.

The $i^{th}$ fifth phase difference in the N fifth phase differences is a phase difference between a second phase obtained by the first communication apparatus by measuring a second positioning reference signal sent by the reference communication apparatus at a moment 3 and a second phase obtained by the first communication apparatus by measuring a second positioning reference signal sent by the $i^{th}$ measurement communication apparatus in the N measurement communication apparatuses at the moment 3. The $i^{th}$ sixth phase difference in the N sixth phase differences is a phase difference between a second phase obtained by the first communication apparatus by measuring a second positioning reference signal sent by the reference communication apparatus at a moment 4 and a second phase obtained by the first communication apparatus by measuring a second positioning reference signal sent by the $i^{th}$ measurement communication apparatus in the N measurement communication apparatuses at the moment 4.

For example, the at least one measurement communication apparatus includes N measurement communication apparatuses, where N is an integer greater than or equal to 1. The first phase information includes N third cumulative phase difference rates. An $i^{th}$ third cumulative phase difference rate in the N third cumulative phase difference rates is equal to the $i^{th}$ third cumulative phase difference in the N third cumulative phase differences divided by a time interval between the moment 3 and the moment 4.

2. The at least one second communication apparatus includes one or more second communication apparatuses. The following uses one of the second communication apparatuses as an example to describe the second phase information. The same is applied to another second communication apparatus.

Optionally, the second communication apparatus sends the second positioning reference signal to the first communication apparatus at a plurality of moments. The second phase information includes a phase difference between second phases obtained by the first communication apparatus by measuring second positioning reference signals sent by the second communication apparatus at a plurality of moments; or the second phase information includes at least one fourth cumulative phase difference; or the second phase information includes at least one fourth cumulative phase difference rate.

The at least one fourth cumulative phase difference includes a cumulative amount, in terms of time, of a phase difference between second phases obtained by the first communication apparatus by measuring second positioning reference signals sent by the second communication apparatus at different moments. The at least one fourth cumulative phase difference rate includes: a cumulative amount, in terms of unit time, of a phase difference between second phases obtained by the first communication apparatus by measuring second positioning reference signals sent by the second communication apparatus at different moments.

For example, the second phase information includes P seventh phase differences. An $i^{th}$ seventh phase difference in the P seventh phase differences is a phase difference between a second phase obtained by the first communication apparatus by measuring a second positioning reference signal sent by the second communication apparatus at an $(i+1)^{th}$ moment and a second phase obtained by the first communication apparatus by measuring a second positioning reference signal sent by the second communication apparatus at an $i^{th}$ moment. i is greater than or equal to 1 and less than or equal to P-1, and P is equal to a quantity of moments included in the plurality of moments minus one.

For example, the second phase information includes M fourth cumulative phase differences or M fourth cumulative phase difference rates. A $(b+1)^{th}$ fourth cumulative phase difference in the M fourth cumulative phase differences is a difference between a $(b+2)^{th}$ seventh phase difference in the P seventh phase differences and a $(b+1)^{th}$ seventh phase difference in the P seventh phase differences. A $(b+1)^{th}$ fourth cumulative phase difference rate in the M fourth cumulative phase difference rates is equal to the $(b+1)^{th}$ fourth cumulative phase difference divided by a time interval between a $(b+2)^{th}$ moment and a $b^{th}$ moment. b is an integer greater than or equal to 1 and less than or equal to P, and M is greater than or equal to 1 and less than or equal to P-1.

The $(b+2)^{th}$ seventh phase difference is a phase difference between a second phase obtained by the first communication apparatus by measuring a second positioning reference signal sent by the second communication apparatus at the $(b+2)^{th}$ moment and a second phase obtained by the first communication apparatus by measuring a second positioning reference signal sent by the second communication apparatus at a $(b+1)^{th}$ moment. The $(b+1)^{th}$ seventh phase difference is a phase difference between a second phase obtained by the first communication apparatus by measuring the second positioning reference signal sent by the second communication apparatus at the $(b+1)^{th}$ moment and a second phase obtained by the first communication apparatus by measuring a second positioning reference signal sent by the second communication apparatus at the $b^{th}$ moment.

607: The first communication apparatus sends first information to the third communication apparatus. Correspondingly, the third communication apparatus receives the first information from the first communication apparatus.

The first information is information about phase correlation between the first phase information and the second phase information.

The information about phase correlation between the first phase information and the second phase information specifically includes: whether a phase jump, a phase loss, a phase jitter, or the like occurs in a time interval between a moment at which the first communication apparatus measures the at least one first positioning reference signal and a moment at which the first communication apparatus measures the at least one second positioning reference signal.

If the phase jump, the phase loss, or the phase jitter occurs on the first communication apparatus in the time interval, the first phase information and the second phase information are not correlated. In other words, the first communication apparatus cannot continuously track a phase by using the at least one first positioning reference signal and the at least one second positioning reference signal. If the phase jump, the phase loss, or the phase jitter does not occur during measurement on the first communication apparatus in the time interval, the first phase information and the second phase information are correlated. In other words, the first communication apparatus continuously tracks a phase by using the at least one first positioning reference signal and the at least one second positioning reference signal.

For example, as shown in FIG. 9A, the first communication apparatus measures the at least one first positioning reference signal to obtain a phase 1, and reports the phase 1. Then, a phase jump or a phase loss occurs in a process in which the first communication apparatus performs phase tracking. As a result, the first communication apparatus cannot maintain continuity of phase tracking. The first communication apparatus measures the at least one second positioning reference signal to obtain a phase 2, and reports the phase 2. Therefore, the phase 1 and the phase 2 are not correlated, or continuity between the phase 1 and the phase 2 is not maintained.

For example, the first phase obtained by the first communication apparatus by measuring the first positioning reference signal is 10°, and the second phase obtained by the first communication apparatus by measuring the second positioning reference signal is 40°. Actually, the second phase is 20°. However, due to the phase jump, the second phase measured by the first communication apparatus is 40°. Therefore, due to the phase jump, the first communication apparatus cannot track an actual change of the phase, thereby affecting positioning accuracy of the third communication apparatus.

The following describes some possible causes of the phase jump (also referred to as the phase loss or the phase jitter) that occurs on the first communication apparatus in the time interval.

Cause 1: A receive antenna used by the first communication apparatus to receive the at least one first positioning reference signal is inconsistent with a receive antenna used by the first communication apparatus to receive the at least one second positioning reference signal.

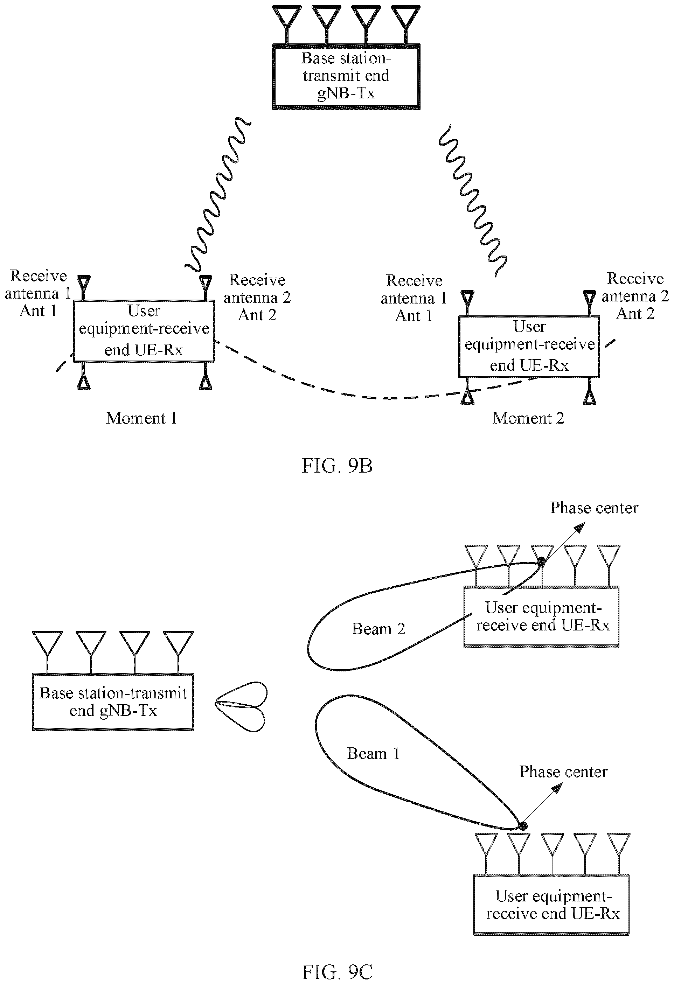

For example, as shown in FIG. 9B, the first communication apparatus is a terminal device, and the second communication apparatus is a base station. The terminal device is equipped with two non-coherent receive antennas to implement omnidirectional signal receiving. In addition, the terminal device always selects a receive antenna with strongest received signal energy to perform phase estimation. In a phase positioning process, a phase usually needs to be continuously tracked in terms of time, to improve positioning accuracy. At a moment 1, received signal energy of a receive antenna 2 of the terminal device is strongest. Therefore, the terminal device selects the receive antenna 2 to perform phase measurement. As time changes, a location of the terminal device moves. At a moment 2, a location of the terminal device relative to the base station also changes. In this case, received signal energy of a receive antenna 1 of the terminal device is strongest. Therefore, the terminal device selects the receive antenna 1 to perform phase measurement. Because a location of the receive antenna 1 and a location of the receive antenna 2 are different, a phase jump caused by different locations of the receive antennas is introduced when the terminal device switches the receive antenna. For this case, if the first communication apparatus does not indicate the first information to the third communication apparatus, the third communication apparatus considers that a phase change caused by the different locations of the receive antennas is caused by motion of the terminal device, thereby reducing positioning accuracy. Therefore, in this application, when receive antenna switching occurs on the first communication apparatus in the time interval, the first communication apparatus may consider that the first phase information and the second phase information are not correlated. The first communication apparatus may send the first information to the third communication apparatus, thereby improving positioning accuracy.

In this case, that the first phase information and the second phase information are not correlated is caused by transmit antenna switching in a process in which the first communication apparatus receives the at least one first positioning reference signal and the at least one second positioning reference signal. Specifically, a phase deviation introduced by the transmit antenna between the first phase information and the second phase information may be compensable. The third communication apparatus may compensate for the second phase information based on a location of a transmit antenna 1 and a location of a transmit antenna 2.

Cause 2: A radio frequency initial phase of a radio frequency link used by the first communication apparatus to receive the at least one first positioning reference signal is inconsistent with a radio frequency initial phase of a radio frequency link used by the first communication apparatus to receive the at least one second positioning reference signal.

For example, the first communication apparatus uses a same radio frequency link in the time interval, but radio frequency initial phases of the radio frequency link are different at different moments due to radio frequency shutdown or hardware restart occurring on the first communication apparatus in the time interval, or radio frequency initial phases of the radio frequency link are different at different moments due to an external environment. Therefore, the radio frequency initial phase of the radio frequency link used by the first communication apparatus to receive the at least one first positioning reference signal is inconsistent with the radio frequency initial phase of the radio frequency link used by the first communication apparatus to receive the at least one second positioning reference signal. For another example, receive antenna switching occurs on the first communication apparatus in the time interval, and different receive antennas are connected to different radio frequency links. Due to a hardware cause, the different radio frequency links have different radio frequency initial phases. Therefore, the radio frequency initial phase of the radio frequency link used by the first communication apparatus to receive the at least one first positioning reference signal is inconsistent with the radio frequency initial phase of the radio frequency link used by the first communication apparatus to receive the at least one second positioning reference signal. A phase jump is caused by the different radio frequency initial phases of the radio frequency link. For this case, if the first communication apparatus does not indicate the first information to the third communication apparatus, the third communication apparatus considers that a phase change caused by the different radio frequency initial phases is caused by motion of the terminal device, thereby reducing positioning accuracy. Therefore, in this application, when the radio frequency initial phase of the radio frequency link used by the first communication apparatus to receive the at least one first positioning reference signal is inconsistent with the radio frequency initial phase of the radio frequency link used by the first communication apparatus to receive the at least one second positioning reference signal, the first communication apparatus may consider that the first phase information and the second phase information are not correlated. The first communication apparatus may indicate, to the third communication apparatus, that the first phase information and the second phase information are not correlated, thereby improving positioning accuracy.

It may be understood that a cause why the first phase information and the second phase information are not correlated is that a phase error introduced by the radio frequency link and/or the transmit antenna used by the first communication apparatus to receive the at least one first positioning reference signal is inconsistent with a phase error introduced by the radio frequency link and/or the transmit antenna used by the first communication apparatus to receive the at least one second positioning reference signal. In other words, a phase error group (phase error group, PEG) of the first communication apparatus changes. The phase error is not compensable.

Cause 3: A receive beam used by the first communication apparatus to receive the at least one first positioning reference signal is inconsistent with a receive beam used by the first communication apparatus to receive the at least one second positioning reference signal.

For example, as shown in FIG. 9C, the first communication apparatus is a terminal device, and the at least one second communication apparatus is a base station. The base station sends the first positioning reference signal and the second positioning reference signal to the terminal device in a form of beam. The terminal device is equipped with a plurality of coherent receive antennas. The terminal device may receive, in a form of beam, the positioning reference signal sent by the base station, and can estimate a direction of arrival of the received signal. When adjusting the receive beam, the terminal device always receives the positioning reference signal of the base station in a direction with strongest energy of the receive beam or via a strongest receive beam, and performs phase measurement.

Because a phase needs to be continuously tracked during phase positioning, in a tracking process, because the terminal device moves, a relative location relationship between the terminal device and the base station changes, and the receive beam of the terminal device also changes. For example, at a moment 1, the strongest beam used by the terminal device to receive the positioning reference signal is a receive beam 1. Therefore, the terminal device receives, at the moment 1 via the receive beam 1, the at least one first positioning reference signal sent by the base station. At the moment 1, the terminal device moves to another location. In this case, received signal energy of the receive beam 1 is no longer strongest in that of all receive beams. Received signal energy of a receive beam 2 is strongest in received signal energy of all the receive beams. Therefore, the terminal device may receive, at a moment 2 via the receive beam 2, the at least one second positioning reference signal sent by the base station, and perform phase measurement.

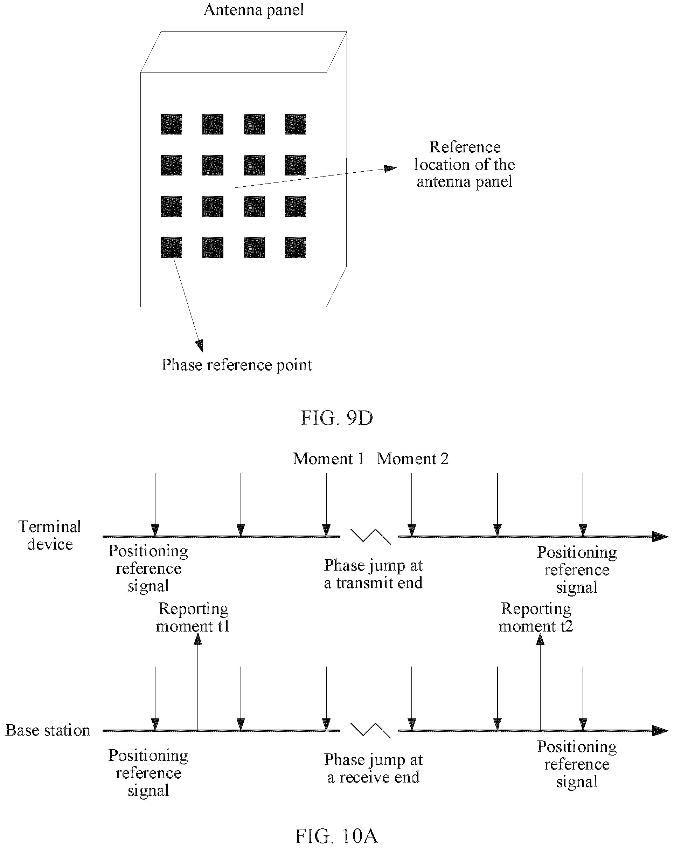

Directions of the terminal device relative to the base station are different at different locations. As shown in FIG. 9C, a phase center at which the terminal device performs phase measurement also has a directional offset, and consequently, a phase obtained through measurement also has a corresponding phase deviation. The phase deviation is related to an azimuth between the base station and the terminal device. In addition, a plurality of receive antennas of the terminal device are located at different locations. When the plurality of receive antennas are combined, an equivalent phase center of the terminal device is a phase reference point. For example, as shown in FIG. 9D, the phase reference point is a location of a first receive antenna on an antenna panel of the terminal device. In a positioning process, the third communication apparatus uses a central location of the antenna panel as a reference location of the antenna, and there is a deviation between the central location of the antenna panel and the phase reference point. Generally, compensation needs to be performed on the phase reference point of the antenna. For example, as shown in FIG. 9D, the reference location of the antenna is the central location of the antenna panel, and there is a distance deviation between the central location and the location of the first receive antenna. Therefore, if there is the distance deviation between the phase reference point and the reference location of the antenna, there is a phase deviation between phases obtained by the terminal device through measurement. Further, positioning accuracy is affected due to the phase deviation.

For this case, if the first communication apparatus does not indicate the first information to the third communication apparatus, the third communication apparatus considers that a phase change caused by receive beam switching is caused by motion of the terminal device, thereby reducing positioning accuracy. Therefore, in this application, when the receive beam used by the first communication apparatus to receive the at least one first positioning reference signal is inconsistent with the receive beam used by the first communication apparatus to receive the at least one second positioning reference signal, the first communication apparatus may consider that the first phase information and the second phase information are not correlated. The first communication apparatus may indicate, to the third communication apparatus, that the first phase information and the second phase information are not correlated, thereby improving positioning accuracy. When the receive beam used by the first communication apparatus to receive the at least one first positioning reference signal is consistent with the receive beam used by the first communication apparatus to receive the at least one second positioning reference signal, the first communication apparatus may consider that the first phase information and the second phase information are correlated, and the first communication apparatus may indicate, to the third communication apparatus, that the first phase information and the second phase information are correlated.

Cause 4: A phase measurement failure occurs in a process in which the first communication apparatus measures the at least one second positioning reference signal.

In the cause 4, a phase jump or loss is caused due to the phase measurement failure, that is, the first communication apparatus cannot continuously track a phase. Therefore, when the phase measurement failure occurs in a process in which the first communication apparatus measures the at least second positioning reference signal, the first communication apparatus may consider that the first phase information and the second phase information are not correlated. The first communication apparatus may indicate, to the third communication apparatus, that the first phase information and the second phase information are not correlated, thereby improving positioning accuracy.

Optionally, correlation may also be referred to as consistency or continuity. The following related descriptions may be replaced with each other. This is not specifically limited in this application.

The following describes some possible implementations of the first information.

1. The first information is first indication information. The first indication information indicates whether the first phase information and the second phase information are correlated.

For example, when a value of the first indication information is "1", it indicates that the first phase information and the second phase information are correlated. When a value of the first indication information is "0", it indicates that the first phase information and the second phase information are not correlated.

For example, when a value of the first indication information is "true (true)", it indicates that the first phase information and the second phase information are correlated. When a value of the first indication information is "false (false)", it indicates that the first phase information and the second phase information are not correlated.

For example, when a value of the first indication information is "yes", it indicates that the first phase information and the second phase information are correlated. When a value of the first indication information is "no", it indicates that the first phase information and the second phase information are not correlated.

2. The first information is information about a second label correlated with the second phase information. If the second label correlated with the second phase information is the same as a first label correlated with the first phase information, it indicates that the first phase information and the second phase information are correlated; or if the second label correlated with the second phase information is different from the first label correlated with the first phase information, it indicates that the first phase information and the second phase information are not correlated.

The following describes two possible implementations of the first label and the second label.

1. The first label is a first time label correlated with the first phase information, and the second label is a second time label correlated with the second phase information.

Specifically, if the first phase information and the second phase information are correlated, the first phase information and the second phase information may be correlated with a same time label. If the first phase information and the second phase information are not correlated, the first phase information and the second phase information are correlated with different time labels. Therefore, the third communication apparatus determines correlation between the first phase information and the second phase information by using the time label correlated with the first phase information and the time label correlated with the second phase information.

2. The first label is a first angle label correlated with the first phase information, and the second label is a second angle label correlated with the second phase information. Alternatively, the first label is a first beam label correlated with the first phase information, and the second label is a second beam label correlated with the second phase information.

In a possible implementation, the first angle label identifies an angle of arrival at which the at least one first positioning reference signal arrives at the first communication apparatus, and the second angle label identifies an angle of arrival at which the at least one second positioning reference signal arrives at the first communication apparatus.

Each angle label corresponds to a range of an angle of arrival. Each beam label corresponds to a direction range of a receive beam.

If the first angle label is the same as the second angle label, the angle of arrival at which the at least one first positioning reference signal arrives at the first communication apparatus is approximately considered to be the same as the angle of arrival at which the at least one second positioning reference signal arrives at the first communication apparatus. In this case, the first phase information and the second phase information are correlated.

For example, Table 1 shows a correspondence between an angle label and an angle of arrival. A range of an angle of arrival corresponding to an angle label 1 is 10° to 20°. A range of an angle of arrival corresponding to an angle label 2 is 20° to 30°.

**Table 1**

| Angle label | Angle of arrival |
|---|---|
| Angle label 1 | 10° to 20° |
| Angle label 2 | 20° to 30° |
| Angle label 3 | 30° to 40° |

For example, in the scenario described in the foregoing cause 3, if the first angle label is the same as the second angle label, it may be understood that the first phase information and the second phase information are correlated. If the first angle label is different from the second angle label, it may be understood that the first phase information and the second phase information are not correlated. Further, the third communication apparatus may perform phase deviation compensation on the first phase information based on an angle of arrival corresponding to the first angle label. Alternatively, the third communication apparatus may perform phase deviation compensation on the second phase information based on an angle of arrival corresponding to the second angle label.

In another possible implementation, each angle label corresponds to one phase deviation. If different pieces of phase information are correlated with a same angle label, it indicates that the pieces of phase information are correlated.

For example, Table 2 shows a correspondence between an angle label and a phase deviation.

**Table 2**

| Angle label | Phase deviation corresponding to the angle label |
|---|---|
| Angle label 1 | First phase deviation |
| Angle label 2 | Second phase deviation |
| Angle label 3 | Third phase deviation |

For example, in the scenario described in the foregoing cause 3, if the first angle label is the same as the second angle label, it may be understood that the first phase information and the second phase information are correlated. If the first angle label is different from the second angle label, it may be understood that the first phase information and the second phase information are not correlated. Further, the third communication apparatus may compensate for the first phase information based on a phase deviation corresponding to the first angle label. Alternatively, the third communication apparatus may compensate for the second phase information based on a phase deviation corresponding to the second angle label.

The first beam label identifies a receive beam used by the first communication apparatus to receive the at least one first positioning reference signal. The second beam label identifies a receive beam used by the first communication apparatus to receive the at least one second positioning reference signal.

If the first beam label is the same as the second beam label, a direction of the receive beam used by the first communication apparatus to receive the at least one first positioning reference signal may be approximately considered to be the same as a direction of the receive beam used by the first communication apparatus to receive the at least one second positioning reference signal. In this case, the first phase information and the second phase information are correlated.

For example, Table 3 shows a correspondence between a beam label and a direction of a receive beam. A range of an angle of arrival corresponding to a beam label 1 is 10° to 20°. A range of an angle of arrival corresponding to a beam label 2 is 20° to 30°.

**Table 3**

| Beam label | Direction of a receive beam |
|---|---|
| Beam label 1 | 10° to 20° |
| Beam label 2 | 20° to 30° |
| Beam label 3 | 30° to 40° |

It should be noted that, optionally, in a digital radio frequency architecture, the first communication apparatus may report the first angle label and the second angle label. In an analog radio frequency architecture, the first communication apparatus may report the first beam label and the second beam label.

3. The first information includes information about an angle of arrival at which the at least one second positioning reference signal arrives at the first communication apparatus, or beam information of a receive beam used by the first communication apparatus to receive the at least one second positioning reference signal.

The beam information includes at least one of the following: a beam direction and an index of the receive beam.

In this implementation, the third communication apparatus may obtain information about an angle of arrival at which the at least one first positioning reference signal arrives at the first communication apparatus. Alternatively, the third communication apparatus obtains beam information of a receive beam used by the first communication apparatus to receive the at least one second positioning reference signal. The third communication apparatus may determine, based on the information about the angle of arrival at which the at least one second positioning reference signal arrives at the first communication apparatus and the information about the angle of arrival at which the at least one first positioning reference signal arrives at the first communication apparatus, whether the first phase information and the second phase information are correlated. Alternatively, the third communication apparatus may determine, based on the beam information of the receive beam used by the first communication apparatus to receive the at least one second positioning reference signal and the beam information of the receive beam used by the first communication apparatus to receive the at least one first positioning reference signal, whether the first phase information and the second phase information are correlated.

Optionally, the first information includes consistency assistance information, and the consistency assistance information assists the third communication apparatus in determining correlation between the first phase information and the second phase information. The consistency assistance information may be the information about the angle of arrival, the beam information, or other information used for assisting the third communication apparatus in determining correlation between the first phase information and the second phase information. This is not specifically limited in this application.

For example, in a digital radio frequency architecture, the third communication apparatus obtains an angle of arrival 1 at which the at least one first positioning reference signal arrives at the first communication apparatus and an angle of arrival 2 at which the at least one second positioning reference signal arrives at the first communication apparatus. If the angle of arrival 1 is the same as the angle of arrival 2 or a difference between the angle of arrival 1 and the angle of arrival 2 is less than or equal to a specific threshold, it indicates that the first phase information and the second phase information are correlated. If the difference between the angle of arrival 1 and the angle of arrival 2 is greater than the specific threshold, it indicates that the first phase information and the second phase information are not correlated.

For example, in an analog radio frequency architecture, the third communication apparatus obtains a direction 1 of the receive beam used by the first communication apparatus to receive the at least one first positioning reference signal and a direction 2 of the receive beam used by the first communication apparatus to receive the at least one second positioning reference signal. If the direction 1 is the same as the direction 2 or an angle difference between the direction 1 and the direction 2 is less than or equal to a specific threshold, it indicates that the first phase information and the second phase information are correlated. If the angle difference between the direction 1 and the direction 2 is greater than the specific threshold, it indicates that the first phase information and the second phase information are not correlated.

4. The first information includes third cause information. The third cause information indicates whether the first phase information and the second phase information are correlated.

The following describes some possible implementations of the third cause information.

1. The third cause information includes: information about whether radio frequency shutdown occurs on the first communication apparatus, or information about whether hardware restart occurs on the first communication apparatus.

In this implementation, for details, refer to related description of the foregoing cause 2. If the third cause information includes information indicating that radio frequency shutdown or hardware restart occurs on the first communication apparatus, it indicates that the first phase information and the second phase information are correlated. If the third cause information includes information indicating that radio frequency shutdown or hardware restart does not occur on the first communication apparatus, it indicates that the first phase information and the second phase information are not correlated.

2. The third cause information includes information about whether receive antenna switching occurs on the first communication apparatus.

In this implementation, for details, refer to related description of the foregoing cause 1. If the third cause information includes information indicating that receive antenna switching occurs on the first communication apparatus, it indicates that the first phase information and the second phase information are correlated. If the third cause information includes information indicating that receive antenna switching does not occur on the first communication apparatus, it indicates that the first phase information and the second phase information are not correlated.

3. The third cause information includes information about whether receive beam switching occurs on the first communication apparatus.

In this implementation, for details, refer to related description of the foregoing cause 3. If the third cause information includes information indicating that receive beam switching occurs on the first communication apparatus, it indicates that the first phase information and the second phase information are correlated. If the third cause information includes information indicating that receive beam switching does not occur on the first communication apparatus, it indicates that the first phase information and the second phase information are not correlated.

4. The third cause information includes information about whether a measurement failure occurs on the first communication apparatus.

In this implementation, for details, refer to related description of the foregoing cause 4. If the third cause information includes information indicating that the measurement failure occurs on the first communication apparatus, it indicates that the first phase information and the second phase information are correlated. If the third cause information includes information indicating that the measurement failure does not occur on the first communication apparatus, it indicates that the first phase information and the second phase information are not correlated.

608: The third communication apparatus positions the first communication apparatus based on the first phase information, the second phase information, and the first information. Alternatively, the third communication apparatus positions the at least one second communication apparatus based on the first phase information, the second phase information, and the first information.

In a possible implementation, if the first communication apparatus is a positioning object, the third communication apparatus positions the first communication apparatus based on the first phase information, the second phase information, the first information, and the second information. For example, the first communication apparatus is a terminal device, and the at least one second communication apparatus is at least one access network device.

In this implementation, the third communication apparatus determines, based on the first information, whether the first phase information and the second phase information are correlated. If the first phase information and the second phase information are correlated, the third communication apparatus may position the first communication apparatus based on both the first phase information and the second phase information. If the first phase information and the second phase information are not correlated, the third communication apparatus may position the first communication apparatus based on the first phase information only, and/or the third communication apparatus positions the first communication apparatus based on the second phase information only.

For example, the first information includes information about an angle of arrival at which the at least one second positioning reference signal arrives at the first communication apparatus, or beam index or direction information of a receive beam used by the first communication apparatus to receive the at least one second positioning reference signal. The third communication apparatus may further perform phase deviation compensation on the second phase information based on the first information.

In another possible implementation, if the at least one second communication apparatus is a positioning object, the third communication apparatus positions the at least one second communication apparatus based on the first phase information, the second phase information, and the first information. For example, the at least one second communication apparatus is a terminal device, and the first communication apparatus is a base station.

In this implementation, the third communication apparatus determines, based on the first information, whether the first phase information and the second phase information are correlated. If the first phase information and the second phase information are correlated, the third communication apparatus may position the at least one second communication apparatus based on both the first phase information and the second phase information. If the first phase information and the second phase information are not correlated, the third communication apparatus may position the at least one second communication apparatus based on the first phase information only, and/or the third communication apparatus positions the at least one second communication apparatus based on the second phase information only.

Optionally, the embodiment shown in FIG. 6 further includes step 607a. Step 607a may be performed after step 607.

607a: The first communication apparatus sends first cause information to the third communication apparatus. Correspondingly, the third communication apparatus receives the first cause information from the first communication apparatus.

The first cause information indicates a cause why the first phase information and the second phase information are not correlated.

Optionally, the first cause information includes at least one of the following: first radio frequency link information, first antenna switching information, first beam switching information, or measurement failure information.

The following describes some possible content included in the first cause information.

1. The first radio frequency link information includes information indicating that a radio frequency initial phase of a radio frequency link used by the first communication apparatus to receive the at least one first positioning reference signal is inconsistent with a radio frequency initial phase of a radio frequency link used by the first communication apparatus to receive the at least one second positioning reference signal.

For the first radio frequency link information, refer to related description of the foregoing cause 2.

2. The first antenna switching information includes information indicating that a receive antenna used by the first communication apparatus to receive the at least one first positioning reference signal is inconsistent with a receive antenna used by the first communication apparatus to receive the at least one second positioning reference signal.

For the first antenna switching information, refer to related description of the foregoing cause 1.

3. The first beam switching information includes information indicating that the receive beam used by the first communication apparatus to receive the at least one first positioning reference signal is inconsistent with the receive beam used by the first communication apparatus to receive the at least one second positioning reference signal.

For the first beam switching information, refer to related description of the foregoing cause 3.

4. The measurement failure information includes information about a phase measurement failure that occurs in a process in which the first communication apparatus measures the at least one second positioning reference signal.

For the measurement failure information, refer to related description of the foregoing cause 4.

It should be noted that the first communication apparatus may simultaneously report information in step 606, step 607, and step 607a, or may separately report information in step 606, step 607, and step 607a. This is not specifically limited in this application. For a manner in which the first communication apparatus separately reports information in step 606, step 607, and step 607a, the first communication apparatus may first perform step 606, then perform step 607, and finally perform step 607a; or first perform step 606, then perform step 607a, and then perform step 607. This is not specifically limited in this application.

It should be noted that the first cause information is described by using an example in which the first phase information and the second phase information are not correlated. In actual application, when the first phase information and the second phase information are correlated, the first communication apparatus may also provide corresponding cause information for the third communication apparatus. This is not specifically limited in this application.

Based on step 607a, optionally, step 608 specifically includes: The third communication apparatus positions the first communication apparatus based on the first phase information, the second phase information, the first information, and the first cause information.

For example, the third communication apparatus determines, based on the first information, that the first phase information and the second phase information are not correlated. The third communication apparatus determines, based on the first cause information, a cause why the first phase information and the second phase information are not correlated. For example, the first cause information includes first beam switching information. The first beam switching information includes information indicating that the receive beam used by the first communication apparatus to receive the at least one first positioning reference signal is inconsistent with the receive beam used by the first communication apparatus to receive the at least one second positioning reference signal. The first information includes beam index or direction information of the receive beam of the at least one second positioning reference signal. In this case, the third communication apparatus performs phase deviation compensation on the second phase information based on the beam index or direction information of the receive beam of the at least one second positioning reference signal. Then, the third communication apparatus may position the first communication apparatus based on the second phase information only.

For example, the first communication apparatus is a terminal device, and the at least one second communication apparatus is a base station. A channel obtained by the terminal device through estimation by using the at least one second positioning reference signal sent by the base station may be represented as:

$$
h = \begin{bmatrix} e^{j0\theta} \\ e^{j\theta} \\ \cdots \\ e^{jN\theta} \end{bmatrix} * e^{j\varphi} \begin{bmatrix} e^{-j0\phi} \\ e^{-j\phi} \\ \cdots \\ e^{-jN\phi} \end{bmatrix} = e^{j\frac{N}{2}\theta} \begin{bmatrix} e^{-j\frac{N}{2}\theta} \\ e^{-j\frac{N-2}{2}\theta} \\ \cdots \\ e^{-j\frac{N}{2}\theta} \end{bmatrix} * e^{j(\varphi-\frac{N}{2}\phi)} \begin{bmatrix} e^{-j\frac{N}{2}\phi} \\ e^{-j\frac{N-2}{2}\phi} \\ \cdots \\ e^{-j\frac{N}{2}\phi} \end{bmatrix} = \frac{N}{2} e^{j\varphi} e^{j(\frac{N}{2}(\theta-\phi))} \quad \text{Formula}
$$

1

N is a quantity of receive antennas of the terminal device, $\varphi$ is a phase of a first receive antenna of the terminal device, and $\theta$ is a direction angle of the receive beam used by the terminal device to receive the at least one second positioning reference signal. $\phi$ is an incident angle of the at least one second positioning reference signal. $\varphi - \frac{N\phi}{2} + \frac{N\theta}{2}$ is a phase reported by the terminal device. $\varphi - \frac{N\phi}{2}$ is a phase of a reference location of an antenna panel, and $\frac{N\theta}{2}$ may be understood as a phase change introduced by the receive beam. The third communication apparatus may compensate, by using the direction angle of the receive beam of the at least one second positioning reference signal, for the phase change that is introduced by the receive beam and that is in the phase $\varphi - \frac{N\phi}{2} + \frac{N\theta}{2}$ reported by the terminal device.

Optionally, the embodiment shown in FIG. 6 further includes step 604a. Step 604a may be performed after step 604.

604a: The at least one second communication apparatus sends second information to the third communication apparatus. Correspondingly, the third communication apparatus receives the second information from the at least one second communication apparatus.

The second information indicates information about correlation between a transmit phase of the at least one positioning reference signal and a transmit phase of the at least one second positioning reference signal. The transmit phase of the at least one positioning reference signal is an actual transmit phase at which the at least one second communication apparatus sends the at least one first positioning reference signal. The transmit phase of the at least one second positioning reference signal is an actual transmit phase at which the at least one second communication apparatus sends the at least one second positioning reference signal.

Specifically, the at least one second communication apparatus sends the at least one first positioning reference signal via a radio frequency link 1 and/or a transmit antenna 1. In an ideal environment in which no phase error is introduced via the radio frequency link 1 and/or the transmit antenna 1, an ideal transmit phase of the at least one first positioning reference signal is $\theta_1$. However, because the phase error is caused when the at least one second communication apparatus sends the at least one first positioning reference signal via the radio frequency link 1 and/or the transmit antenna 1, the actual transmit phase of the at least one first positioning reference signal is $\theta_1$'. Similarly, the at least one second communication apparatus sends the at least one second positioning reference signal via a radio frequency link 2 and/or a transmit antenna 2. In an ideal environment in which no phase error is introduced via the radio frequency link 2 and/or the transmit antenna 2, an ideal transmit phase of the at least one second positioning reference signal is $\theta_2$. However, because the phase error is caused when the at least one second communication apparatus sends the at least one second positioning reference signal via the radio frequency link 2 and/or the transmit antenna 2, the actual transmit phase of the at least one second positioning reference signal is $\theta_2$'. If $\theta_1 - \theta_1$' is equal to $\theta_2 - \theta_2$', or a difference between $\theta_1 - \theta_1$' and $\theta_2 - \theta_2$' is less than a specific threshold, the transmit phase of the at least one positioning reference signal and the transmit phase of the at least one second positioning reference signal are correlated. If the difference between $\theta_1 - \theta_1$' and $\theta_2 - \theta_2$' is greater than the specific threshold, the transmit phase of the at least one positioning reference signal and the transmit phase of the at least one second positioning reference signal are not correlated. In other words, the difference indicates information about correlation between the phase error introduced by the radio frequency link and/or the transmit antenna used by the first communication apparatus to send the at least one first positioning reference signal and the phase error introduced by the radio frequency link and/or the transmit antenna used by the first communication apparatus to send the at least one second positioning reference signal.

Because a phase jump is caused by a phase error introduced by a radio frequency link and/or a transmit antenna used by a transmit end, a receive end cannot sense the phase jump, and therefore a phase measured by the receive end also changes, and the third communication apparatus considers that the phase change is caused by a change of a distance between the receive end and the transmit end, thereby reducing positioning accuracy. Therefore, the at least one second communication apparatus may report the second information, so that the third communication apparatus determines whether the transmit phase of the at least one first positioning reference signal sent by the at least one second communication apparatus and the transmit phase of the at least one second positioning reference signal sent by the at least one second communication apparatus are correlated.

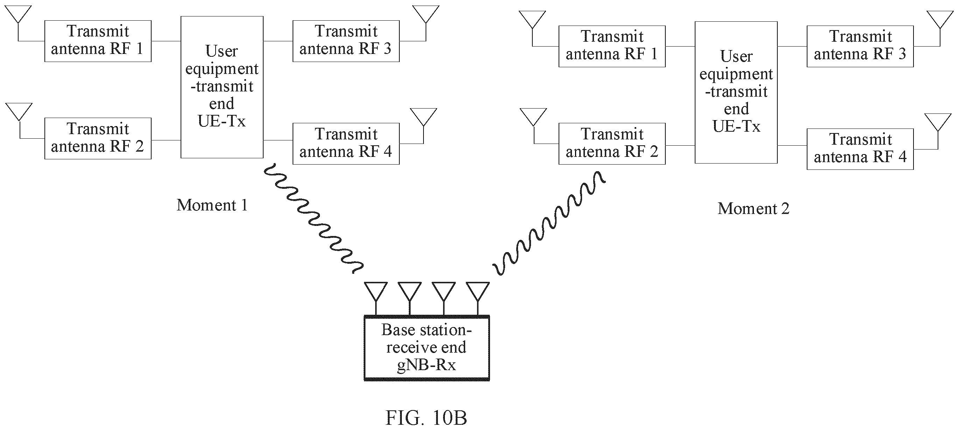

For example, as shown in FIG. 10A, the at least one second communication apparatus is a terminal device, and the first communication apparatus is a base station. The terminal device is equipped with a plurality of transmit antennas, and an appropriate transmit antenna is selected at different moments based on a location relationship between the base station and the terminal device to send a positioning reference signal to the base station. For example, as shown in FIG. 10A and FIG. 10B, the terminal device sends at least one first positioning reference signal to the base station at a moment 1 via a transmit antenna 4. At a moment 2, after a location of the terminal device moves, the terminal device switches to a transmit antenna 2, and sends at least one second positioning reference signal to the base station via the transmit antenna 2. It can be learned that, in a process in which the terminal device sends the at least one first positioning reference signal and the at least one second positioning reference signal, a phase jump or a phase loss occurs due to transmit antenna switching.

The following describes some possible causes of the phase jump, the phase loss, or the phase jitter in a process in which the at least one second communication apparatus sends the at least one first positioning reference signal and the at least one second positioning reference signal.

Cause 1: A transmit antenna used by the at least one second communication apparatus to send the at least one first positioning reference signal is inconsistent with a transmit antenna used by the at least one second communication apparatus to send the at least one second positioning reference signal.

For example, as shown in FIG. 10B, the first communication apparatus is a base station, and the at least one second communication apparatus is a terminal device. The terminal device is equipped with four transmit antennas. The terminal device selects, as a location moves, an appropriate transmit antenna to send a positioning reference signal to the base station. At a moment 1, the terminal device sends at least one first positioning reference signal to the base station via a transmit antenna 4. At a moment 2, a location of the terminal device relative to the base station also changes. The terminal device sends at least one second positioning reference signal to the base station via a transmit antenna 2. Because a location of the transmit antenna 4 and a location of the transmit antenna 2 are different, a phase jump caused by different locations of the transmit antennas is introduced when the terminal device switches the transmit antenna. In this case, it may be understood as that a phase measured by the base station carries a phase deviation due to the location of the transmit antenna. Specifically, the base station side may perform corresponding compensation on the phase based on the location of the transmit antenna.

Therefore, when the transmit antenna used by the at least one second communication apparatus to send the at least one first positioning reference signal is inconsistent with the transmit antenna used by the at least one second communication apparatus to send the at least one second positioning reference signal, the at least one second communication apparatus may consider that the transmit phase of the at least one first positioning reference signal and the transmit phase of the at least one second positioning reference signal are not correlated.

Cause 2: A radio frequency initial phase of a radio frequency link used by the at least one second communication apparatus to send the at least one first positioning reference signal is inconsistent with a radio frequency initial phase of a radio frequency link used by the at least one second communication apparatus to send the at least one second positioning reference signal.

For example, the first communication apparatus is a base station, and the at least one second communication apparatus is a terminal device. The terminal device sends the at least one first positioning reference signal and the at least one second positioning reference signal via a same radio frequency link. However, in a sending process of the terminal device, radio frequency initial phases of the radio frequency link are different at different moments due to radio frequency shutdown or hardware restart, or radio frequency initial phases of the radio frequency link are different at different moments due to an external environment. Therefore, the radio frequency initial phase of the radio frequency link used by the at least one second communication apparatus to send the at least one first positioning reference signal is inconsistent with the radio frequency initial phase of the radio frequency link used by the at least one second communication apparatus to send the at least one second positioning reference signal. A phase jump is caused by the different radio frequency initial phases of the radio frequency link. In this case, it may be understood that a phase measured by the base station carries a phase error because the radio frequency initial phases of the radio frequency link are different.

Therefore, when the radio frequency initial phase of the radio frequency link used by the at least one second communication apparatus to send the at least one first positioning reference signal is inconsistent with the radio frequency initial phase of the radio frequency link used by the at least one second communication apparatus to send the at least one second positioning reference signal, the at least one second communication apparatus may consider that the transmit phase of the at least one first positioning reference signal and the transmit phase of the at least one second positioning reference signal are not correlated.

Cause 3: The at least one second communication apparatus fails to send the at least one second positioning reference signal.

For example, the first communication apparatus is a base station, and the at least one second communication apparatus is a terminal device. The terminal device fails to send the at least one second positioning reference signal. As a result, the base station cannot continuously trace a phase.

Therefore, when the at least one second communication apparatus fails to send the at least one second positioning reference signal, the at least one second communication apparatus may consider that the transmit phase of the at least one first positioning reference signal and the transmit phase of the at least one second positioning reference signal are not correlated.

The following describes some possible implementations of the second information.

1. The second information is second indication information, and the second indication information indicates whether the transmit phase of the at least one positioning reference signal and the transmit phase of the at least one second positioning reference signal are correlated.

For example, when a value of the second indication information is "1", it indicates that the transmit phase of the at least one positioning reference signal and the transmit phase of the at least one second positioning reference signal are correlated. When a value of the second indication information is "0", it indicates that the transmit phase of the at least one positioning reference signal and the transmit phase of the at least one second positioning reference signal are not correlated.

For example, when a value of the second indication information is "true (true)", it indicates that the transmit phase of the at least one positioning reference signal and the transmit phase of the at least one second positioning reference signal are correlated. When a value of the second indication information is "false (false)", it indicates that the transmit phase of the at least one positioning reference signal and the transmit phase of the at least one second positioning reference signal are not correlated.

For example, when a value of the second indication information is "yes", it indicates that the transmit phase of the at least one positioning reference signal and the transmit phase of the at least one second positioning reference signal are correlated. When a value of the second indication information is "no", it indicates that the transmit phase of the at least one positioning reference signal and the transmit phase of the at least one second positioning reference signal are not correlated.

2. The second information is fourth cause information. The fourth cause information indicates whether the transmit phase of the at least one positioning reference signal and the transmit phase of the at least one second positioning reference signal are correlated.

The following describes some possible implementations of the fourth cause information.

1. The fourth cause information includes information about whether radio frequency shutdown occurs on the at least one second communication apparatus, or information about whether hardware restart occurs on the at least one second communication apparatus.

In this implementation, for details, refer to related description of the foregoing cause 2. If the fourth cause information includes information indicating that radio frequency shutdown or hardware restart occurs on the at least one second communication apparatus, it indicates that the transmit phase of the at least one positioning reference signal and the transmit phase of the at least one second positioning reference signal are correlated. If the fourth cause information includes information indicating that radio frequency shutdown or hardware restart does not occur on the at least one second communication apparatus, it indicates that the transmit phase of the at least one positioning reference signal and the transmit phase of the at least one second positioning reference signal are not correlated.

2. The fourth cause information includes information about whether transmit antenna switching occurs on the at least one second communication apparatus.

In this implementation, for details, refer to related description of the foregoing cause 1. If the fourth cause information includes information indicating that transmit antenna switching occurs on the at least one second communication apparatus, it indicates that the transmit phase of the at least one positioning reference signal and the transmit phase of the at least one second positioning reference signal are correlated. If the fourth cause information includes information indicating that transmit antenna switching does not occur on the at least one second communication apparatus, it indicates that the transmit phase of the at least one positioning reference signal and the transmit phase of the at least one second positioning reference signal are not correlated.

Optionally, based on step 604a, step 608 specifically includes: The third communication apparatus positions the first communication apparatus based on the first phase information, the second phase information, the first information, and the second information. Alternatively, the third communication apparatus positions the at least one second communication apparatus based on the first phase information, the second phase information, the first information, and the second information.

For example, the second information may include a resource identifier corresponding to the first positioning reference signal, a time label used by the at least second communication apparatus to send the at least one first positioning reference signal, and a time label used by the at least second communication apparatus to send the at least one second positioning reference signal. Then, the third communication apparatus may determine the first phase information and the second phase information by using a resource label and the time label. In other words, the first phase information and the second phase information are phase information separately obtained by the first communication apparatus by measuring positioning reference signals with same resource labels. Then, the third communication apparatus determines correlation between the first phase information and the second phase information based on the second information.

For example, if the first communication apparatus is a positioning object, the third communication apparatus determines, based on the first information and the second information, whether the first phase information and the second phase information are correlated. If the first phase information and the second phase information are correlated, the third communication apparatus may position the first communication apparatus based on both the first phase information and the second phase information. If the first phase information and the second phase information are not correlated, the third communication apparatus may position the first communication apparatus based on the first phase information only or the second phase information only.

For example, if the at least one second communication apparatus is a positioning object, the third communication apparatus determines, based on the first information and the second information, whether the first phase information and the second phase information are correlated. If the first phase information and the second phase information are correlated, the third communication apparatus may position the at least one second communication apparatus based on both the first phase information and the second phase information. If the first phase information and the second phase information are not correlated, the third communication apparatus may position the at least one second communication apparatus based on the first phase information only or the second phase information only.

Optionally, the embodiment shown in FIG. 6 further includes step 604b. Step 604b may be performed after step 604.

604b: The at least one second communication apparatus sends second cause information to the third communication apparatus. Correspondingly, the third communication apparatus receives the second cause information from the at least one second communication apparatus.

The second cause information indicates a cause why the transmit phase of the at least one first positioning reference signal and the transmit phase of the at least one second positioning reference signal are not correlated.

Optionally, the second cause information includes at least one of the following: second antenna switching information, second radio frequency link information, or sending failure information.

The following describes content included in the second cause information.

1. The second antenna switching information includes information indicating that a transmit antenna used by the second communication apparatus to send the at least one first positioning reference signal is inconsistent with a transmit antenna used by the second communication apparatus to send the at least one second positioning reference signal.

For the second antenna switching information, refer to related description of the foregoing cause 1.

2. The second radio frequency link information includes information indicating that a radio frequency initial phase of a radio frequency link used by the second communication apparatus to send the at least one first positioning reference signal is inconsistent with a radio frequency initial phase of a radio frequency link used by the second communication apparatus to send the at least one second positioning reference signal.

For the second radio frequency link information, refer to related description of the foregoing cause 2.

3. The sending failure information includes information indicating that the at least one second communication apparatus fails to send the at least one second positioning reference signal.

For the sending failure information, refer to related description of the foregoing cause 3.

It should be noted that the at least one second communication apparatus may send both the second information and the second cause information, or may separately send the second information and the second cause information. This is not specifically limited in this application. When the at least one second communication apparatus separately sends the second information and the second cause information, the at least one second communication apparatus may first send the second information, and then send the second cause information; or the at least one second communication apparatus may first send the second cause information, and then send the second information. This is not specifically limited in this application.

Based on step 604a and step 604b, optionally, step 608 specifically includes: The third communication apparatus positions the first communication apparatus based on the first phase information, the second phase information, the first information, the second information, and the second cause information. Alternatively, the third communication apparatus positions the at least one second communication apparatus based on the first phase information, the second phase information, the first information, the second information, and the second cause information.

For example, if the first communication apparatus is a positioning object, the third communication apparatus determines, based on the first information, the second information, and the second cause information, that the first phase information and the second phase information are not correlated and a corresponding cause. The second cause information includes second antenna switching information. Therefore, the third communication apparatus may perform phase deviation compensation on the second phase information based on the location of the transmit antenna. Then, the third communication apparatus may position the first communication apparatus based on the second phase information only.

The third communication apparatus may position the first communication apparatus based on the first phase information only or the second phase information only.

For example, if the first communication apparatus is a positioning object, the third communication apparatus determines, based on the first information and the second information, that the first phase information and the second phase information are correlated. The third communication apparatus may position the first communication apparatus based on both the first phase information and the second phase information, to improve positioning accuracy.

The following describes, with reference to FIG. 7A, an example in which the third communication apparatus positions the first communication apparatus based on the first phase information only.

Refer to FIG. 7A. The first communication apparatus is a terminal device, and the at least one second communication apparatus is a TRP 1, a TRP 2, a TRP 3, and a TRP 4. The first phase information includes P third phase differences, which are specifically $\Delta\varphi_1(t_1,t_{10})$, $\Delta\varphi_2(t_{10},t_{20})$, $\Delta\varphi_3(t_1,t_{10})$, and $\Delta\varphi_4(t_1,t_{10})$.

$\Delta\varphi_1(t_1,t_{10})$ is a phase difference between a phase obtained by the terminal device by measuring a positioning reference signal sent by the TRP 1 at a moment 1 and a phase obtained by the terminal device by measuring a positioning reference signal sent by the TRP 1 at a moment 2.

$\Delta\varphi_2(t_1,t_{10})$ is a phase difference between a phase obtained by the terminal device by measuring a positioning reference signal sent by the TRP 2 at the moment 1 and a phase obtained by the terminal device by measuring a positioning reference signal sent by the TRP 2 at the moment 2.

$\Delta\varphi_3(t_1,t_{10})$ is a phase difference between a phase obtained by the terminal device by measuring a positioning reference signal sent by the TRP 3 at the moment 1 and a phase obtained by the terminal device by measuring a positioning reference signal sent by the TRP 3 at the moment 2.

$\Delta\varphi_4(t_1,t_{10})$ is a phase difference between a phase obtained by the terminal device by measuring a positioning reference signal sent by the TRP 4 at the moment 1 and a phase obtained by the terminal device by measuring a positioning reference signal sent by the TRP 4 at the moment 2.

The third communication apparatus obtains a distance difference $\Delta d_1$, a distance difference $\Delta d_2$, a distance difference $\Delta d_3$, and a distance difference $\Delta d_4$ through calculation by using the four third phase differences reported by the terminal device. The distance difference $\Delta d_1$ is a difference between a distance from the terminal device to the TRP 1 at the moment 1 and a distance from the terminal device to the TRP 1 at the moment 2. The distance difference $\Delta d_2$ is a difference between a distance from the terminal device to the TRP 2 at the moment 1 and a distance from the terminal device to the TRP 2 at the moment 2. The distance difference $\Delta d_3$ is a difference between a distance from the terminal device to the TRP 3 at the moment 1 and a distance from the terminal device to the TRP 3 at the moment 2. The distance difference $\Delta d_4$ is a difference between a distance from the terminal device to the TRP 4 at the moment 1 and a distance from the terminal device to the TRP 4 at the moment 2. The following represents the distance difference $\Delta d_1$, the distance difference $\Delta d_2$, the distance difference $\Delta d_3$, and the distance difference $\Delta d_4$ by using formulas, respectively:

$$\Delta d_1 = \Delta\varphi_1(t_1,t_{10})\lambda / 2\pi \qquad \text{Formula 2}$$

$$\Delta d_2 = \Delta\varphi_2(t_1,t_{10})\lambda / 2\pi \qquad \text{Formula 3}$$

$$\Delta d_3 = \Delta\varphi_3(t_1,t_{10})\lambda / 2\pi \qquad \text{Formula 4}$$

$$\Delta d_4 = \Delta\varphi_4(t_1,t_{10})\lambda / 2\pi \qquad \text{Formula 5}$$

The third communication apparatus may obtain, through calculation, a location of the terminal device at the moment 1 and a location of the terminal device at the moment 2 with reference to the foregoing formula 2 to formula 5. Specifically, the third communication apparatus may obtain, through calculation, the location of the terminal device at the moment 1 and the location of the terminal device at the moment 2 by using the following formula 6:

$$(x'_1, y'_1, x'_2, y'_2) = \min_{x_1,y_1,x_2,y_2} \sum_b \frac{(\Delta d^b_{diff}(x_1, y_1, x_2, y_2) - \Delta d_b)^2}{\sigma_b^2} \qquad \text{Formula 6}$$

In the foregoing formula 6, $\Delta d^b_{diff}(x_1, y_1, x_2, y_2)$ indicates a difference between a distance from a location $(x1, y1)$ of the terminal device at the moment 1 to a $b^{th}$ TRP and a distance from a location $(x2, y2)$ of the terminal device at the moment 2 to the $b^{th}$ TRP. $\sigma_b^2$ indicates a fluctuation coefficient of the $b^{th}$ TRP, and the fluctuation coefficient is related to channel quality between the terminal device and the $b^{th}$ TRP. Better channel quality between the terminal device and the $b^{th}$ TRP indicates higher received signal energy of the $b^{th}$ TRP received by the terminal device and smaller $\sigma_b^2$. b is an integer greater than or equal to 1 and less than or equal to a quantity of one or more second communication apparatuses. $\lambda$ is a wavelength corresponding to a frequency of a carrier signal carrying a positioning reference signal of a TRP. Herein, an example in which a wavelength corresponding to a frequency of a carrier signal carrying a positioning reference signal of each TRP is $\lambda$ is used for description.

In the foregoing formula 6, the third communication apparatus may search for the location $(x1, y1)$ of the terminal device at the moment 1 and the location $(x2, y2)$ of the terminal device at the moment 2. The third communication apparatus substitutes the location $(x1, y1)$ of the terminal device at the moment 1 and the location $(x2, y2)$ of the terminal device at the moment 2 into $\Delta d^b_{diff}(x_1, y_1, x_2, y_2)$, to minimize the foregoing formula 6. Therefore, $(x1, y1, x2, y2)$ is $(x'_1, y'_1, x'_2, y'_2)$ in the foregoing formula 6.

It can be learned that, in the scenario shown in FIG. 7A, if a synchronization error between the terminal device and the TRP is fixed at different moments, the terminal device reports the P third phase differences, to eliminate the radio frequency initial phase error of the terminal device and the synchronization error between the terminal device and the TRP, so that the third communication apparatus determines the location of the terminal device at the moment 1 and the location of the terminal device at the moment 2 by using the P third phase differences reported by the terminal device. In this way, high-accuracy positioning on the terminal device is implemented.

The following describes, with reference to FIG. 7B, an example in which the third communication apparatus positions the first communication apparatus based on both the first phase information and the second phase information.

Refer to FIG. 7B. The first communication apparatus is a terminal device, and the at least one second communication apparatus is a TRP 1, a TRP 2, a TRP 3, and a TRP 4. The first phase information includes P third phase differences, which are specifically $\Delta\varphi_1(t_1,t_{10})$, $\Delta\varphi_2(t_{10},t_{20})$, $\Delta\varphi_3(t_1,t_{10})$, and $\Delta\varphi_4(t_1,t_{10})$. The second phase information includes P seventh phase differences, which are specifically $\Delta\varphi_1(t_1,t_{20})$, $\Delta\varphi_2(t_{10}, t_{20})$, $\Delta\varphi_3(t_{10},t_{20})$, and $\Delta\varphi_4(t_1,t_{10})$.

$\Delta\varphi_1(t_1,t_{10})$ is a phase difference between a phase obtained by the terminal device by measuring a positioning reference signal sent by the TRP 1 at a moment 1 and a phase obtained by the terminal device by measuring a positioning reference signal sent by the TRP 1 at a moment 2.

$\Delta\varphi_2(t_1,t_{10})$ is a phase difference between a phase obtained by the terminal device by measuring a positioning reference signal sent by the TRP 2 at the moment 1 and a phase obtained by the terminal device by measuring a positioning reference signal sent by the TRP 2 at the moment 2.

$\Delta\varphi_3(t_1,t_{10})$ is a phase difference between a phase obtained by the terminal device by measuring a positioning reference signal sent by the TRP 3 at the moment 1 and a phase obtained by the terminal device by measuring a positioning reference signal sent by the TRP 3 at the moment 2.

$\Delta\varphi_4(t_1,t_{10})$ is a phase difference between a phase obtained by the terminal device by measuring a positioning reference signal sent by the TRP 4 at the moment 1 and a phase obtained by the terminal device by measuring a positioning reference signal sent by the TRP 4 at the moment 2.

$\Delta\varphi_1(t_1,t_{10})$ is a phase difference between the phase obtained by the terminal device by measuring the positioning reference signal sent by the TRP 1 at the moment 2 and a phase obtained by the terminal device by measuring a positioning reference signal sent by the TRP 1 at a moment 3.

$\Delta\varphi_3(t_1,t_{20})$ is a phase difference between the phase obtained by the terminal device by measuring the positioning reference signal sent by the TRP 2 at the moment 2 and a phase obtained by the terminal device by measuring a positioning reference signal sent by the TRP 2 at a moment 3.

$\Delta\varphi_3(t_1,t_{10})$ is a phase difference between the phase obtained by the terminal device by measuring the positioning reference signal sent by the TRP 3 at the moment 2 and a phase obtained by the terminal device by measuring a positioning reference signal sent by the TRP 3 at a moment 3.

$\Delta\varphi_4(t_1,t_{10})$ is a phase difference between the phase obtained by the terminal device by measuring the positioning reference signal sent by the TRP 4 at the moment 2 and a phase obtained by the terminal device by measuring a positioning reference signal sent by the TRP 4 at a moment 3.

The third communication apparatus may determine a second cumulative phase difference $\nabla\phi_1$, a second cumulative phase difference $\nabla\phi_2$, a second cumulative phase difference $\nabla\phi_3$, and a second cumulative phase difference $\nabla\phi_4$ based on the first phase information and the second phase information. These second cumulative phase differences are represented below by using formulas:

$$\nabla\phi_1 = \Delta\varphi_1(t_1,t_{10}) - \Delta\varphi_1(t_{20},t_{10}) \qquad \text{Formula 7}$$

$$\nabla\phi_2 = \Delta\varphi_2(t_1,t_{10}) - \Delta\varphi_2(t_{20},t_{10}) \qquad \text{Formula 8}$$

$$\nabla\phi_3 = \Delta\varphi_3(t_1,t_{10}) - \Delta\varphi_3(t_{20},t_{10}) \qquad \text{Formula 9}$$

$$\nabla\phi_4 = \Delta\varphi_4(t_1,t_{10}) - \Delta\varphi_4(t_{20},t_{10}) \qquad \text{Formula 10}$$

The third communication apparatus may determine the following equivalent distance change amount $\nabla d_1$, equivalent distance change amount $\nabla d_2$, equivalent distance change amount $\nabla d_3$, and equivalent distance change amount $\nabla d_4$ based on the information reported by the terminal device.

The equivalent distance change amount $\nabla d_1$ is a difference between $\Delta d_1$ and $\nabla d_5$, and $\nabla d_5$ is a difference between a distance from the terminal device to the TRP 1 at the moment 2 and a distance from the terminal device to the TRP 1 at the moment 3. For example, as shown in FIG. 7B, $\Delta d_1 = d_2^1 - d_1^1$, and $\Delta d_5 = d_3^1 - d_2^1$.

The equivalent distance change amount $\nabla d_2$ is a difference between $\Delta d_2$ and $\Delta d_6$, and $\Delta d_6$ is a difference between a distance from the terminal device to the TRP 2 at the moment 2 and a distance from the terminal device to the TRP 2 at the moment 3. For example, as shown in FIG. 7B, $\Delta d_2 = d_2^2 - d_1^2$, and $\Delta d_6 = d_3^2 - d_2^2$.

The equivalent distance change amount $\nabla d_3$ is a difference between $\Delta d_3$ and $\Delta d_7$, and $\Delta d_7$, is a difference between a distance from the terminal device to the TRP 3 at the moment 2 and a distance from the terminal device to the TRP 3 at the moment 3. For example, as shown in FIG. 7B, $\Delta d_3 = d_2^3 - d_1^3$, and $\Delta d_7 = d_3^3 - d_2^3$.

The equivalent distance change amount $\nabla d_4$ is a difference between $\Delta d_4$ and $\Delta d_8$, and $\Delta d_8$ is a difference between a distance from the terminal device to the TRP 4 at the moment 2 and a distance from the terminal device to the TRP 4 at the moment 3. For example, as shown in FIG. 7B, $\Delta d_4 = d_2^4 - d_1^4$, and $\Delta d_8 = d_3^4 - d_2^4$.

As shown in FIG. 7B, the following represents the equivalent distance change amount $\nabla d_1$, the equivalent distance change amount $\nabla d_2$, the equivalent distance change amount $\nabla d_3$, and the equivalent distance change amount $\nabla d_4$ by using formulas:

$$\nabla d_1 = \Delta d_1 - \Delta d_5 = \nabla \phi_1 \lambda / 2\pi \qquad \text{Formula 11}$$

$$\nabla d_2 = \Delta d_2 - \Delta d_6 = \nabla \phi_2 \lambda / 2\pi \qquad \text{Formula 12}$$

$$\nabla d_3 = \Delta d_3 - \Delta d_7 = \nabla \phi_3 \lambda / 2\pi \qquad \text{Formula 13}$$

$$\nabla d_4 = \Delta d_4 - \Delta d_8 = \nabla \phi_4 \lambda / 2\pi \qquad \text{Formula 14}$$

The third communication apparatus may obtain, through calculation, the location of the terminal device at the moment 1, the location of the terminal device at the moment 2, and the location of the terminal device at the moment 3 with reference to the foregoing formula 11 to formula 14. Specifically, the third communication apparatus may separately obtain, through calculation, the location of the terminal device at the moment 1, the location of the terminal device at the moment 2, and the location of the terminal device at the moment 3 by using the following formula 15:

$$(x'_1, y_1', x_2', y_2', x_3', y_3') = \min_{x_1, y_1, x_2, y_2} \sum_i \frac{(\Delta d_{diff}^b(x_2, y_2, x_3, y_3) - \Delta d_{diff}^b(x_1, y_1, x_2, y_2) - \nabla d_b)^2}{\sigma_b^2}$$

Formula 15

$\Delta d_{diff}^b(x_2, y_2, x_3, y_3)$ indicates a difference between a distance from the terminal device to a $b^{th}$ TRP at the moment 2 and a distance from the terminal device to the $b^{th}$ TRP at the moment 3, the location of the terminal device at the moment 2 is (x2, y2), and the location of the terminal device at the moment 3 is (x3, y3). $\Delta d_{diff}^b(x_1, y_1, x_2, y_2)$ indicates a difference between a distance from the terminal device to the $b^{th}$ TRP at the moment 1 and a distance from the terminal device to the $b^{th}$ TRP at the moment 2, the location of the terminal device at the moment 1 is (x1, y1), and the location of the terminal device at the moment 2 is (x2, y2). For $\sigma_b^2$, refer to the foregoing related descriptions. Details are not described herein again. $\lambda$ is a wavelength corresponding to a frequency of a carrier signal carrying a positioning reference signal of a TRP. Herein, an example in which a wavelength corresponding to a frequency of a carrier signal carrying a positioning reference signal of each TRP is $\lambda$ is used for description.

In the foregoing formula 15, the third communication apparatus may search for the location (x1, y1) of the terminal device at the moment 1, the location (x2, y2) of the terminal device at the moment 2, and the location (x3, y3) of the terminal device at the moment 3. The third communication apparatus substitutes the location (x1, y1) of the terminal device at the moment 1, the location (x2, y2) of the terminal device at the moment 2, and the location (x3, y3) of the terminal device at the moment 3 into $\Delta d_{diff}^b(x_2, y_2, x_3, y_3)$ and $\Delta d_{diff}^b(x_1, y_1, x_2, y_2)$, to minimize the foregoing formula 15. Therefore, (x1, y1, x2, y2, x3, y3) is (x'$_1$, y$_1$', x$_2$', y$_2$', x$_3$', y$_3$') in the foregoing formula 15.

It can be learned that, in the scenario shown in FIG. 7B, if a synchronization error between the terminal device and the TRP is fixed at different moments, the terminal device reports the P third phase differences, to eliminate the radio frequency initial phase error of the terminal device and the synchronization error between the terminal device and the TRP, so that the third communication apparatus determines the location of the terminal device at the moment 1 and the location of the terminal device at the moment 2 by using the P third phase differences reported by the terminal device. In this way, high-accuracy positioning on the terminal device is implemented.

The third communication apparatus positions the terminal device based on the P third phase differences and the P seventh phase differences that are provided by the terminal device. In this method, based on a characteristic that a time drift error included in a phase difference changes linearly in terms of time, impact of the time drift error is eliminated through differentiation based on the phase difference. The phase difference can eliminate the radio frequency initial phase error of the terminal device and the synchronization error between the terminal device and the TRP. The second cumulative phase difference can further eliminate the impact of the time drift error. The third communication apparatus may implement high-accuracy positioning of the terminal device based on the at least one second cumulative phase difference.

In this embodiment of this application, the first communication apparatus may feed back the first information to the third communication apparatus, so that the third communication apparatus determines correlation between the first phase information and the second phase information, thereby helping improve positioning accuracy. This effectively avoids a problem that positioning accuracy is reduced because the first phase information and the second phase information are used for joint positioning in a scenario in which the first phase information and the second phase information are not correlated. For example, generally, in the phase-based positioning technical solution, a phase needs to be tracked, and the tracked phase needs to be continuous, that is, pieces of phase information are correlated. For example, if the first phase information and the second phase information are correlated, the third communication apparatus may position the first communication apparatus or the at least one second communication apparatus based on both the first phase information and the second phase information. For example, if the first phase information and the second phase information are not correlated, the third communication apparatus may position the first communication apparatus or the at least one second communication apparatus based on the first phase information only or the second phase information only. Therefore, the problem that positioning accuracy for positioning, by the third communication apparatus, the first communication apparatus or the at least one second communication apparatus is limited because correlation between the first phase information and the second phase information is difficult to be ensured due to the phase jump or the phase loss in the process in which the first communication apparatus tracks the phase is avoided.

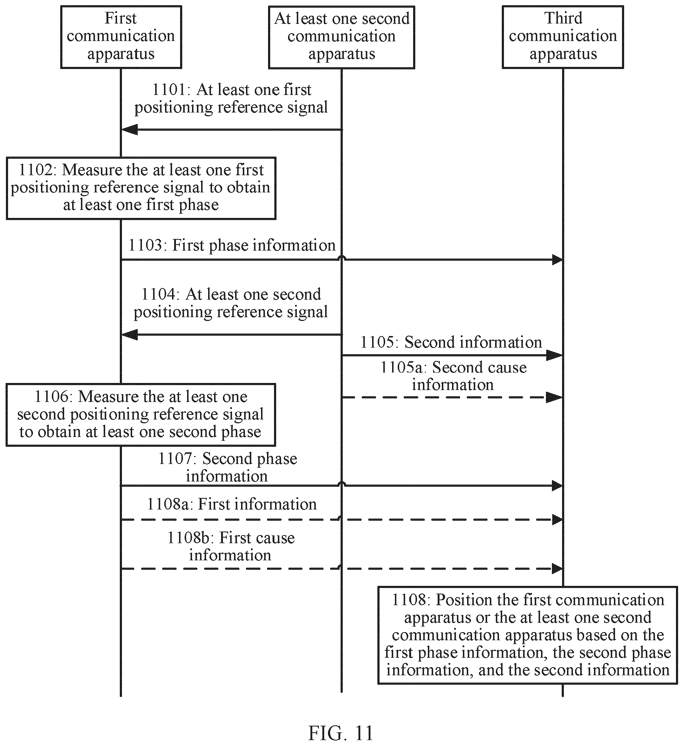

FIG. 11 is another diagram of an embodiment of a communication method according to an embodiment of this application. With reference to FIG. 11, the communication method includes the following steps.

1101: At least one second communication apparatus sends at least one first positioning reference signal to a first communication apparatus. Correspondingly, the first communication apparatus receives the at least one first positioning reference signal from the at least one second communication apparatus.

1102: The first communication apparatus measures the at least one first positioning reference signal to obtain at least one first phase.

1103: The first communication apparatus sends first phase information to a third communication apparatus. Correspondingly, the third communication apparatus receives the first phase information from the first communication apparatus.

1104: The at least one second communication apparatus sends at least one second positioning reference signal to the first communication apparatus. Correspondingly, the first communication apparatus receives the at least one second positioning reference signal from the at least one second communication apparatus.

1105: The at least one second communication apparatus sends second information to the third communication apparatus. Correspondingly, the third communication apparatus receives the second information from the at least one second communication apparatus.

Step 1101 to step 1105 are similar to step 601 to step 604a in the embodiment shown in FIG. 6. For details, refer to related descriptions of step 601 to step 604a in the embodiment shown in FIG. 6. Details are not described herein again.

Optionally, the embodiment shown in FIG. 11 further includes step 1105a. Step 1105a may be performed after step 1104.

1105a: The at least one second communication apparatus sends second cause information to the third communication apparatus. Correspondingly, the third communication apparatus receives the second cause information from the at least one second communication apparatus.

Step 1105a is similar to step 604b in the embodiment shown in FIG. 6. For details, refer to related description of step 604b in the embodiment shown in FIG. 6 above. Details are not described herein again.

1106: The first communication apparatus measures the at least one second positioning reference signal to obtain at least one second phase.

1107: The first communication apparatus sends second phase information to the third communication apparatus. Correspondingly, the third communication apparatus receives the second phase information from the first communication apparatus.

Step 1106 to step 1107 are similar to step 605 to step 606 in the embodiment shown in FIG. 6. For details, refer to related descriptions of step 605 to step 606 in the embodiment shown in FIG. 6.

1108: The third communication apparatus positions the first communication apparatus or the at least one second communication apparatus based on the first phase information, the second phase information, and the second information.

For example, if the first communication apparatus is used as a positioning object, the third communication apparatus determines, based on the second information, that a transmit phase of the at least one first positioning reference signal and transmit phase of the at least one second positioning reference signal are not correlated. In this case, the third communication apparatus may determine that the first phase information obtained by the first communication apparatus by measuring the at least one first positioning reference signal and the second phase information obtained by the first communication apparatus by measuring the at least one second positioning reference signal are not correlated. Therefore, the third communication apparatus may position the first communication apparatus based on the first phase information only or the second phase information only. The same is applied to a case in which the at least one second communication apparatus is used as a positioning object. Details are not described herein.

For example, if the first communication apparatus is used as a positioning object, the third communication apparatus determines, based on the second information, that a transmit phase of the at least one first positioning reference signal and transmit phase of the at least one second positioning reference signal are correlated. In this case, the third communication apparatus may determine that the first phase information obtained by the first communication apparatus by measuring the at least one first positioning reference signal and the second phase information obtained by the first communication apparatus by measuring the at least one second positioning reference signal are correlated. Therefore, the third communication apparatus may position the first communication apparatus based on both the first phase information and the second phase information. The same is applied to a case in which the at least one second communication apparatus is used as a positioning object. Details are not described herein.

Optionally, the embodiment shown in FIG. 11 further includes step 1108a. Step 1108a may be performed after step 1107.

1108a: The first communication apparatus sends first information to the third communication apparatus. Correspondingly, the third communication apparatus receives the first information from the first communication apparatus.

Step 1108a is similar to step 607 in the embodiment shown in FIG. 6. For details, refer to related description of step 607 in the embodiment shown in FIG. 6 above.

Based on step 1108a, optionally, step 1108 specifically includes: The third communication apparatus positions the first communication apparatus or the at least one second communication apparatus based on the first phase information, the second phase information, the first information, and the second information.

For example, if the first communication apparatus is a positioning object, the third communication apparatus determines, based on the first information and the second information, that the first phase information and the second phase information are not correlated. The third communication apparatus may position the first communication apparatus based on the first phase information only or the second phase information only. In other words, the third communication apparatus may select a corresponding algorithm based on the case, and position the first communication apparatus based on the algorithm, the first phase information, and the second phase information.

For example, if the first communication apparatus is a positioning object, the third communication apparatus determines, based on the first information and the second information, that the first phase information and the second phase information are correlated. The third communication apparatus may position the first communication apparatus based on both the first phase information and the second phase information, to improve positioning accuracy.

Optionally, the embodiment shown in FIG. 11 further includes step 1108b. Step 1108b may be performed after step 1107.

1108b: The first communication apparatus sends first cause information to the third communication apparatus. Correspondingly, the third communication apparatus receives the first cause information from the first communication apparatus.

Based on step 1108a and step 1108b, optionally, step 1108 specifically includes: The third communication apparatus positions the first communication apparatus or the at least one second communication apparatus based on the first phase information, the second phase information, the first information, the second information, and the first cause information.

For example, if the first communication apparatus is a positioning object, the third communication apparatus determines, based on the first information, the second information, and the first cause information, that the first phase information and the second phase information are not correlated and a corresponding cause. The third communication apparatus may position the first communication apparatus based on the first phase information only or the second phase information only. For example, the first information includes information about an angle of arrival at which the at least one second positioning reference signal arrives at the first communication apparatus, and the third communication apparatus may perform phase deviation compensation on the second phase information based on the information about the angle of arrival. Then, the third communication apparatus positions the first communication apparatus based on the second phase information, to improve positioning accuracy.

In this embodiment of this application, the at least one second communication apparatus sends the at least one first positioning reference signal to the first communication apparatus. The at least one second communication apparatus sends the at least one second positioning reference signal to the first communication apparatus. The at least one second communication apparatus sends the second information to the third communication apparatus, where the second information indicates information about correlation between the transmit phase of the at least one first positioning reference signal and the transmit phase of the at least one second positioning reference signal. It can be learned that the at least one second communication apparatus sends the second information to the third communication apparatus, so that the third communication apparatus determines correlation between the first phase information obtained by the first communication apparatus by measuring the at least one first positioning reference signal and the second phase information obtained by the first communication apparatus by measuring the at least one second positioning reference signal, thereby improving positioning accuracy. This effectively avoids a problem that positioning accuracy is reduced because the first phase information and the second phase information are used for joint positioning in a scenario in which the first phase information and the second phase information are not correlated. For example, generally, in the phase-based positioning technical solution, a phase needs to be tracked, and the tracked phase needs to be continuous, that is, pieces of phase information are correlated. For example, if the first phase information and the second phase information are correlated, the third communication apparatus may position the first communication apparatus or the at least one second communication apparatus based on both the first phase information and the second phase information. For example, if the first phase information and the second phase information are not correlated, the third communication apparatus may position the first communication apparatus or the at least one second communication apparatus based on the first phase information only or the second phase information only. Therefore, the problem that positioning accuracy for positioning, by the third communication apparatus, the first communication apparatus or the at least one second communication apparatus is limited because correlation between the first phase information and the second phase information is difficult to be ensured due to the phase jump or the phase loss in the process in which the first communication apparatus tracks the phase is avoided.

The following describes the technical solutions in embodiments of this application in another description manner.

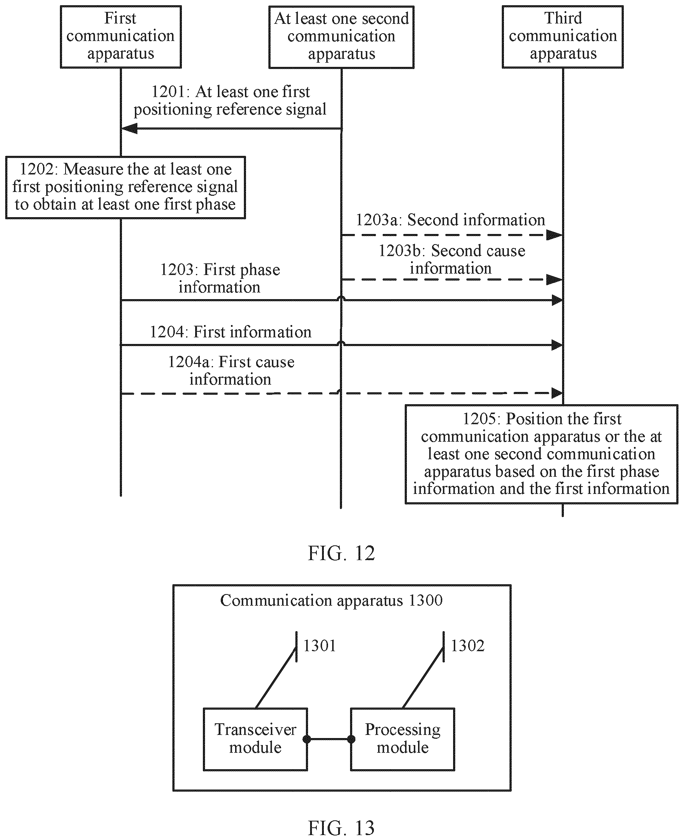

FIG. 12 is a diagram of another embodiment of a communication method according to an embodiment of this application. With reference to FIG. 12, the communication method includes the following steps.

1201: At least one second communication apparatus sends at least one first positioning reference signal to a first communication apparatus. Correspondingly, the first communication apparatus receives the at least one first positioning reference signal from the at least one second communication apparatus.

1202: The first communication apparatus measures the at least one first positioning reference signal to obtain at least one first phase.

1203: The first communication apparatus sends first phase information to a third communication apparatus. Correspondingly, the third communication apparatus receives the first phase information from the first communication apparatus.

Step 1201 to step 1203 are similar to step 601 to step 603 in the embodiment shown in FIG. 6. For details, refer to related descriptions of step 601 to step 603 in the embodiment shown in FIG. 6. Details are not described herein again.

1204: The first communication apparatus sends first information to the third communication apparatus. Correspondingly, the third communication apparatus receives the first information from the first communication apparatus.

The first information indicates whether the first phase information meets a first phase correlation condition.

For example, the first phase correlation condition is a condition of phase correlation between the first phase information and phase information that is about the at least one second communication apparatus and that is previously reported by the first communication apparatus to the third communication apparatus. For phase correlation between the first phase information and the phase information that is about the at least one second communication apparatus and that is previously reported by the first communication apparatus to the third communication apparatus, refer to the foregoing related description of correlation between the first phase information and the second phase information.

If the first information indicates that the first phase information meets the first phase correlation condition, it may be understood that the first phase information and the phase information that is about the at least one second communication apparatus and that is previously reported by the first communication apparatus to the third communication apparatus are correlated. If the first information indicates that the first phase information does not meet the first phase correlation condition, it may be understood that the first phase information and the phase information that is about the at least one second communication apparatus and that is previously reported by the first communication apparatus to the third communication apparatus are not correlated.

Optionally, the first phase correlation condition may include at least one of the following:

1. radio frequency shutdown does not occur on the first communication apparatus, or hardware restart does not occur on the first communication apparatus;

2. receive antenna switching does not occur on the first communication apparatus;

3. receive beam switching does not occur on the first communication apparatus; and

4. no measurement failure occurs on the first communication apparatus.

For these causes, refer to related description of the embodiment shown in FIG. 6.

The following describes some possible implementations of the first information.

1. The first information is first indication information, and the first indication information indicates whether the first phase information meets the first phase correlation condition.

For example, when a value of the first indication information is "1", it indicates that the first phase information meets the first phase correlation condition. When a value of the first indication information is "0", it indicates that the first phase information does not meet the first phase correlation condition.

For example, when a value of the first indication information is "true (true)", it indicates that the first phase information meets the first phase correlation condition. When a value of the first indication information is "false (false)", it indicates that the first phase information does not meet the first phase correlation condition.

For example, when a value of the first indication information is "yes", it indicates that the first phase information meets the first phase correlation condition. When a value of the first indication information is "no", it indicates that the first phase information does not meet the first phase correlation condition.

2. The first information is information about a first label correlated with the first phase information.

If the first label correlated with the first phase information is the same as a label that is correlated with the phase information that is about the at least one second communication apparatus and that is reported by the first communication apparatus, it indicates that the first phase information meets the first phase correlation condition. If the first label correlated with the first phase information is different from a label that is correlated with the phase information that is about the at least one second communication apparatus and that is reported by the first communication apparatus, it indicates that the first phase information does not meet the first phase correlation condition.

For a specific form of the first label, refer to related description in the embodiment shown in FIG. 6.

3. The first information includes information about an angle of arrival at which the at least one first positioning reference signal arrives at the first communication apparatus, or beam information of a receive beam used by the first communication apparatus to receive the at least one first positioning reference signal.

For the information about the angle of arrival at which the at least one first positioning reference signal arrives at the first communication apparatus, refer to the foregoing information about the angle of arrival at which the at least one second positioning reference signal arrives at the first communication apparatus. For details, refer to the foregoing related descriptions. For the beam information of the receive beam used by the first communication apparatus to receive the at least one first positioning reference signal, refer to the beam information of the receive beam used by the first communication apparatus to receive the at least one second positioning reference signal. For details, refer to the foregoing related descriptions.

4. The first information includes third cause information, and the third cause information indicates whether the first phase information meets the first phase correlation condition.

For example, the third cause information includes information about whether radio frequency shutdown occurs on the first communication apparatus, or information about whether hardware restart occurs on the first communication apparatus. If yes, it indicates that the first phase information does not meet the first phase correlation condition; or if no, it indicates that the first phase information meets the first phase correlation condition.

For example, the third cause information includes information about whether receive antenna switching occurs on the first communication apparatus. If yes, it indicates that the first phase information does not meet the first phase correlation condition; or if no, it indicates that the first phase information meets the first phase correlation condition.

For example, the third cause information includes information about whether receive beam switching occurs on the first communication apparatus. If yes, it indicates that the first phase information does not meet the first phase correlation condition; or if no, it indicates that the first phase information meets the first phase correlation condition.

For example, the third cause information includes information about whether a measurement failure occurs on the first communication apparatus. If yes, it indicates that the first phase information does not meet the first phase correlation condition; or if no, it indicates that the first phase information meets the first phase correlation condition.

The third cause information is similar to the third cause information in the embodiment shown in FIG. 6. For details, refer to the foregoing related descriptions.

Optionally, the embodiment shown in FIG. 12 further includes step 1204a. Step 1204a may be performed after step 1203.

1204a: The first communication apparatus sends first cause information to the third communication apparatus. Correspondingly, the third communication apparatus receives the first cause information from the first communication apparatus.

The first cause information indicates a cause why the first phase information does not meet the first phase correlation condition.

Step 1204a is similar to step 607a in the embodiment shown in FIG. 6. For details, refer to related description of step 607a in the embodiment shown in FIG. 6 above.

1205: The third communication apparatus positions the first communication apparatus or the at least one second communication apparatus based on the first phase information and the first information.

For example, if the first communication apparatus is a positioning object, the third communication apparatus determines, based on the first information, that the first phase information does not meet the first phase correlation condition. In this case, the third communication apparatus may position the first communication apparatus based on the first phase information only.

For example, if the first communication apparatus is a positioning object, the third communication apparatus determines, based on the first information, that the first phase information does not meet the first phase correlation condition. In this case, the third communication apparatus may position the first communication apparatus based on both the first phase information and the phase information that is about the at least one second communication apparatus and that is previously reported by the first communication apparatus.

Optionally, based on the foregoing step 1204a, step 1205 specifically includes: The third communication apparatus positions the first communication apparatus or the at least one second communication apparatus based on the first phase information, the first information, and the first cause information.

For example, the third communication apparatus determines, based on the first information, that the first phase information and the phase information that is about the at least one second communication apparatus and that is previously reported by the first communication apparatus do not meet the first phase correlation condition. The third communication apparatus determines, based on the first cause information, a cause why the first phase information does not meet the first phase correlation condition. For example, the receive beam used by the first communication apparatus to receive the at least one first positioning reference signal is inconsistent with the receive beam previously used by the first communication apparatus to receive the positioning reference signal from the at least one second communication apparatus. The first information includes beam index or direction information of the receive beam of the at least one first positioning reference signal. In this case, the third communication apparatus performs phase deviation compensation on the first phase information based on the beam index or direction information of the receive beam of the at least one first positioning reference signal. Then, the third communication apparatus may position the first communication apparatus based on the first phase information.

Optionally, the embodiment shown in FIG. 12 further includes step 1203a. Step 1203a may be performed after step 1201.

1203a: The at least one second communication apparatus sends second information to the third communication apparatus. Correspondingly, the third communication apparatus receives the second information from the at least one second communication apparatus.

The second information indicates whether a transmit phase of the at least one first positioning reference signal meets a second phase correlation condition.

For example, the second phase correlation condition is a condition of phase correlation between the transmit phase of the at least one first positioning reference signal and a transmit phase of a positioning reference signal sent by the at least one second communication apparatus to the first communication apparatus. Phase correlation between the transmit phase of the at least one first positioning reference signal and the transmit phase of the positioning reference signal sent by the at least one second communication apparatus to the first communication apparatus is similar to correlation between the transmit phase of the at least one first positioning reference signal and the transmit phase of the at least one second positioning reference signal. For details, refer to the foregoing related descriptions.

If the second information indicates that the transmit phase of the at least one first positioning reference signal meets the second phase correlation condition, it may be understood that the transmit phase of the at least one first positioning reference signal and the transmit phase of the positioning reference signal sent by the at least one second communication apparatus to the first communication apparatus are correlated. If the second information indicates that the transmit phase of the at least one first positioning reference signal does not meet the second phase correlation condition, it may be understood that the transmit phase of the at least one first positioning reference signal and the transmit phase of the positioning reference signal sent by the at least one second communication apparatus to the first communication apparatus are not correlated.

Optionally, the second phase correlation condition may include at least one of the following:

1. radio frequency shutdown does not occur on the at least one second communication apparatus;

2. hardware restart does not occur on the at least one second communication apparatus;

3. transmit antenna switching does not occur on the at least one second communication apparatus; and

4. no sending failure occurs on the at least one second communication apparatus.

For these causes, refer to related description of the embodiment shown in FIG. 6.

The following describes some possible implementations of the second information.

1. The second information is second indication information, and the second indication information indicates whether the transmit phase of the at least one first positioning reference signal meets the second phase correlation condition.

For example, when a value of the second indication information is "1", it indicates that the transmit phase of the at least one first positioning reference signal meets the second phase correlation condition. When a value of the second indication information is "0", it indicates that the transmit phase of the at least one first positioning reference signal does not meet the second phase correlation condition.

For example, when a value of the first indication information is "true (true)", it indicates that the transmit phase of the at least one first positioning reference signal meets the second phase correlation condition. When a value of the first indication information is "false (false)", it indicates that the transmit phase of the at least one first positioning reference signal does not meet the second phase correlation condition.

For example, when a value of the second indication information is "yes", it indicates that the transmit phase of the at least one first positioning reference signal meets the second phase correlation condition. When a value of the second indication information is "no", it indicates that the transmit phase of the at least one first positioning reference signal does not meet the second phase correlation condition.

2. The second information is fourth cause information, and the fourth cause information indicates whether the transmit phase of the at least one first positioning reference signal meets the second phase correlation condition.

For example, the fourth cause information includes information about whether radio frequency shutdown occurs on the at least one second communication apparatus. If yes, it indicates that the transmit phase of the at least one first positioning reference signal does not meet the second phase correlation condition; or if no, it indicates that the transmit phase of the at least one first positioning reference signal meets the second phase correlation condition.

For example, the fourth cause information includes information about whether hardware restart occurs on the at least one second communication apparatus. If yes, it indicates that the transmit phase of the at least one first positioning reference signal does not meet the second phase correlation condition; or if no, it indicates that the transmit phase of the at least one first positioning reference signal meets the second phase correlation condition.

For example, the fourth cause information includes information about whether transmit antenna switching occurs on the at least one second communication apparatus. If yes, it indicates that the transmit phase of the at least one first positioning reference signal does not meet the second phase correlation condition; or if no, it indicates that the transmit phase of the at least one first positioning reference signal meets the second phase correlation condition.

For example, the fourth cause information includes information about whether a measurement failure occurs on the at least one second communication apparatus. If yes, it indicates that the transmit phase of the at least one first positioning reference signal does not meet the second phase correlation condition; or if no, it indicates that the transmit phase of the at least one first positioning reference signal meets the second phase correlation condition.

The fourth cause information is similar to the fourth cause information in the embodiment shown in FIG. 6. For details, refer to the foregoing related descriptions.

Based on step 1203a, optionally, step 1205 specifically includes: The third communication apparatus positions the first communication apparatus or the at least one second communication apparatus based on the first phase information, the first information, and the second information.

For example, if the first communication apparatus is a positioning object, the third communication apparatus determines, based on the first information and the second information, that the first phase information and the phase information that is about the at least one second communication apparatus and that is previously reported by the first communication apparatus are not correlated. The third communication apparatus may position the first communication apparatus based on the first phase information only.

For example, if the first communication apparatus is a positioning object, the third communication apparatus determines, based on the first information and the second information, that the first phase information and the phase information that is about the at least one second communication apparatus and that is previously reported by the first communication apparatus are correlated. The third communication apparatus may position the first communication apparatus based on both the first phase information and the phase information that is about the at least one second communication apparatus and that is previously reported by the first communication apparatus.

Optionally, the embodiment shown in FIG. 12 further includes step 1203b. Step 1203b may be performed after step 1201.

1203b: The at least one second communication apparatus sends second cause information to the third communication apparatus. Correspondingly, the third communication apparatus receives the second cause information from the at least one second communication apparatus.

The second cause information indicates a cause why the transmit phase of the at least one first positioning reference signal does not meet the second phase correlation condition.

The second cause information is similar to the second cause information in the embodiment shown in FIG. 6. For details, refer to related description of the second cause information in the embodiment shown in FIG. 6.

It should be noted that the at least one second communication apparatus may send both the second information and the second cause information, or may separately send the second information and the second cause information. This is not specifically limited in this application. When the at least one second communication apparatus separately sends the second information and the second cause information, the at least one second communication apparatus may first send the second information, and then send the second cause information; or the at least one second communication apparatus may first send the second cause information, and then send the second information. This is not specifically limited in this application.

Based on the step 1203a and step 1203b, optionally, step 1205 specifically includes: The third communication apparatus positions the first communication apparatus based on the first phase information, the first information, the second information, and the second cause information. Alternatively, the third communication apparatus positions the at least one second communication apparatus based on the first phase information, the first information, the second information, and the second cause information.

For example, if the first communication apparatus is a positioning object, the third communication apparatus determines, based on the first information, the second information, and the second cause information, that the first phase information and the phase information that is about the at least one second communication apparatus and that is previously reported by the first communication apparatus are not correlated and a corresponding cause. For example, the first information includes information about an angle of arrival at which the at least one first positioning reference signal arrives at the first communication apparatus, and the third communication apparatus may perform phase deviation compensation on the first phase information based on the information about the angle of arrival. Then, the third communication apparatus may position the first communication apparatus based on the first phase information.

In this embodiment of this application, the first communication apparatus sends the first information to the third communication apparatus, where the first information indicates whether the first phase information meets the first phase correlation condition, so that the third communication apparatus determines phase correlation between the first phase information and the phase information that is about the at least one second communication apparatus and that is previously reported by the first communication apparatus, thereby helping improve positioning accuracy. This effectively avoids a problem that positioning accuracy is reduced because phase information is used for joint positioning in a scenario in which the first phase information and the phase information that is previously reported by the first communication apparatus are not correlated. For example, generally, in the phase-based positioning technical solution, a phase needs to be tracked, and the tracked phase needs to be continuous, that is, pieces of phase information are correlated. For example, if the first phase information and the phase information that is previously reported by the first communication apparatus are correlated, the third communication apparatus may position the first communication apparatus or the at least one second communication apparatus based on both the first phase information and the phase information that is previously reported by the first communication apparatus. For example, if the first phase information and the phase information that is previously reported by the first communication apparatus are not correlated, the third communication apparatus may position the first communication apparatus or the at least one second communication apparatus based on the first phase information only or the phase information that is previously reported by the first communication apparatus only. Therefore, a problem that positioning accuracy for positioning, by the third communication apparatus, the first communication apparatus or the at least one second communication apparatus is limited because correlation between the first phase information and the phase information that is previously reported by the first communication apparatus is difficult to be ensured due to a phase jump or a phase loss in a process in which the first communication apparatus tracks the phase is avoided.

This application further provides another embodiment. This embodiment is similar to the embodiment shown in FIG. 12. A difference lies in that step 1203a is replaced with a mandatory step, and step 1205 is replaced with: The third communication apparatus positions the first communication apparatus or the at least one second communication apparatus based on the first phase information and the second information. Step 1204 is replaced with an optional step.

Based on the foregoing step 1204, optionally, step 1205 specifically includes: The third communication apparatus positions the first communication apparatus or the at least one second communication apparatus based on the first phase information, the second information, and the first information.

A communication apparatus provided in embodiments of this application is described below. FIG. 13 is a diagram of a structure of a communication apparatus according to an embodiment of this application.

A communication apparatus 1300 includes a transceiver module 1301 and a processing module 1302.

The transceiver module 1301 may implement a corresponding communication function, and the transceiver module 1301 may also be referred to as a communication interface or a communication unit. The processing module 1302 is configured to perform a processing operation.

Optionally, the communication apparatus 1300 may further include a storage module. The storage module may be configured to store instructions and/or data. The processing module 1302 may read the instructions and/or the data in the storage module, so that the communication apparatus implements the method embodiments shown in FIG. 6, FIG. 11, and FIG. 12.

In a possible implementation, the communication apparatus may be configured to perform the steps performed by the first communication apparatus in embodiments shown in FIG. 6, FIG. 11, and FIG. 12. For details, refer to related descriptions in the foregoing method embodiments.

The communication apparatus 1300 may be configured to perform the action performed by the first communication apparatus in the foregoing method embodiments. The communication apparatus 1300 may be the first communication apparatus or a part that may be disposed in the first communication apparatus. The transceiver module 1301 is configured to perform a receiving-related operation on the first communication apparatus side in the foregoing method embodiments, and the processing module 1302 is configured to perform a processing-related operation on the first communication apparatus side in the foregoing method embodiments.

Optionally, the transceiver module 1301 may include a sending module and a receiving module. The sending module is configured to perform the sending operation of the first communication apparatus in the foregoing method embodiments shown in FIG. 6, FIG. 11, and FIG. 12. The receiving module is configured to perform the receiving operation of the first communication apparatus in the foregoing method embodiments shown in FIG. 6, FIG. 11, and FIG. 12.

In another possible implementation, the communication apparatus may be configured to perform the steps performed by the third communication apparatus in embodiments shown in FIG. 6, FIG. 11, and FIG. 12. For details, refer to related descriptions in the foregoing method embodiments.

The communication apparatus 1300 may be configured to perform the action performed by the third communication apparatus in the foregoing method embodiments. The communication apparatus 1300 may be the third communication apparatus or a part that may be disposed in the third communication apparatus. The transceiver module 1301 is configured to perform a receiving-related operation on the third communication apparatus side in the foregoing method embodiments, and the processing module 1302 is configured to perform a processing-related operation on the third communication apparatus side in the foregoing method embodiments.

Optionally, the transceiver module 1301 may include a sending module and a receiving module. The sending module is configured to perform the sending operation of the third communication apparatus in the foregoing method embodiments shown in FIG. 6, FIG. 11, and FIG. 12. The receiving module is configured to perform the receiving operation of the third communication apparatus in the foregoing method embodiments shown in FIG. 6, FIG. 11, and FIG. 12.

It should be noted that the communication apparatus 1300 may include a sending module, but does not include a receiving module. Alternatively, the communication apparatus 1300 may include a receiving module, but does not include a sending module. This may be specifically determined depending on whether the foregoing solution performed by the communication apparatus 1300 includes a sending action and a receiving action.

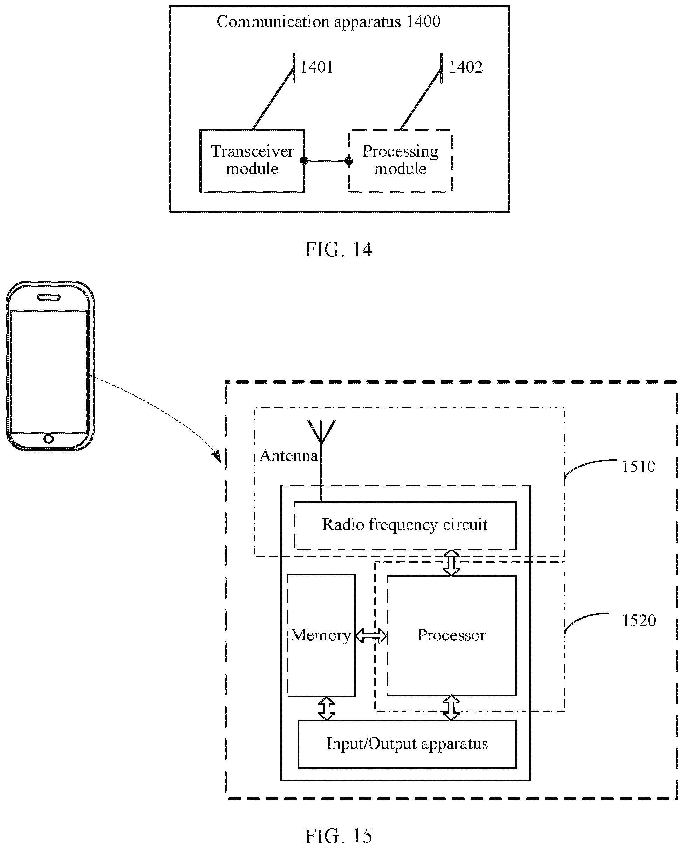

A communication apparatus provided in embodiments of this application is described below. FIG. 14 is a diagram of a structure of a communication apparatus according to an embodiment of this application.

The communication apparatus 1400 includes a transceiver module 1401. Optionally, the communication apparatus 1400 further includes a processing module 1402.

The transceiver module 1401 may implement a corresponding communication function, and the transceiver module 1401 may also be referred to as a communication interface or a communication unit. The processing module 1402 is configured to perform a processing operation.

Optionally, the communication apparatus 1400 may further include a storage module. The storage module may be configured to store instructions and/or data. The processing module 1402 may read the instructions and/or the data in the storage module, so that the communication apparatus implements the method embodiments shown in FIG. 6, FIG. 11, and FIG. 12.

The communication apparatus may be configured to perform the steps performed by the second communication apparatus in embodiments shown in FIG. 6, FIG. 11, and FIG. 12. For details, refer to related descriptions in the foregoing method embodiments.

The communication apparatus 1400 may be configured to perform the action performed by the second communication apparatus in the foregoing method embodiments. The communication apparatus 1400 may be the second communication apparatus or a part that may be disposed in the second communication apparatus. The transceiver module 1401 is configured to perform a receiving-related operation on the second communication apparatus side in the foregoing method embodiments, and the processing module 1402 is configured to perform a processing-related operation on the second communication apparatus side in the foregoing method embodiments.

Optionally, the transceiver module 1401 may include a sending module and a receiving module. The sending module is configured to perform the sending operation of the second communication apparatus in the foregoing method embodiments shown in FIG. 6, FIG. 11, and FIG. 12. The receiving module is configured to perform the receiving operation of the second communication apparatus in the foregoing method embodiments shown in FIG. 6, FIG. 11, and FIG. 12.

It should be noted that the communication apparatus 1400 may include a sending module, but does not include a receiving module. Alternatively, the communication apparatus 1400 may include a receiving module, but does not include a sending module. This may be specifically determined depending on whether the foregoing solution performed by the communication apparatus 1400 includes a sending action and a receiving action.

The following shows a diagram of a possible structure of a terminal device with reference to FIG. 15.

FIG. 15 is a simplified diagram of a structure of a terminal device. For ease of understanding and illustration, an example in which the terminal device is a mobile phone is used in FIG. 15. As shown in FIG. 15, the terminal device includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in a form of an electromagnetic wave.

The input/output apparatus, such as a touchscreen, a display, or a keyboard, is mainly configured to: receive data input by a user and output data to the user.

It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave via the antenna. When data is sent to the terminal device, the radio frequency circuit receives the radio frequency signal via the antenna, converts the radio frequency signal into a baseband signal, and outputs the baseband signal to the processor. The processor converts the baseband signal into data, and processes the data.

For ease of description, FIG. 15 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have receiving and sending functions may be considered as a transceiver unit of the terminal device, and the processor that has a processing function may be considered as a processing unit of the terminal device. As shown in FIG. 15, the terminal device includes a transceiver unit 1510 and a processing unit 1520. The transceiver unit may also be referred to as a transceiver, a transceiver machine, a transceiver apparatus, or the like. The processing unit may also be referred to as a processor, a processing board, a processing module, a processing apparatus, or the like.

Optionally, a component configured to implement a receiving function in the transceiver unit 1510 may be considered as a receiving unit, and a component configured to implement a sending function in the transceiver unit 1510 may be considered as a sending unit. In other words, the transceiver unit 1510 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1510 is configured to perform a sending operation and a receiving operation of the first communication apparatus or the at least one second communication apparatus in the foregoing method embodiments, and the processing unit 1520 is configured to perform an operation other than the receiving and sending operations of the first communication apparatus or the at least one second communication apparatus in the foregoing method embodiments.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip.

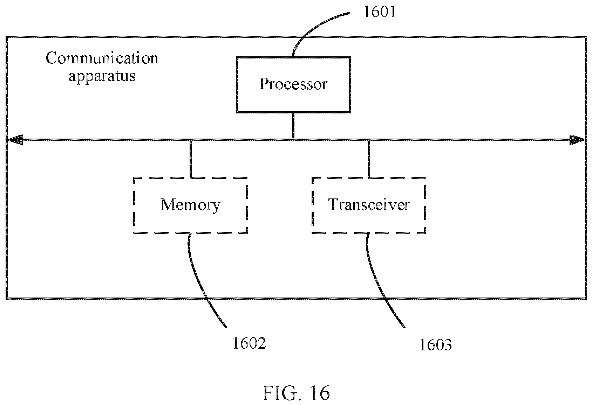

This application further provides a communication apparatus. FIG. 16 is another diagram of a structure of a communication apparatus according to an embodiment of this application. The communication apparatus may be configured to perform the steps performed by at least one of the first communication apparatus, the second communication apparatus, or the third communication apparatus in embodiments shown in FIG. 6, FIG. 11, and FIG. 12. For details, refer to related descriptions in the foregoing method embodiments.

The communication apparatus includes a processor 1601. Optionally, the communication apparatus further includes a memory 1602 and a transceiver 1603.

In a possible implementation, the processor 1601, the memory 1602, and the transceiver 1603 are separately connected through a bus, and the memory stores computer instructions.

Optionally, the processing module 1402 in the foregoing embodiment may be specifically the processor 1601 in this embodiment. Therefore, a specific implementation of the processor 1601 is not described again. The transceiver module 1401 in the foregoing embodiment may be specifically the transceiver 1603 in this embodiment. Therefore, a specific implementation of the transceiver 1603 is not described again.

Optionally, the processing module 1302 in the foregoing embodiment may be specifically the processor 1601 in this embodiment. Therefore, a specific implementation of the processor 1601 is not described again. The transceiver module 1301 in the foregoing embodiment may be specifically the transceiver 1603 in this embodiment. Therefore, a specific implementation of the transceiver 1603 is not described again.

An embodiment of this application further provides a communication system. The communication system includes a first communication apparatus and a third communication apparatus.

The first communication apparatus is configured to perform all or some of the steps performed by the first communication apparatus in embodiments shown in FIG. 6 and FIG. 12. The third communication apparatus is configured to perform all or some of the steps performed by the third communication apparatus in embodiments shown in FIG. 6 and FIG. 12. Optionally, the communication apparatus further includes at least one second communication apparatus. The at least one second communication apparatus is configured to perform all or some of the steps performed by the at least one second communication apparatus in embodiments shown in FIG. 6 and FIG. 12.

An embodiment of this application further provides a communication system. The communication system includes at least one second communication apparatus and a third communication apparatus. The at least one second communication apparatus is configured to perform all or some of the steps performed by the at least one second communication apparatus in the embodiment shown in FIG. 11. The third communication apparatus is configured to perform all or some of the steps performed by the third communication apparatus in the embodiment shown in FIG. 11. Optionally, the communication system further includes a first communication apparatus, and the first communication apparatus is configured to perform all or some of the steps performed by the first communication apparatus in the embodiment shown in FIG. 11.

An embodiment of this application further provides a computer program product including instructions. When the computer program product runs on a computer, the computer performs the communication methods in embodiments shown in FIG. 6, FIG. 11, and FIG. 12.

An embodiment of this application further provides a computer-readable storage medium, including computer instructions. When the computer instructions are run on a computer, the computer performs the methods in embodiments shown in FIG. 6, FIG. 11, and FIG. 12.

An embodiment of this application further provides a chip apparatus, including a processor, configured to: be connected to a memory, and invoke a program stored in the memory, for the processor to perform the methods in embodiments shown in FIG. 6, FIG. 11, and FIG. 12.

The processor mentioned anywhere above may be a general-purpose central processing unit, a microprocessor, an application-specific integrated circuit (application-specific integrated circuit, ASIC), or one or more integrated circuits configured to control program execution of the methods in embodiments shown in FIG. 6, FIG. 11, and FIG. 12. The memory mentioned in any one of the foregoing may be a read-only memory (read-only memory, ROM), another type of static storage device that can store static information and instructions, a random access memory (random access memory, RAM), or the like.

It may be clearly understood by persons skilled in the art that, for the purpose of convenient and brief description, for a detailed operating process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the contributing part, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A communication method, wherein the method comprises:

   measuring, by a first communication apparatus, at least one first positioning reference signal from at least one second communication apparatus, to obtain at least one first phase;
   sending, by the first communication apparatus, first phase information to a third communication apparatus, wherein the first phase information comprises the at least one first phase, or the first phase information is determined based on the at least one first phase;
   measuring, by the first communication apparatus, at least one second positioning reference signal from the at least one second communication apparatus, to obtain at least one second phase;
   sending, by the first communication apparatus, second phase information to the third communication apparatus, wherein the second phase information comprises the at least one second phase, or the second phase information is determined based on the at least one second phase; and
   sending, by the first communication apparatus, first information to the third communication apparatus, wherein the first information is information about phase correlation between the first phase information and the second phase information.

2. A communication method, wherein the method comprises:

   receiving, by a third communication apparatus, first phase information from a first communication apparatus, wherein the first phase information comprises at least one first phase, or the first phase information is determined based on the at least one first phase, and the at least one first phase is obtained by the first communication apparatus by measuring at least one first positioning reference signal sent by at least one second communication apparatus;
   receiving, by the third communication apparatus, second phase information from the first communication apparatus, wherein the second phase information comprises at least one second phase, or the second phase information is determined based on the at least one second phase, and the at least one second phase is obtained by the first communication apparatus by measuring at least one second positioning reference signal sent by the at least one second communication apparatus;
   receiving, by the third communication apparatus, first information from the first communication apparatus, wherein the first information is information about phase correlation between the first phase information and the second phase information; and
   positioning, by the third communication apparatus, the first communication apparatus or the at least one second communication apparatus based on the first phase information, the second phase information, and the first information.

3. The method according to claim 1 or 2, wherein the first phase information is sent by the first communication apparatus to the third communication apparatus at a first moment, the second phase information is sent by the first communication apparatus to the third communication apparatus at a second moment, and the first moment is one or more moments before the second moment.

**4.** The method according to any one of claims 1 to 3, wherein the first information is first indication information, and the first indication information indicates whether the first phase information and the second phase information are correlated.

**5.** The method according to any one of claims 1 to 3, wherein the first information is information about a second label correlated with the second phase information; and

if the second label correlated with the second phase information is the same as a first label correlated with the first phase information, it indicates that the first phase information and the second phase information are correlated; or

if the second label correlated with the second phase information is different from a first label correlated with the second phase information, it indicates that the first phase information and the second phase information are not correlated.

**6.** The method according to claim 5, wherein the first label is a first time label correlated with the first phase information, and the second label is a second time label correlated with the second phase information.

**7.** The method according to claim 5, wherein the first label is a first angle label correlated with the first phase information, the second label is a second angle label correlated with the second phase information, the first angle label identifies an angle of arrival at which the at least one first positioning reference signal arrives at the first communication apparatus, and the second angle label identifies an angle of arrival at which the at least one second positioning reference signal arrives at the first communication apparatus; or

the first label is a first beam label correlated with the first phase information, the second label is a second beam label correlated with the second phase information, the first beam label identifies a receive beam used by the first communication apparatus to receive the at least one first positioning reference signal, and the second beam label identifies a receive beam used by the first communication apparatus to receive the at least one second positioning reference signal.

**8.** The method according to any one of claims 1 to 3, wherein the first information comprises information about an angle of arrival at which the at least one second positioning reference signal arrives at the first communication apparatus, or beam information of a receive beam used by the first communication apparatus to receive the at least one second positioning reference signal.

**9.** The method according to any one of claims 1 to 8, wherein the method further comprises:
sending, by the first communication apparatus, first cause information to the third communication apparatus, wherein the first cause information indicates a cause why the first phase information and the second phase information are not correlated.

**10.** The method according to any one of claims 2 to 8, wherein the method further comprises:

receiving, by the third communication apparatus, first cause information from the first communication apparatus, wherein the first cause information indicates a cause why the first phase information and the second phase information are not correlated; and

the positioning, by the third communication apparatus, the first communication apparatus or the at least one second communication apparatus based on the first phase information, the second phase information, and the first information comprises:

positioning, by the third communication apparatus, the first communication apparatus or the at least one second communication apparatus based on the first phase information, the second phase information, the first information, and the first cause information.

**11.** The method according to claim 9 or 10, wherein the first cause information comprises at least one of the following: first radio frequency link information, first antenna switching information, first beam switching information, or measurement failure information, wherein

the first radio frequency link information comprises information indicating that a radio frequency initial phase of a radio frequency link used by the first communication apparatus to receive the at least one first positioning reference signal is inconsistent with a radio frequency initial phase of a radio frequency link used by the first communication apparatus to receive the at least one second positioning reference signal; or

the first antenna switching information comprises information indicating that a receive antenna used by the first communication apparatus to receive the at least one first positioning reference signal is inconsistent with a receive antenna used by the first communication apparatus to receive the at least one second positioning reference signal; or

the first beam switching information comprises information indicating that the receive beam used by the first communication apparatus to receive the at least one first positioning reference signal is inconsistent with the receive beam used by the first communication apparatus to receive the at least one second positioning reference signal; or

the measurement failure information comprises information about a phase measurement failure that occurs in a process in which the first communication apparatus measures the at least one second positioning reference signal.

12. A communication method, wherein the method comprises:

sending, by a second communication apparatus, at least one first positioning reference signal to a first communication apparatus;

sending, by the second communication apparatus, at least one second positioning reference signal to the first communication apparatus; and

sending, by the second communication apparatus, second information to a third communication apparatus, wherein the second information indicates information about correlation between a transmit phase of the at least one first positioning reference signal and a transmit phase of the at least one second positioning reference signal.

13. A communication method, wherein the method comprises:

receiving, by a third communication apparatus, first phase information from a first communication apparatus, wherein the first phase information comprises at least one first phase, or the first phase information is determined based on the at least one first phase, and the at least one first phase is obtained by the first communication apparatus by measuring at least one first positioning reference signal sent by at least one second communication apparatus;

receiving, by the third communication apparatus, second phase information from the first communication apparatus, wherein the second phase information comprises at least one second phase, or the second phase information is determined based on the at least one second phase, and the at least one second phase is obtained by the first communication apparatus by measuring at least one second positioning reference signal sent by the at least one second communication apparatus;

receiving, by the third communication apparatus, second information sent by each of the at least one second communication apparatus, wherein the second information indicates information about correlation between a transmit phase of the at least one first positioning reference signal and a transmit phase of the at least one second positioning reference signal; and

positioning, by the third communication apparatus, the first communication apparatus or the at least one second communication apparatus based on the first phase information, the second phase information, and the second information.

14. The method according to claim 12 or 13, wherein the second information is second indication information, and the second indication information indicates whether the transmit phase of the at least one first positioning reference signal and the transmit phase of the at least one second positioning reference signal are correlated.

15. The method according to claim 12 or 14, wherein the method further comprises:
sending, by the second communication apparatus, second cause information to the third communication apparatus, wherein the second cause information indicates a cause why the transmit phase of the at least one first positioning reference signal and the transmit phase of the at least one second positioning reference signal are not correlated.

16. The method according to claim 13 or 14, wherein the method further comprises:

receiving, by the third communication apparatus, second cause information sent by each of the at least one second communication apparatus, wherein the second cause information indicates a cause why the transmit phase of the at least one first positioning reference signal and the transmit phase of the at least one second positioning reference signal are not correlated; and

the positioning, by the third communication apparatus, the first communication apparatus or the at least one second communication apparatus based on the first phase information, the second phase information, and the second information comprises:

positioning, by the third communication apparatus, the first communication apparatus or the at least one second communication apparatus based on the first phase information, the second phase information, the second information, and the second cause information.

17. The method according to claim 15 or 16, wherein the second cause information comprises at least one of the following: second antenna switching information, second radio frequency link information, or sending failure information, wherein

the second antenna switching information comprises information indicating that a transmit antenna used by the second communication apparatus to send the at least one first positioning reference signal is inconsistent with a transmit antenna used by the second communication apparatus to send the at least one second positioning reference signal; or

the second radio frequency link information comprises information indicating that a radio frequency initial phase of a radio frequency link used by the second communication apparatus to send the at least one first positioning reference signal is inconsistent with a radio frequency initial phase of a radio frequency link used by the second communication apparatus to send the at least one second positioning reference signal; or

the sending failure information comprises information indicating that the second communication apparatus fails to send the at least one second positioning reference signal.

18. A communication apparatus, wherein the communication apparatus comprises a transceiver module and a processing module; and

the transceiver module is configured to perform the receiving and sending operations according to any one of claims 1, 3 to 9, and 11, and the processing module is configured to perform the processing operation according to any one of claims 1, 3 to 9, and 11; or

the transceiver module is configured to perform the receiving and sending operations according to any one of claims 2 to 8, 10, and 11, and the processing module is configured to perform the processing operation according to any one of claims 2 to 8, 10, and 11; or

the transceiver module is configured to perform the receiving and sending operations according to any one of claims 13, 14, 16, and 17, and the processing module is configured to perform the processing operation according to any one of claims 13, 14, 16, and 17.

19. A communication apparatus, wherein the communication apparatus comprises a transceiver module, and the transceiver module is configured to perform the receiving and sending operations according to any one of claims 12, 14, 15, and 17.

20. A communication apparatus, wherein the communication apparatus comprises a processor, and the processor is configured to execute a computer program or computer instructions in a memory, to perform the method according to any one of claims 1, 3 to 9, and 11; or perform the method according to any one of claims 2 to 8, 10, and 11; or perform the method according to any one of claims 12, 14, 15, and 17; or perform the method according to any one of claims 13, 14, 16, and 17.

21. The communication apparatus according to claim 20, wherein the communication apparatus further comprises the memory.

22. A computer-readable storage medium, wherein the computer-readable storage medium stores a computer program, and when the computer program is executed by a communication apparatus, the communication apparatus performs the method according to any one of claims 1, 3 to 9, and 11; or the communication apparatus performs the method according to any one of claims 2 to 8, 10, and 11; or the communication apparatus performs the method according to any one of claims 12, 14, 15, and 17; or the communication apparatus performs the method according to any one of claims 13, 14, 16, and 17.

FIG. 1

FIG. 2

EP 4 525 533 A1

FIG. 3

FIG. 4

57

$s_g(t)$

$X_1(K)$

Inverse Fourier
transform IFFT
processing

Radio frequency
link and/or
transmit antenna

$x_g(t)$

Frequency
domain
bandwidth

$x_1(t)$

Channel

$y_g(t)$

FIG. 5A

Send a carrier
signal

Arrive at a
receive end

Propagation
delay

Receive an
oscillator
phase

Synchronization
error

Baseband
first-patch
phase

FIG. 5B

First
communication
apparatus

At least one second
communication
apparatus

Third
communication
apparatus

601: At least one first
positioning reference signal

602: Measure the at least one first
positioning reference signal to
obtain at least one first phase

603: First phase information

604: At least one second
positioning reference signal

604a: Second information

604b: Second cause
information

605: Measure the at least one
second positioning reference signal
to obtain at least one second phase

606: Second phase
information

607: First information

607a: First cause
information

608: Position the first communication
apparatus or the at least one second
communication apparatus based on the
first phase information, the second
phase information, and the first
information

FIG. 6

FIG. 7A

FIG. 7B

First positioning
reference signal

Second positioning
reference signal

◄ Sending period ►

Time

Same reference signal resource or same
reference signal resource set

FIG. 8A

First positioning
reference signal

Second
positioning
reference signal

Time

First reference signal resource or
first reference signal resource set

Second reference signal resource or
second reference signal resource set

FIG. 8B

Phase 0

Phase 1

Phase 2

Phase 3

Phase
tracking

Phase
jump or
loss

Phase
tracking

Reporting
moment 1

Reporting
moment 2

Reporting
moment 3

Time

FIG. 9A

FIG. 9B

FIG. 9C

Antenna panel

Reference location of the antenna panel

Phase reference point

FIG. 9D

Moment 1  Moment 2

Terminal device

Positioning reference signal

Phase jump at a transmit end

Positioning reference signal

Reporting moment t1

Reporting moment t2

Base station

Positioning reference signal

Phase jump at a receive end

Positioning reference signal

FIG. 10A

FIG. 10B

| First communication apparatus | At least one second communication apparatus | Third communication apparatus |
|---|---|---|

1101: At least one first positioning reference signal

1102: Measure the at least one first positioning reference signal to obtain at least one first phase

1103: First phase information

1104: At least one second positioning reference signal

1105: Second information

1105a: Second cause information

1106: Measure the at least one second positioning reference signal to obtain at least one second phase

1107: Second phase information

1108a: First information

1108b: First cause information

1108: Position the first communication apparatus or the at least one second communication apparatus based on the first phase information, the second phase information, and the second information

FIG. 11

| First communication apparatus | At least one second communication apparatus | Third communication apparatus |

1201: At least one first positioning reference signal

1202: Measure the at least one first positioning reference signal to obtain at least one first phase

1203a: Second information

1203b: Second cause information

1203: First phase information

1204: First information

1204a: First cause information

1205: Position the first communication apparatus or the at least one second communication apparatus based on the first phase information and the first information

FIG. 12

Communication apparatus 1300

1301

1302

Transceiver module

Processing module

FIG. 13

FIG. 14

FIG. 15

1601

Communication apparatus

Processor

Memory

Transceiver

1602

1603

FIG. 16

## INTERNATIONAL SEARCH REPORT

| | International application No. |
|---|---|
| | **PCT/CN2023/098263** |

**A. CLASSIFICATION OF SUBJECT MATTER**

H04W64/00 (2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT: 定位, 位置, 导航, 参考信号, 测量, 相位, 相角, 波束, 载波, 连续, 持续, 关联, 相关, 天线, 射频, 角度, position, location, navigation, reference signal, RS, measure, phase, beam, carrier, continuous, association, antenna, angle

**C. DOCUMENTS CONSIDERED TO BE RELEVANT**

| Category* | Citation of document, with indication, where appropriate, of the relevant passages | Relevant to claim No. |
|---|---|---|
| A | US 2020212990 A1 (FRAUNHOFER GES FORSCHUNG) 02 July 2020 (2020-07-02) description, paragraphs [0013]-[0156] | 1-22 |
| A | CN 111164447 A (UBLOX AG) 15 May 2020 (2020-05-15) entire document | 1-22 |
| A | CN 114466448 A (DATANG MOBILE COMMUNICATIONS EQUIPMENT CO., LTD.) 10 May 2022 (2022-05-10) entire document | 1-22 |
| A | CN 114026927 A (HUAWEI TECHNOLOGIES CO., LTD.) 08 February 2022 (2022-02-08) entire document | 1-22 |
| A | CN 113840227 A (DATANG MOBILE COMMUNICATIONS EQUIPMENT CO., LTD.) 24 December 2021 (2021-12-24) entire document | 1-22 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 August 2023** | **11 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/098263**

| Patent document cited in search report | | | Publication date (day/month/year) | Patent family member(s) | | | Publication date (day/month/year) |
|---|---|---|---|---|---|---|---|
| US | 2020212990 | A1 | 02 July 2020 | US | 11211993 | B2 | 28 December 2021 |
| CN | 111164447 | A | 15 May 2020 | None | | | |
| CN | 114466448 | A | 10 May 2022 | None | | | |
| CN | 114026927 | A | 08 February 2022 | None | | | |
| CN | 113840227 | A | 24 December 2021 | None | | | |

Form PCT/ISA/210 (patent family annex) (July 2022)

**REFERENCES CITED IN THE DESCRIPTION**

**Patent documents cited in the description**

- CN 202210631363X